# EUROPEAN PATENT APPLICATION

(11) **EP 4 485 909 A1**
(43) Date of publication of application: **01.01.2025**
(21) Application number: 23815121.1
(22) Date of filing: 27.05.2023
(51) Int. Cl.: H04M 1/02, H05K 5/02, F16C 11/04

(54) **FOLDING ASSEMBLY AND ELECTRONIC DEVICE**

(30) Priority: 31.05.2022 CN 202210612636
(71) Applicant: Huawei Technologies Co., Ltd., Shenzhen, Guangdong 518129 (CN)
(72) Inventor: LI, Yunyong, Shenzhen, Guangdong 518129 (CN); TANG, Zecheng, Shenzhen, Guangdong 518129 (CN); XU, Zhengyi, Shenzhen, Guangdong 518129 (CN); WU, Hao, Shenzhen, Guangdong 518129 (CN); XIA, Haoyang, Shenzhen, Guangdong 518129 (CN)
(74) Representative: MERH-IP Matias Erny Reichl Hoffmann Patentanwälte PartG mbB
(86) International application number: PCT/CN2023/096701
(87) International publication number: WO 2023/231938

(57) **Abstract**

This application discloses a foldable assembly and an electronic device. The electronic device includes a foldable apparatus and a flexible display, the foldable apparatus is configured to carry the flexible display, the foldable apparatus includes a first housing, a second housing, and a foldable assembly, and through movement of the foldable assembly, the first housing and the second housing are capable of being unfolded relative to each other to an opened state or folded relative to each other to a closed state. The foldable assembly includes a main shaft, a first fastening bracket, a first transmission member, a second fastening bracket, a second transmission member, and a stop block. When the first housing and the second housing are in the opened state, an included angle between the first housing and the second housing does not exceed a preset value because a first stop face of the stop block performs a stop action on a first stop end face of the first transmission member and a second stop face of the stop block performs a stop action on a second stop end face of the second transmission member, to prevent the foldable apparatus from being overbent, prevent the flexible display from being over-stretched, and help improve a service life of the flexible display.

## Description

This application claims priority to Chinese Patent Application No. 202210612636.6, filed with the China National Intellectual Property Administration on May 31, 2022 and entitled "FOLDABLE ASSEMBLY AND ELECTRONIC DEVICE", which is incorporated herein by reference in its entirety.

### TECHNICAL FIELD

This application relates to the technical field of foldable electronic products, and in particular, to a foldable assembly and an electronic device.

### BACKGROUND

In recent years, a flexible display is widely used in various foldable electronic devices because the flexible display has features such as lightness and thinness, and non-fragility. The foldable electronic device further includes a foldable apparatus configured to carry the flexible display. The foldable apparatus usually includes two housings and a foldable assembly connected between the two housings. The two housings are folded relative to each other or unfolded relative to each other through deformation of the foldable assembly, and drive the flexible display to be folded or unfolded.

Currently, the foldable apparatus is easily overbent when the two housings are unfolded relative to each other to an opened state. Consequently, an actual included angle between the two housings is greater than an ideal included angle. A design size and a structure of the flexible display are usually designed based on an ideal included angle. In this case, the foldable apparatus pulls the flexible display when the two housings are unfolded and overbent. Consequently, a service life of the flexible display is seriously affected.

### SUMMARY

This application provides a foldable assembly and an electronic device. The electronic device includes a flexible display and a foldable apparatus that carries the flexible display. The foldable apparatus includes a first housing, a foldable assembly, and a second housing that are sequentially connected. The foldable assembly precisely controls an included angle between two transmission members in an opened state by using a stop block, to control an included angle between the first housing and the second housing, prevent the foldable apparatus from being overbent, and improve a service life of the flexible display.

According to a first aspect, this application provides an electronic device having an opened state and a closed state. The electronic device includes a foldable apparatus and a flexible display. The foldable apparatus includes a first housing, a second housing, and a foldable assembly, the foldable assembly is connected to the first housing and the second housing, and through movement of the foldable assembly, the first housing and the second housing are capable of being unfolded relative to each other to an opened state or folded relative to each other to a closed state.

When the foldable assembly is unfolded relative to each other to an opened state, the foldable apparatus and the electronic device are both in an opened state, the flexible display may be in an unfolded state, and the flexible display can perform full-screen display, so that the electronic device has a large display area, to improve viewing experience and operation experience of a user. When the foldable apparatus is folded relative to each other to a closed state, the foldable apparatus and the electronic device are both in a closed state, and a plane size of the electronic device is small, so that the user can carry and store the electronic device.

The flexible display includes a first non-bendable portion, a bendable portion, and a second non-bendable portion that are sequentially arranged, the first non-bendable portion is fastened to the first housing, the second non-bendable portion is fastened to the second housing, and the bendable portion is deformed in a process in which the first housing and the second housing are unfolded relative to each other or folded relative to each other.

The foldable assembly includes a main shaft, a first fastening bracket, a first transmission member, a second fastening bracket, a second transmission member, and a stop block, the first fastening bracket is fastened to the first housing, and the second fastening bracket is fastened to the second housing. First ends of the first transmission members are rotatably connected to the main shaft, second ends of the first transmission members are connected to the first fastening bracket, and the first ends of the first transmission members have first stop end faces. First ends of the second transmission members are rotatably connected to the main shaft, second ends of the second transmission members are connected to the second fastening bracket, and the first ends of the second transmission members have second stop end faces. In a process in which the first housing and the second housing are unfolded relative to each other, the first stop end faces of the first transmission members are close to the first stop face, and the second stop end faces of the second transmission members are close to the second stop face. When the first housing and the second housing are in the opened state, the first stop end faces of the first transmission members abut against the first stop face, and the second stop end faces the second transmission members abut against the second stop face.

The stop block is configured to limit the first transmission members and the second transmission members. When an included angle between the first transmission member and the second transmission member reaches a preset value (in other words, when the foldable assembly is unfolded relative to each other to the opened state), because the stop block performs a limiting action on the first transmission members and the second transmission members, the included angle between the first transmission member and the second transmission member does not exceed the preset value. Further, an included angle between the first housing and the second housing and an included angle between the first non-bendable portion and the second non-bendable portion that are of the flexible display do not exceed a preset value, to effectively prevent the flexible display from being overbent, and increase a service life of the flexible display. In addition, a stop action performed on two transmission members can be implemented by disposing the first stop face and the second stop face on a same stop block, to effectively reduce a quantity of stop blocks required by the foldable assembly, and reduce space occupied by the stop block inside the foldable assembly.

In some possible implementations, the main shaft has a main support face and a median face, the main support face is configured to support the bendable portion, and the median face is perpendicular to the main support face and is parallel to an extension direction of the main shaft. The first stop face and the second stop face are symmetrical about the median face, and the first transmission members and the second transmission members are symmetrical about the median face. When the foldable apparatus is unfolded relative to each other to the opened state, the second stop face can abut against the second transmission member when the first stop face abuts against the first transmission member. In this case, an acting force exerted by the first transmission member on the stop block can offset a part of an acting force exerted by the second transmission member on the stop block, and stability of the entire foldable assembly is high. In addition, the stop block has a small deformation amount after being pressed, and precision of controlling, by the stop block, the included angle between the first transmission member and the second transmission member is high.

In some possible implementations, the stop block is fastened to the main shaft, and the first stop face is parallel to the median face. When the electronic device is in an opened state, the first swing arm exerts, on the stop block, only an acting force perpendicular to the median face, the second swing arm exerts, on the stop block, only an acting force perpendicular to the median face, and the two acting forces offset each other. Further, a force exerted on a point at which the stop block and the main shaft are connected is reduced, and a deformation amount of the main shaft is reduced, to help ensure flatness of the main shaft, and help optimize light and shadow of the entire electronic device.

In some possible implementations, the main shaft includes a main inner shaft and cover bodies, the stop block is located between the main shaft and the cover bodies, and the main inner shaft, the stop block, and the cover bodies are tightly locked by using a fastener. In this case, the stop block is fastened by both the main inner shaft and the cover body, to help reduce pressure of the stop block on the main inner shaft, reduce a deformation amount of the main inner shaft, and improve flatness of the main inner shaft.

In some possible implementations, the first transmission members are a first swing arm, a second end portion of the first swing arm is slidably connected to the first fastening bracket, the second transmission members are a second swing arm, and a second end portion of the second swing arm is slidably connected to the second fastening bracket. In this case, the stop block may limit the first swing arm and the second swing arm, to control a value of an included angle when the entire foldable assembly is in the opened state, and further control the included angle between the first housing and the second housing when the electronic device is in the opened state.

In some possible implementations, the foldable assembly further includes a clamping member, the clamping member includes a fastening portion, a first clamping portion, and a second clamping portion, the first clamping portion and the second clamping portion are respectively fastened on two sides of the fastening portion, the fastening portion is fastened to the main shaft, the first clamping portion clamps the first swing arm, and is configured to limit movement of the first swing arm in the extension direction of the main shaft, and the second clamping portion clamps the second swing arm, and is configured to limit movement of the second swing arm in the extension direction of the main shaft. The stop block includes a first stop portion and a second stop portion, the first stop portion is fastened to the first clamping portion, the first stop face is formed on an end face that is of the first stop portion and that faces away from the fastening portion, the second stop portion is fastened to the second clamping portion, and the second stop face is formed on an end face that is of the second stop portion and that faces away from the fastening portion.

In this case, the clamping member and the main shaft can be fastened, and the stop block may be indirectly fastened to the main shaft by using the clamping member. In addition, the clamping member clamps the first swing arm and the second swing arm, so that the first swing arm, the second swing arm, and the main shaft can be indirectly fastened relative to each other.

In some possible implementations, the clamping member and the stop block jointly form an integral limiting connecting member. In this case, a process of assembling the clamping member and the stop block may be omitted, and a process of assembling the foldable assembly and the electronic device is simplified. In addition, an integral structure may further increase connection strength between the clamping member and the stop block.

In some possible implementations, an included angle between the first stop face and the median face is greater than 0°. In addition, the foldable assembly further includes an adjustment assembly, and the adjustment assembly is configured to adjust relative locations of the stop block and the main shaft in a thickness direction of the foldable assembly. In this case, in the opened state, relative locations of the adjustment assembly and the main shaft in the thickness direction of the foldable assembly are adjusted, to adjust the relative locations of the stop block and the main shaft in the thickness direction of the foldable assembly. Therefore, an abutment location between the first stop face and the first stop end face changes, an abutment location between the second stop face and the second stop end face changes, and further relative rotation may occur between the first swing arm and the second swing arm. In other words, in the opened state, an included angle between the first swing arm and the second swing arm may be finely adjusted by using the adjustment assembly, to ensure that the included angle between the first housing and the second housing is a preset value, and prevent the flexible display from being overbent or over-pressed.

In some possible implementations, the adjustment assembly includes a limiting member and an elastic member, the limiting member includes a limiting end and a connecting end, the limiting end of the limiting member is located on a side that is of the stop block and that faces away from the main shaft, the connecting end of the limiting member passes through the stop block and is threadedly connected to the main shaft, and the elastic member abuts between the stop block and the main shaft. In this case, the limiting member is rotated, to adjust relative locations of the limiting end and the main shaft in a direction perpendicular to the main support face, and the elastic member is stretched or compressed, so that the stop block continuously abuts against the limiting member. Further, relative locations of the stop block and the main shaft in the direction perpendicular to the main support face are adjusted, to adjust an angle at which the foldable assembly is unfolded relative to each other in the opened state, and ensure that the included angle between the first housing and the second housing is the preset value.

In some possible implementations, the foldable assembly may not be provided with the adjustment assembly, and only the fastener is used to adjust a size of movable space that is of the stop block and that is perpendicular to the main support face. Under an abutment action of the first transmission member and the second transmission member, the stop block is automatically away from the main shaft and finally abuts against the fastener. Therefore, the relative locations of the stop block and the main shaft in the direction perpendicular to the main support face may be adjusted, to adjust the included angle between the first transmission member and the second transmission member in the opened state.

In some possible implementations, a protruding block is disposed on the main shaft, and the protruding block is disposed away from the main support face. The stop block includes a main body portion, a first stop portion, and a second stop portion, the first stop portion is fastened on a side of the main body portion, the first stop face is formed on an end face that is of the first stop portion and that faces away from the main body portion, the second stop portion is fastened on the other side of the main body portion, and the second stop face is formed on an end face that is of the second stop portion and that faces away from the main body portion. The main body portion is provided with a through hole and a limiting slot, the limiting slot is located on a side that is of the through hole and that is close to the main shaft, and communicates with the through hole, the protruding block is built into the limiting slot, and the connecting end of the limiting member is threadedly connected to the protruding block through the through hole and the limiting slot. In this case, the limiting member may pass through the through hole of the main body portion, and is threadedly connected to the protruding block, to implement location of the stop block on the main shaft. In addition, the protruding block cooperates with the limiting slot, to help locate the stop block on the main shaft when the stop block is assembled on the main shaft, prevent the stop block from moving relative to the main shaft when location of the limiting member is invalid, and increase structural stability of the stop block.

In some possible implementations, an included angle between the first stop face and the median face falls within a range of 0° to 45°. In this case, a component force that is of an acting force exerted by the first transmission member on the first stop face and that is perpendicular to the main support face is greater than a component force parallel to the main support face, and a component force that is of an acting force exerted by the second transmission member on the second stop face and that is perpendicular to the main support face is greater than a component force parallel to the main support face. In addition, because the first stop face and the second stop face are symmetrical about the main support face, and the first transmission member and the second transmission member are symmetrical about the main support face, an acting force exerted by the first transmission member on the stop block and an acting force exerted by the second transmission member on the stop block offset each other in a direction parallel to the main support face, and only a small component force is left in the direction perpendicular to the main support face. Therefore, the included angle between the first stop face and the median face is controlled, to effectively reduce a combined force exerted by the first transmission member and the second transmission member on the stop block, further reduce a force exerted on a fastening structure between the stop block and the main shaft, help increase structural security of the fastening structure, and increase security of the foldable assembly.

In a possible implementation, the first stop face and the first stop end face may be curved faces, and/or the second stop face and the second stop end face may be curved faces. In this case, a contact area between the first stop face and the first stop end face and a contact surface between the second stop face and the second stop end face that are in the opened state may be increased, to help reduce a local deformation amount when the stop block is pressed, and help control precision of the included angle between the first swing arm and the second swing arm in the opened state.

In some possible implementations, the first transmission members are a first swing arm, a second end portion of the first swing arm is slidably connected to the first fastening bracket, the second transmission members are a second swing arm, and a second end portion of the second swing arm is slidably connected to the second fastening bracket. In this case, the stop block may limit the first swing arm and the second swing arm, to control a value of an included angle when the entire foldable assembly is in the opened state, and further control the included angle between the first housing and the second housing when the electronic device is in the opened state.

In some possible implementations, the foldable assembly further includes a clamping member, the clamping member includes a fastening portion, a first clamping portion, and a second clamping portion, the first clamping portion and the second clamping portion are respectively fastened on two sides of the fastening portion, the fastening portion is fastened to the main shaft, the first clamping portion clamps the first swing arm, and is configured to limit movement of the first swing arm in the extension direction of the main shaft, and the second clamping portion clamps the second swing arm, and is configured to limit movement of the second swing arm in the extension direction of the main shaft. In this case, the clamping member may be used to fasten the first swing arm and the main shaft and fasten the second swing arm and the main shaft.

In some possible implementations, the fastening portion is stacked between the stop block and the main shaft. In this case, the stop block and the stop block may fully use thickness space perpendicular to the main support face, to increase space utilization of the main shaft, and help thin the foldable assembly. In addition, in such a stacked structure design, the fastener and the clamping member are fastened to the main shaft by using only one fastening structure, to effectively reduce a quantity of fastening structures, help simplify a structure of the main shaft, and reduce production costs of the foldable assembly.

In some possible implementations, first avoidance space is disposed at the first end portion of the first swing arm, the first stop end face is formed on a wall face of the first avoidance space, the first stop face is at least partially located in the first avoidance space, second avoidance space is disposed at the first end portion of the second swing arm, the second stop end face is formed on a wall face of the second avoidance space, and the second stop face is at least partially located in the second avoidance space. In this case, the first avoidance space can provide avoidance for the first stop face in a process of rotating the first swing arm, and the second avoidance space can provide avoidance for the second stop face in a process of rotating the second swing arm. In a process of preventing the foldable assembly from being unfolded or folded relative to each other, interference occurs between the first stop face and the first end portion of the first swing arm, and interference occurs between the second stop face and the first end portion of the second swing arm, to ensure that a mechanism moves smoothly and reliably.

In some possible implementations, the first end portion of the first swing arm further includes a first compensation block, the main shaft is provided with a first avoidance hole, the first compensation block is at least partially located in the first avoidance hole when the first housing and the second housing are in the opened state, and the first compensation block is configured to assist in supporting the bendable portion. In this case, the first avoidance hole can avoid interference occurring between the first swing arm and the main shaft when the first swing arm rotates, to ensure that a mechanism moves smoothly and reliably. In addition, when the foldable assembly is in the opened state, the first compensation block can fill a part of the first avoidance hole, to provide a more complete support environment for the entire foldable assembly.

In some possible implementations, the stop block is further provided with a first avoidance slot, and the first avoidance slot is located between the first stop face and the second stop face. When the first housing and the second housing are in the closed state, the first compensation block is at least partially located in the first avoidance slot. When the foldable assembly is folded relative to each other, the first compensation block may be transferred to the first avoidance slot. The first avoidance slot may avoid interference occurring between the first compensation block and the stop block, to ensure that a mechanism moves smoothly and reliably.

In some possible implementations, the foldable assembly further includes a damping assembly, the damping assembly is installed on the main shaft, the damping assembly connects the first end portion of the first swing arm and the first end portion of the second swing arm, and the damping assembly is configured to provide resistance in a process in which the first swing arm and the second swing arm rotate relative to each other. In this case, when the user opens the electronic device, the user may feel obvious resistance, and an operation hand feeling is good. In addition, when the electronic device is in the opened state, the electronic device is not easily closed due to a slight external vibration, to help maintain the opened state.

In some possible implementations, the damping assembly includes a first clamping block, a second clamping block, and an elastic component, the first clamping block is provided with a plurality of first protruding block groups, the second clamping block is provided with a plurality of second protruding block groups, and the plurality of first protruding block groups and the plurality of second protruding block groups are disposed opposite to each other in a one-to-one correspondence. The first end portion of the first swing arm includes a plurality of first protrusions and a plurality of second protrusions that are disposed away from each other, and the first end portion of the second swing arm includes a plurality of first protrusions and a plurality of second protrusions that are disposed away from each other. Both the first end portion of the first swing arm and the first end portion of the second swing arm are both located between the first clamping block and the second clamping block. The elastic component is located on a side that is of the second clamping block and that faces away from the first clamping block, the elastic component is configured to generate an elastic force, so that the first end portion of the first swing arm and the first end portion of the second swing arm both abut against the first clamping block and the second clamping block, the plurality of first protrusions of the first swing arm cooperate with one of the first protruding block groups to form a clamping structure, the plurality of second protrusions of the first swing arm cooperate with one of the second protruding block groups to form a clamping structure, the plurality of first protrusions of the second swing arm cooperate with another one of the first protruding block groups to form a clamping structure, and the plurality of second protrusions of the second swing arm cooperate with another one of the second protruding block groups to form a clamping structure.

In this case, a first clamping slot may be formed between adjacent first protruding blocks in the first protruding block group, and a second clamping slot may be formed between adjacent second protruding blocks in the second protruding block group. The first protrusion of the first swing arm is clamped into one of first clamping slots of the first clamping block, the second protrusion of the first swing arm is clamped into one of second clamping slots of the second clamping block, the first protrusion of the second swing arm is clamped into another clamping slot of the first clamping block, the second protrusion of the second swing arm is clamped into another clamping slot of the second clamping block, and the elastic member is in a compressed state. When the first swing arm and the second swing arm rotate relative to each other, the first protrusion rotates relative to the first protruding block group, and the first protrusion forms a new clamping structure with the first protruding block group. When the first protrusion crosses the first protruding block of the first protruding block group, the damping assembly generates a damping force for the first swing arm and the second swing arm. Further, a structure design of the protruding block is changed, so that after the first protrusion crosses the first protruding block of the first protruding block group, the damping assembly may further generate a push force on the first swing arm and the second swing arm. Therefore, when the user opens or closes the electronic device, the user can feel an obvious push force and obvious resistance, and a use comfort level of the user is increased. In addition, when the electronic device is in the opened state, under an action of the damping force, the entire electronic device is not easily folded due to external shaking, to help increase stability when the electronic device is used.

In some possible implementations, the first transmission members are a first rotating arm, a second end portion of the first rotating arm is rotatably connected to the first fastening bracket, the second transmission members are a second rotating arm, and a second end portion of the second rotating arm is rotatably connected to the second fastening bracket. In this case, the stop block may limit the first rotating arm and the second rotating arm, to control a value of an included angle when the entire foldable assembly is in the opened state, and further control the included angle between the first housing and the second housing when the electronic device is in the opened state.

According to a second aspect, this application provides a foldable assembly, used in an electronic device. The foldable assembly is configured to support a bendable portion of a screen of the electronic device, and the foldable assembly has an opened state and a closed state.

The foldable assembly includes a main shaft, a first fastening bracket, a first transmission member, a second fastening bracket, a second transmission member, and a stop block. First ends of the first transmission members are rotatably connected to the main shaft, second ends of the first transmission members are connected to the first fastening bracket, and the first ends of the first transmission members have first stop end faces. First ends of the second transmission members are rotatably connected to the main shaft, second ends of the second transmission members are connected to the second fastening bracket, and the first ends of the second transmission members have second stop end faces. In a process in which the first housing and the second housing are unfolded relative to each other, the first stop end faces of the first transmission members are close to the first stop face, and the second stop end faces of the second transmission members are close to the second stop face. When the foldable assembly is in the opened state, the first stop end faces of the first transmission members abut against the first stop face, and the second stop end faces of the second transmission members abut against the second stop face.

The stop block is configured to limit the first transmission members and the second transmission members. When an included angle between the first transmission member and the second transmission member reaches a preset value (in other words, when the foldable assembly is unfolded relative to each other to the opened state), because the stop block performs a limiting action on the first transmission members and the second transmission members, the included angle between the first transmission member and the second transmission member does not exceed the preset value. In addition, a stop action performed on two transmission members can be implemented by disposing the first stop face and the second stop face on a same stop block, to effectively reduce a quantity of stop blocks required by the foldable assembly, and reduce space occupied by the stop block inside the foldable assembly.

In some possible implementations, the main shaft has a main support face and a median face, the main support face is configured to support the bendable portion, and the median face is perpendicular to the main support face and is parallel to an extension direction of the main shaft. The first stop face and the second stop face are symmetrical about the median face, and the first transmission members and the second transmission members are symmetrical about the median face. When the foldable apparatus is unfolded relative to each other to the opened state, the second stop face can abut against the second transmission member when the first stop face abuts against the first transmission member. In this case, an acting force exerted by the first transmission member on the stop block can offset a part of an acting force exerted by the second transmission member on the stop block, and stability of the entire foldable assembly is high. In addition, the stop block has a small deformation amount after being pressed, and precision of controlling, by the stop block, the included angle between the first transmission member and the second transmission member is high.

In some possible implementations, the stop block is fastened to the main shaft, and the first stop face is parallel to the median face. When the foldable assembly is in an opened state, the first swing arm exerts, on the stop block, only an acting force perpendicular to the median face, the second swing arm exerts, on the stop block, only an acting force perpendicular to the median face, and the two acting forces offset each other. Further, a force exerted on a point at which the stop block and the main shaft are connected is reduced, and a deformation amount of the main shaft is reduced, to help ensure flatness of the main shaft.

In some possible implementations, the main shaft includes a main inner shaft and cover bodies, the stop block is located between the main shaft and the cover bodies, and the main inner shaft, the stop block, and the cover bodies are tightly locked by using a fastener. In this case, the stop block is fastened by both the main inner shaft and the cover body, to help reduce pressure of the stop block on the main inner shaft, reduce a deformation amount of the main inner shaft, and improve flatness of the main inner shaft.

In some possible implementations, the first transmission members are a first swing arm, a second end portion of the first swing arm is slidably connected to the first fastening bracket, the second transmission members are a second swing arm, and a second end portion of the second swing arm is slidably connected to the second fastening bracket. In this case, the first swing arm and the second swing arm may be limited by the stop block, to control a value of an included angle when the entire foldable assembly is in the opened state.

In some possible implementations, the foldable assembly further includes a clamping member, the clamping member includes a fastening portion, a first clamping portion, and a second clamping portion, the first clamping portion and the second clamping portion are respectively fastened on two sides of the fastening portion, the fastening portion is fastened to the main shaft, the first clamping portion clamps the first swing arm, and is configured to limit movement of the first swing arm in the extension direction of the main shaft, and the second clamping portion clamps the second swing arm, and is configured to limit movement of the second swing arm in the extension direction of the main shaft. The stop block includes a first stop portion and a second stop portion, the first stop portion is fastened to the first clamping portion, the first stop face is formed on an end face that is of the first stop portion and that faces away from the fastening portion, the second stop portion is fastened to the second clamping portion, and the second stop face is formed on an end face that is of the second stop portion and that faces away from the fastening portion.

In this case, the clamping member and the main shaft can be fastened, and the stop block may be indirectly fastened to the main shaft by using the clamping member. In addition, the clamping member clamps the first swing arm and the second swing arm, so that the first swing arm, the second swing arm, and the main shaft can be indirectly fastened relative to each other.

In some possible implementations, the clamping member and the stop block jointly form an integral limiting connecting member. In this case, a process of assembling the clamping member and the stop block may be omitted, and a process of assembling the foldable assembly and the electronic device is simplified. In addition, an integral structure may further increase connection strength between the clamping member and the stop block.

In some possible implementations, an included angle between the first stop face and the median face is greater than 0°. In addition, the foldable assembly further includes an adjustment assembly, and the adjustment assembly is configured to adjust relative locations of the stop block and the main shaft in a thickness direction of the foldable assembly. In this case, in the opened state, relative locations of the adjustment assembly and the main shaft in the thickness direction of the foldable assembly are adjusted, to adjust the relative locations of the stop block and the main shaft in the thickness direction of the foldable assembly. Therefore, an abutment location between the first stop face and the first stop end face changes, an abutment location between the second stop face and the second stop end face changes, and further relative rotation may occur between the first swing arm and the second swing arm. In other words, in the opened state, the included angle between the first swing arm and the second swing arm may be finely adjusted by using the adjustment assembly, to ensure that the included angle between the first swing arm and the second swing arm is a preset value, and prevent the first swing arm and the second swing arm from over-pressing the main shaft.

In some possible implementations, the adjustment assembly includes a limiting member and an elastic member, the limiting member includes a limiting end and a connecting end, the limiting end of the limiting member is located on a side that is of the stop block and that faces away from the main shaft, the connecting end of the limiting member passes through the stop block and is threadedly connected to the main shaft, and the elastic member abuts between the stop block and the main shaft. In this case, the limiting member is rotated, to adjust relative locations of the limiting end and the main shaft in a direction perpendicular to the main support face, and the elastic member is stretched or compressed, so that the stop block continuously abuts against the limiting member. Further, relative locations of the stop block and the main shaft in the direction perpendicular to the main support face are adjusted, to adjust an angle at which the foldable assembly is unfolded relative to each other in the opened state, and ensure that the included angle between the first swing arm and the second swing arm is the preset value.

In some possible implementations, the foldable assembly may not be provided with the adjustment assembly, and only the fastener is used to adjust a size of movable space that is of the stop block and that is perpendicular to the main support face. Under an abutment action of the first transmission member and the second transmission member, the stop block is automatically away from the main shaft and finally abuts against the fastener. Therefore, the relative locations of the stop block and the main shaft in the direction perpendicular to the main support face may be adjusted, to adjust the included angle between the first transmission member and the second transmission member in the opened state.

In some possible implementations, a protruding block is disposed on the main shaft, and the protruding block is disposed away from the main support face. The stop block includes a main body portion, a first stop portion, and a second stop portion, the first stop portion is fastened on a side of the main body portion, the first stop face is formed on an end face that is of the first stop portion and that faces away from the main body portion, the second stop portion is fastened on the other side of the main body portion, and the second stop face is formed on an end face that is of the second stop portion and that faces away from the main body portion. The main body portion is provided with a through hole and a limiting slot, the limiting slot is located on a side that is of the through hole and that is close to the main shaft, and communicates with the through hole, the protruding block is built into the limiting slot, and the connecting end of the limiting member is threadedly connected to the protruding block through the through hole and the limiting slot. In this case, the limiting member may pass through the through hole of the main body portion, and is threadedly connected to the protruding block, to implement location of the stop block on the main shaft. In addition, the protruding block cooperates with the limiting slot, to help locate the stop block on the main shaft when the stop block is assembled on the main shaft, prevent the stop block from moving relative to the main shaft when location of the limiting member is invalid, and increase structural stability of the stop block.

In some possible implementations, an included angle between the first stop face and the median face falls within a range of 0° to 45°. In this case, a component force that is of an acting force exerted by the first transmission member on the first stop face and that is perpendicular to the main support face is greater than a component force parallel to the main support face, and a component force that is of an acting force exerted by the second transmission member on the second stop face and that is perpendicular to the main support face is greater than a component force parallel to the main support face. In addition, because the first stop face and the second stop face are symmetrical about the main support face, and the first transmission member and the second transmission member are symmetrical about the main support face, an acting force exerted by the first transmission member on the stop block and an acting force exerted by the second transmission member on the stop block offset each other in a direction parallel to the main support face, and only a small component force is left in the direction perpendicular to the main support face. Therefore, the included angle between the first stop face and the median face is controlled, to effectively reduce a combined force exerted by the first transmission member and the second transmission member on the stop block, further reduce a force exerted on a fastening structure between the stop block and the main shaft, help increase structural security of the fastening structure, and increase security of the foldable assembly.

In a possible implementation, the first stop face and the first stop end face may be curved faces, and/or the second stop face and the second stop end face may be curved faces. In this case, a contact area between the first stop face and the first stop end face and a contact surface between the second stop face and the second stop end face that are in the opened state may be increased, to help reduce a local deformation amount when the stop block is pressed, and help control precision of the included angle between the first swing arm and the second swing arm in the opened state.

In some possible implementations, the first transmission members are a first swing arm, a second end portion of the first swing arm is slidably connected to the first fastening bracket, the second transmission members are a second swing arm, and a second end portion of the second swing arm is slidably connected to the second fastening bracket. In this case, the stop block may limit the first swing arm and the second swing arm, to control a value of an included angle when the entire foldable assembly is in the opened state, and further control the included angle between the first housing and the second housing when the electronic device is in the opened state.

In some possible implementations, the foldable assembly further includes a clamping member, the clamping member includes a fastening portion, a first clamping portion, and a second clamping portion, the first clamping portion and the second clamping portion are respectively fastened on two sides of the fastening portion, the fastening portion is fastened to the main shaft, the first clamping portion clamps the first swing arm, and is configured to limit movement of the first swing arm in the extension direction of the main shaft, and the second clamping portion clamps the second swing arm, and is configured to limit movement of the second swing arm in the extension direction of the main shaft. In this case, the clamping member may be used to fasten the first swing arm and the main shaft and fasten the second swing arm and the main shaft.

In some possible implementations, the fastening portion is stacked between the stop block and the main shaft. In this case, the stop block and the stop block may fully use thickness space perpendicular to the main support face, to increase space utilization of the main shaft, and help thin the foldable assembly. In addition, in such a stacked structure design, the fastener and the clamping member are fastened to the main shaft by using only one fastening structure, to effectively reduce a quantity of fastening structures, help simplify a structure of the main shaft, and reduce production costs of the foldable assembly.

In some possible implementations, first avoidance space is disposed at the first end portion of the first swing arm, the first stop end face is formed on a wall face of the first avoidance space, the first stop face is at least partially located in the first avoidance space, second avoidance space is disposed at the first end portion of the second swing arm, the second stop end face is formed on a wall face of the second avoidance space, and the second stop face is at least partially located in the second avoidance space. In this case, the first avoidance space can provide avoidance for the first stop face in a process of rotating the first swing arm, and the second avoidance space can provide avoidance for the second stop face in a process of rotating the second swing arm. In a process of preventing the foldable assembly from being unfolded or folded relative to each other, interference occurs between the first stop face and the first end portion of the first swing arm, and interference occurs between the second stop face and the first end portion of the second swing arm, to ensure that a mechanism moves smoothly and reliably.

In some possible implementations, the first end portion of the first swing arm further includes a first compensation block, the main shaft is provided with a first avoidance hole, the first compensation block is at least partially located in the first avoidance hole when the foldable assembly is in the opened state, and the first compensation block is configured to assist in supporting the bendable portion. In this case, the first avoidance hole can avoid interference occurring between the first swing arm and the main shaft when the first swing arm rotates, to ensure that a mechanism moves smoothly and reliably. In addition, when the foldable assembly is in the opened state, the first compensation block can fill a part of the first avoidance hole, to provide a more complete support environment for the entire foldable assembly.

In some possible implementations, the stop block is further provided with a first avoidance slot, and the first avoidance slot is located between the first stop face and the second stop face. When the foldable assembly is in the closed state, the first compensation block is at least partially located in the first avoidance slot. When the foldable assembly is folded relative to each other, the first compensation block may be transferred to the first avoidance slot. The first avoidance slot may avoid interference occurring between the first compensation block and the stop block, to ensure that a mechanism moves smoothly and reliably.

In some possible implementations, the foldable assembly further includes a damping assembly, the damping assembly is installed on the main shaft, the damping assembly connects the first end portion of the first swing arm and the first end portion of the second swing arm, and the damping assembly is configured to provide resistance in a process in which the first swing arm and the second swing arm rotate relative to each other. In this case, when the user opens the electronic device, the user may feel obvious resistance, and an operation hand feeling is good. In addition, when the electronic device is in the opened state, the electronic device is not easily closed due to a slight external vibration, to help maintain the opened state.

In some possible implementations, the damping assembly includes a first clamping block, a second clamping block, and an elastic component, the first clamping block is provided with a plurality of first protruding block groups, the second clamping block is provided with a plurality of second protruding block groups, and the plurality of first protruding block groups and the plurality of second protruding block groups are disposed opposite to each other in a one-to-one correspondence. The first end portion of the first swing arm includes a plurality of first protrusions and a plurality of second protrusions that are disposed away from each other, and the first end portion of the second swing arm includes a plurality of first protrusions and a plurality of second protrusions that are disposed away from each other. Both the first end portion of the first swing arm and the first end portion of the second swing arm are both located between the first clamping block and the second clamping block. The elastic component is located on a side that is of the second clamping block and that faces away from the first clamping block, the elastic component is configured to generate an elastic force, so that the first end portion of the first swing arm and the first end portion of the second swing arm both abut against the first clamping block and the second clamping block, the plurality of first protrusions of the first swing arm cooperate with one of the first protruding block groups to form a clamping structure, the plurality of second protrusions of the first swing arm cooperate with one of the second protruding block groups to form a clamping structure, the plurality of first protrusions of the second swing arm cooperate with another one of the first protruding block groups to form a clamping structure, and the plurality of second protrusions of the second swing arm cooperate with another one of the second protruding block groups to form a clamping structure.

In this case, a first clamping slot may be formed between adjacent first protruding blocks in the first protruding block group, and a second clamping slot may be formed between adjacent second protruding blocks in the second protruding block group. The first protrusion of the first swing arm is clamped into one of first clamping slots of the first clamping block, the second protrusion of the first swing arm is clamped into one of second clamping slots of the second clamping block, the first protrusion of the second swing arm is clamped into another clamping slot of the first clamping block, the second protrusion of the second swing arm is clamped into another clamping slot of the second clamping block, and the elastic member is in a compressed state. When the first swing arm and the second swing arm rotate relative to each other, the first protrusion rotates relative to the first protruding block group, and the first protrusion forms a new clamping structure with the first protruding block group. When the first protrusion crosses the first protruding block of the first protruding block group, the damping assembly generates a damping force for the first swing arm and the second swing arm. Further, a structure design of the protruding block is changed, so that after the first protrusion crosses the first protruding block of the first protruding block group, the damping assembly may further generate a push force on the first swing arm and the second swing arm. Therefore, when the user opens or closes the electronic device, the user can feel an obvious push force and obvious resistance, and a use comfort level of the user is increased. In addition, when the electronic device is in the opened state, under an action of the damping force, the entire electronic device is not easily folded due to external shaking, to help increase stability when the electronic device is used.

In some possible implementations, the first transmission members are a first rotating arm, a second end portion of the first rotating arm is rotatably connected to the first fastening bracket, the second transmission members are a second rotating arm, and a second end portion of the second rotating arm is rotatably connected to the second fastening bracket. In this case, the first rotating arm and the second rotating arm may be limited by the stop block, to control a value of the included angle between the first swing arm and the second swing arm when the entire foldable assembly is in the opened state.

In this application, the flexible display can be unfolded or folded along with the foldable assembly. When the electronic device is in the opened state, a value of the included angle when the first transmission member and the second transmission member in the foldable assembly are opened is controlled by using the stop block, to control a value of the included angle between the first housing and the second housing. Therefore, the foldable apparatus is not overbent, and the foldable apparatus does not over-pull the flexible display, to help increase a service life of the flexible display. If there is a slight deviation due to a device, a process, or the like in a part manufacturing and assembling process of the foldable apparatus, or the like, there is a deviation between the preset value and the included angle between the first transmission member and the second transmission member when the foldable apparatus is in the opened state. In this case, the included angle between the first transmission member and the second transmission member in the opened state may be further adjusted by using the adjustment assembly, to ensure that the included angle between the first transmission member and the second transmission member in the opened state is the preset value, prevent the flexible display from being overbent or over-pressed, and help increase a service life of the flexible display.

### BRIEF DESCRIPTION OF DRAWINGS

FIG. 1 is a diagram of a structure when an electronic device is in an opened state according to an embodiment;
FIG. 2 is a diagram of a structure of the electronic device shown in FIG. 1 in an intermediate state;
FIG. 3 is a diagram of a structure when the electronic device shown in FIG. 1 is in a closed state;
FIG. 4 is a diagram of a partial exploded structure of the electronic device shown in FIG. 1;
FIG. 5 is a diagram of an exploded structure of a foldable assembly shown in FIG. 3;
FIG. 6 is a diagram of an exploded structure after the foldable assembly shown in FIG. 5 is folded leftward/rightward;
FIG. 7 is a diagram of a structure of a main shaft shown in FIG. 5;
FIG. 8 is a diagram of a structure of the main shaft shown in FIG. 7 from another perspective;
FIG. 9 is a diagram of an exploded structure of the main shaft shown in FIG. 7;
FIG. 10 is a diagram of an exploded structure of the main shaft shown in FIG. 8;
FIG. 11 is a diagram of a cross-sectional structure after the main shaft shown in FIG. 7 is cut along a cross section A-A;
FIG. 12 is a diagram of a cross-sectional structure after the main shaft shown in FIG. 7 is cut along a cross section B-B;
FIG. 13 is a diagram of a structure of a bottom connecting assembly shown in FIG. 5;
FIG. 14 is a diagram of a partial exploded structure of the bottom connecting assembly shown in FIG. 13;
FIG. 15 is a diagram of a partial structure of a control mechanism shown in FIG. 14;
FIG. 16 is a diagram of an exploded structure of the structure shown in FIG. 15;
FIG. 17A is a diagram of a structure of a first swing arm shown in FIG. 14;
FIG. 17B is a diagram of a structure of the first swing arm shown in FIG. 17A from another perspective;
FIG. 18A is a diagram of a structure of a second swing arm shown in FIG. 14;
FIG. 18B is a diagram of a structure of the second swing arm shown in FIG. 18A from another perspective;
FIG. 19 is a diagram of a partial structure of a control mechanism shown in FIG. 16;
FIG. 20 is a diagram of a structure of the structure shown in FIG. 19 from another perspective;
FIG. 21 is a diagram of a structure of a clamping member shown in FIG. 15;
FIG. 22A is a diagram of a cross-sectional structure after the control mechanism shown in FIG. 15 is cut along a cross section C-C;
FIG. 22B is a diagram of a cross-sectional structure after the control mechanism shown in FIG. 15 is cut along a cross section D-D;
FIG. 23 is a diagram of a cross-sectional structure after the control mechanism shown in FIG. 15 is cut along a cross section E-E;
FIG. 24A is a diagram of a structure of a stop block shown in FIG. 14;
FIG. 24B is a diagram of a structure after the stop block shown in FIG. 24A is flipped leftward/rightward;
FIG. 25 is a diagram of a structure of an adjustment assembly shown in FIG. 14;
FIG. 26 is a diagram of an assembly structure of a partial structure of the bottom connecting assembly shown in FIG. 13 and a main inner shaft shown in FIG. 9;
FIG. 27A is a diagram of a cross-sectional structure after the structure shown in FIG. 26 is cut along a cross section F-F;
FIG. 27B is a diagram of a part of the structure shown in FIG. 27A from another perspective;
FIG. 28A is a diagram of a structure of the structure shown in FIG. 27B in another embodiment;
FIG. 28B is a diagram of a structure of the structure shown in FIG. 27B in another embodiment;
FIG. 28C is a diagram of a structure of the structure shown in FIG. 27B in another embodiment;
FIG. 28D is a diagram of a structure of FIG. 27B in another embodiment;
FIG. 28E is a diagram of a structure of a limiting connecting member;
FIG. 28F is a diagram of a structure of the structure shown in FIG. 28E from another perspective;
FIG. 28G is a diagram of a structure of the structure shown in FIG. 17A in another embodiment;
FIG. 28H is a diagram of a partial structure of FIG. 26 in another embodiment;
FIG. 28I is a diagram of a cross-sectional structure after FIG. 28H is cut along a cross section L-L;
FIG. 28J is a diagram of a cross-sectional structure after FIG. 28H is cut along a cross section M-M;
FIG. 28K is a diagram of a cross-sectional structure after FIG. 28H is cut along a cross section N-N;
FIG. 29 is a diagram of a structure of a first rotating arm shown in FIG. 14;
FIG. 30 is a diagram of a structure of the first rotating arm shown in FIG. 29 from another perspective;
FIG. 31A is a diagram of a structure of a first fastening bracket shown in FIG. 14;
FIG. 31B is a diagram of a structure of a first fastening bracket shown in FIG. 14 from another perspective;
FIG. 32A is a diagram of a structure of a second fastening bracket shown in FIG. 14;
FIG. 32B is a diagram of a structure of a second fastening bracket shown in FIG. 14 from another perspective;
FIG. 33 is a diagram of an assembly structure after a bottom connecting assembly and a main inner shaft are installed;
FIG. 34 is a diagram of a structure after the structure shown in FIG. 33 and a bottom cover body are assembled;
FIG. 35 is a diagram of a cross-sectional structure after the structure shown in FIG. 34 is cut along a cross section G-G;
FIG. 36 is a diagram of a cross-sectional structure after the structure shown in FIG. 34 is cut along a cross section H-H;
FIG. 37 is a diagram of a partial structure of a first support plate and a second support plate shown in FIG. 5;
FIG. 38 is a diagram of a partial enlarged structure of a bottom connecting assembly of a foldable assembly;
FIG. 39 is a diagram of a structure after the structure shown in FIG. 38 is folded leftward/rightward;
FIG. 40 is a diagram of a cross-sectional structure after FIG. 38 is cut along a cross section I-I;
FIG. 41 is a diagram of a cross-sectional structure after FIG. 38 is cut along a cross section J-J;
FIG. 42 is a diagram of a cross-sectional structure after FIG. 38 is cut along a cross section K-K; and
FIG. 43 is a diagram of an internal structure of a partial structure of an electronic device in some other embodiments according to this application.

### DESCRIPTION OF EMBODIMENTS

The following describes the following embodiments of this application with reference to the accompanying drawings in embodiments of this application.

In descriptions of embodiments of this application, it should be noted that, unless otherwise specified and limited, terms "installation" and "connection" should be understood in a broad sense. For example, "connection" may be a detachable connection, or may be an undetachable connection, or may be a direct connection, or may be an indirect connection by using an intermediate medium. "Fastening" means that two parties are connected to each other and a relative location relationship remains unchanged after the two parties are connected to each other. "Rotatable connection" means that two parties are connected to each other and can rotate relative to each other after the two parties are connected to each other. "Slidable connection" means that two parties are connected to each other and can slide relative to each other after the two parties are connected to each other. Orientation terms mentioned in embodiments of this application, for example, "up", "down", "left", "right", "inside", "outside", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application. Terms such as "first" and "second" are used only for description purposes, and cannot be understood as implying or implying relative importance or implicitly indicating a quantity of technical features. Therefore, a feature limited by "first" or "second" may explicitly or implicitly include one or more features. Obtaining an integral structure of two components by using an integrated forming process means that, in a process of forming one of the two components, the component is connected to another component, and the two components can be connected without being reprocessed (for example, bonded, welded, clamped, or screwed).

This application provides an electronic device. The electronic device includes a foldable apparatus and a flexible display fastened on the foldable apparatus. The foldable apparatus includes a foldable assembly and two housings. The foldable assembly may be unfolded to an opened state, may be folded to a closed state, or may be in an intermediate state between the opened state and the closed state. The flexible display is unfolded and folded along with the foldable apparatus. The foldable assembly may precisely control an included angle between two housings in the opened state by using a stop cooperation structure, so that the included angle between the two housings adapts to a design dimension of the flexible display, to help reduce a risk that the flexible display is damaged due to a pull of the foldable apparatus, improve reliability of the flexible display, and help improve visual experience of a user when the user uses the flexible display.

The electronic device may be a foldable electronic product such as a mobile phone, a tablet, a notebook computer, or a wearable device, and the wearable device may be a smart watch, a smart band, or the like. In embodiments of this application, descriptions are provided by using an example in which the electronic device is a mobile phone.

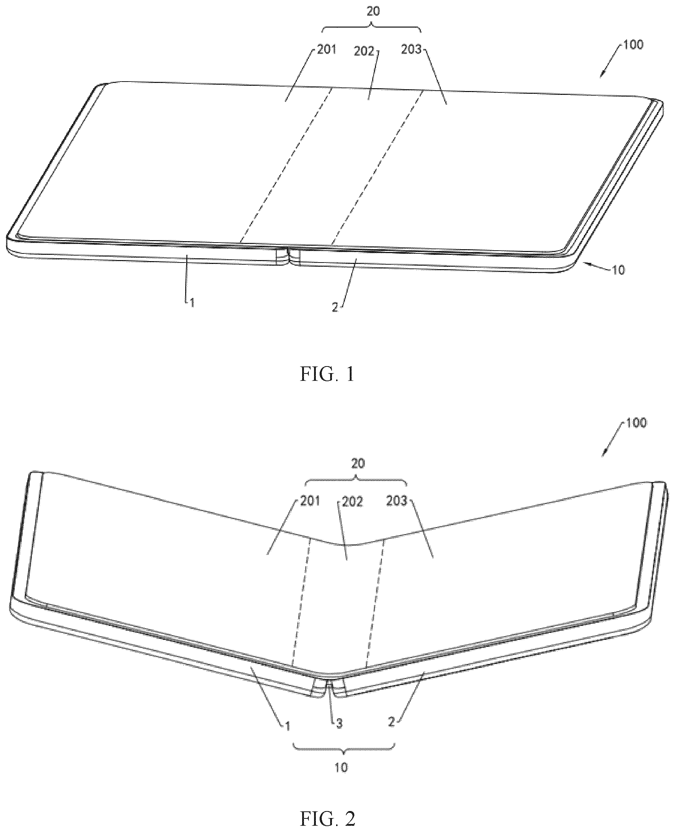

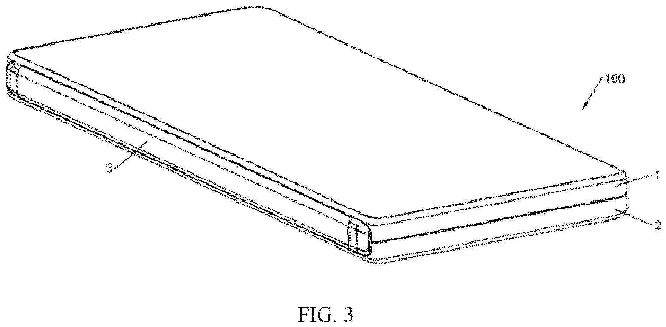

FIG. 1 is a diagram of a structure when an electronic device is in an opened state according to an embodiment. FIG. 2 is a diagram of a structure of the electronic device shown in FIG. 1 in an intermediate state. FIG. 3 is a diagram of a structure when the electronic device shown in FIG. 1 is in a closed state.

In some embodiments, the electronic device 100 may include a flexible display 20 and a foldable apparatus 10, and the flexible display 20 is installed on the foldable apparatus 10. The flexible display 20 is configured to display an image. As shown in FIG. 1, the foldable apparatus 10 may be unfolded to an opened state. As shown in FIG. 3, the foldable apparatus 10 may be further folded into a closed state. As shown in FIG. 2, the foldable apparatus 10 may be further unfolded or folded into an intermediate state. The intermediate state may be any state between the opened state and the closed state. The flexible display 20 moves along with the foldable apparatus 10, and the foldable apparatus 10 may drive the flexible display 20 to be unfolded or folded, so that the electronic device 100 can be unfolded to the opened state or be folded to the closed state. When the electronic device 100 is in the closed state, the flexible display 20 is located on an inner side of the foldable apparatus 10.

The foldable apparatus 10 includes a first housing 1, a second housing 2, and a foldable assembly 3, the foldable assembly 3 is connected to the first housing 1 and the second housing 2, and through movement of the foldable assembly 3, the first housing 1 and the second housing 2 are capable of being unfolded relative to each other to the opened state or folded relative to each other to the closed state. As shown in FIG. 1, the first housing 1 and the second housing 2 may be unfolded relative to each other to the opened state, so that the foldable assembly 3, the foldable apparatus 10, and the electronic device 100 are all in the opened state. The flexible display 20 is unfolded along with the foldable apparatus 10. For example, when the foldable apparatus 10 is in the opened state, an included angle between the first housing 1 and the second housing 2 may be 180°, and the flexible display 20 is in an unfolded state.

As shown in FIG. 3, the first housing 1 and the second housing 2 may be folded relative to each other to the closed state, so that the foldable assembly 3, the foldable apparatus 10, and the electronic device 100 are all in the closed state. The flexible display 20 is folded along with the housing. The flexible display 20 is located on the inner side of the foldable apparatus 10 and is wrapped by the foldable apparatus 10. It may be understood that, when the housing is in the closed state, the included angle between the first housing 1 and the second housing 2 may be 0°.

As shown in FIG. 2, the first housing 1 and the second housing 2 may also be folded relative to each other or unfolded relative to each other to the intermediate state, so that the foldable assembly 3, the foldable apparatus 10, and the electronic device 100 are all in the intermediate state. The intermediate state may be any state between the opened state and the closed state, and the flexible display 20 also changes with the foldable apparatus 10.

In this embodiment, the flexible display 20 can be unfolded and folded along with the foldable apparatus 10. When the electronic device 100 is in the opened state, the flexible display 20 is in an unfolded state, and the flexible display 20 can perform full-screen display, so that the electronic device 100 has a large display area, to improve viewing experience and operation experience of a user. When the electronic device 100 is in the closed state, a plane size of the electronic device 100 is small, so that the user can carry and store the electronic device 100.

For example, as shown in FIG. 1, when the foldable assembly 3 is in the opened state, the first housing 1 and the second housing 2 are spliced. It should be noted that, that the first housing 1 and the second housing 2 are spliced may include that the first housing 1 and the second housing 2 partially or completely abut against each other, or may include that there is a small gap between the second housing 2 and the second housing 2. In this embodiment, the first housing 1 and the second housing 2 are spliced, so that an angle at which the first housing 1 and the second housing 2 rotate relative to each other is limited to some extent, an unfolding action of the foldable apparatus 10 is stopped, and the electronic device 100 is prevented from being over-unfolded when the foldable apparatus 10 is unfolded, to ensure that the foldable apparatus 10 can have a maximum width size when being used by the user, reduce a force exerted on the flexible display 20, and improve reliability of the flexible display 20 and the electronic device 100.

For example, as shown in FIG. 3, when the foldable apparatus 10 is in the closed state, the first housing 1 and the second housing 2 can be completely closed. It should be noted that, that the first housing 1 and the second housing 2 are closed may include that the first housing 1 and the second housing 2 partially or completely abut against each other, or may include that there is a small gap between the first housing 1 and the second housing 2. In this embodiment, space for accommodating the flexible display 20 is reserved only in a middle portion between the first housing 1 and the second housing 2, and there is no large gap at an edge, to improve appearance experience of the housing and the electronic device 100, prevent a foreign body outside the electronic device 100 from entering the electronic device 100 in the closed state, and improve reliability of the electronic device 100.

For example, as shown in FIG. 2, when the foldable apparatus 10 is in the intermediate state, the included angle is formed between the first housing 1 and the second housing 2, and the intermediate state may be any state between the opened state and the closed state.

In some embodiments, the electronic device 100 may further include a plurality of components (not shown in the figure), and the plurality of components are accommodated inside the two housings (1 and 2). The plurality of components of the electronic device 100 may include but are not limited to a processor, an internal processor, an external storage interface, a universal serial bus (universal serial bus, USB) port, a charging management module, a power management module, a battery, an antenna, a communication module, a camera module, an audio module, a speaker, a receiver, a microphone, a headset jack, a sensor module, a subscriber identification module (subscriber identification module, SIM) card interface, and the like. The electronic device 100 may have more or fewer components than those described above, may combine two or more components, or may have different component configurations. A quantity, types, and locations of modules of the electronic device 100 are not limited in this embodiment of this application.

In some embodiments, the flexible display 20 may be integrated with a display function and a touch sensing function. A display function of the flexible display 20 is used to display a text, an image, a video, and the like, and the touch sensing function of the flexible display 20 is used to detect a touch action of the user, to implement information exchange between a human and a machine. The flexible display 20 may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro light-emitting diode) display, a micro organic light-emitting diode (micro organic light-emitting diode) display, or a quantum dot light emitting diode (quantum dot light emitting diode, QLED) display.

In this embodiment, as shown in FIG. 1, the flexible display 20 includes a first non-bendable portion 201, a bendable portion 202, and a second non-bendable portion 203 that are sequentially arranged. The first non-bendable portion 201 is fastened to the first housing 1, and the second non-bendable portion 203 is fastened to the second housing 2. In a process in which the first housing 1 and the second housing 2 are folded relative to each other or unfolded relative to each other, the first housing 1 drives the first non-bendable portion 201 to move, the second housing 2 drives the second non-bendable portion 203 to move, and the bendable portion 202 is deformed. When the flexible display 20 is in the unfolded state, the first non-bendable portion 201, the bendable portion 202, the second non-bendable portion 203, and the bendable portion 202 are all on a same plane. When the flexible display 20 is in a stacked state, the first non-bendable portion 201 and the second non-bendable portion 203 abut against each other or have a small gap, and the flexible display 20 is in a U shape on the whole.

It should be understood that in this embodiment, descriptions are provided by using an example in which the electronic device 100 is of a two-fold structure. In other words, the electronic device 100 includes two housings (1 and 2) that may be bent relative to each other. In some other embodiments, the electronic device 100 may alternatively be of a three-fold structure or a more-fold structure. In other words, the electronic device 100 includes three or more housings that may be bent relative to each other, and two adjacent housings are connected by using the foldable assembly 3. When the electronic device 100 is of the three-fold structure or the more-fold structure, a structure of the electronic device 100 may be adaptively designed with reference to descriptions of the two-fold structure in this embodiment. Details are not described in this application.

The following provides example descriptions of an implementation structure of the foldable assembly 3.

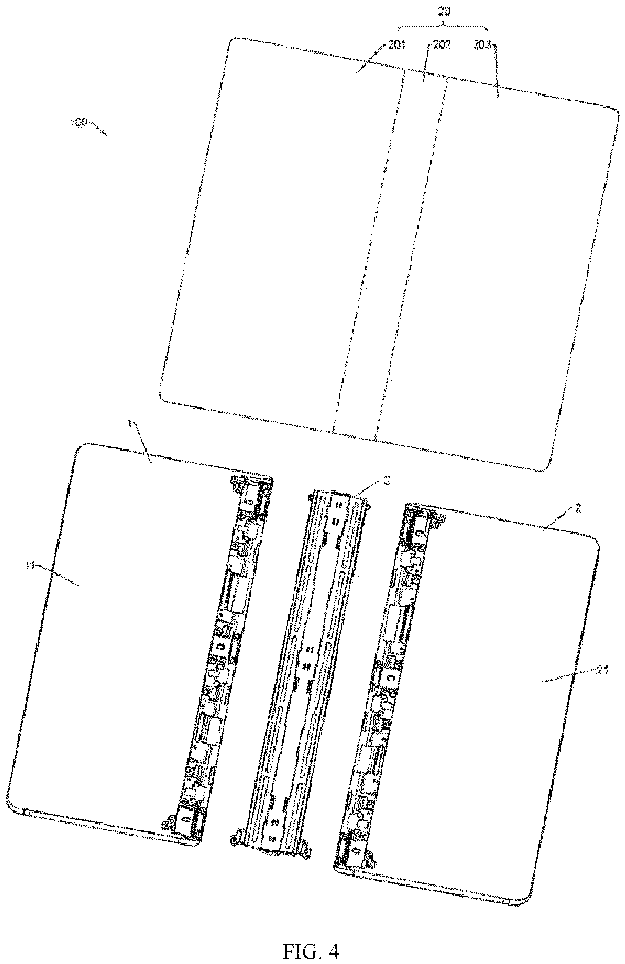

FIG. 4 is a diagram of a partial exploded structure of the electronic device shown in FIG. 1.

In some embodiments, the first housing 1 includes a support face 11 configured to carry the flexible display 20, and the second housing 2 includes a support face 21 configured to carry the flexible display 20. In this application, an included angle between the support face 11 of the first housing 1 and the support face 21 of the second housing 2 is the included angle between the first housing 1 and the second housing 2. When the electronic device 100 is in the opened state, the included angle between the support face 11 of the first housing 1 and the support face 21 of the second housing 2 may be 180°. For example, the first non-bendable portion 201 of the flexible display 20 may be fastened to the support face 11 of the first housing 1. For example, the first non-bendable portion 201 may be bonded to the support face 11 of the first housing 1 by using an adhesive layer. The second non-bendable portion 203 may be fastened to the support face 21 of the second housing 2. For example, the second non-bendable portion 203 may be bonded to the support face 21 of the second housing 2 by using an adhesive layer. The adhesive layer used for bonding may be a continuous monolithic adhesive layer, may be a point-break adhesive layer, or may be an adhesive layer with a hollow region. A specific solution of the adhesive layer is not strictly limited in this embodiment of this application.

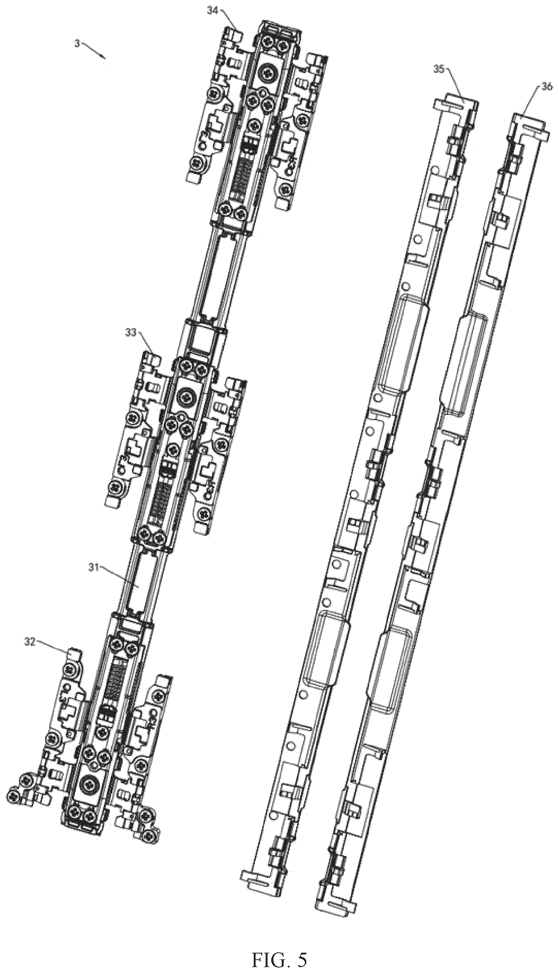

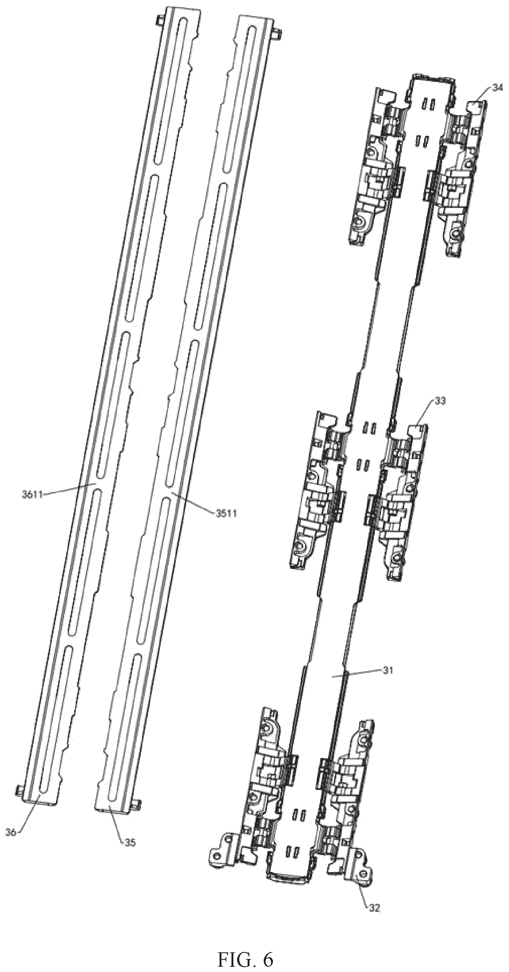

FIG. 5 is a diagram of an exploded structure of the foldable assembly shown in FIG. 3. FIG. 6 is a diagram of an exploded structure after the foldable assembly shown in FIG. 5 is folded leftward/rightward.

In some embodiments, the foldable assembly 3 includes a main shaft 31, a plurality of connecting assemblies (32, 33, and 34), a first support plate 35, and a second support plate 36.

For example, the plurality of connecting assemblies (32, 33, and 34) are all connected to the main shaft 31, and the plurality of connecting assemblies (32, 33, and 34) can move, and can be unfolded or folded relative to the main shaft 31. The plurality of connecting assemblies (32, 33, and 34) are all further connected between the first housing 1 and the second housing 2 (refer to FIG. 4). When the plurality of connecting assemblies (32, 33, and 34) move relative to the main shaft 31, the first housing 1 and the second housing 2 are driven to move, to implement relative unfolding and relative folding of the first housing 1 and the second housing 2.

The first support plate 35 and the second support plate 36 are both connected to the plurality of connecting assemblies (32, 33, and 34). The first support plate 35 and the second support plate 36 may move along with the plurality of connecting assemblies (32, 33, and 34), to implement relative unfolding and relative folding. With reference to FIG. 4, when the first housing 1 and the second housing 2 are in the opened state, the first support plate 35 and the second support plate 36 are respectively located on two sides of the main shaft 31. The first support plate 35 includes a first support face 3511 disposed to face the flexible display 20, and the second support plate 36 includes a second support face 3611 disposed to face the flexible display 20. The first support face 3511, the second support face 3611, and the main shaft 31 cooperate to jointly support the bendable portion 202 of the flexible display 20 in the opened state, so that the flexible display 20 in the opened state is flatter, and the bendable portion 202 is not easily depressed when the user presses and touches the flexible display 20 in the opened state.

For example, a side that is of the first support plate 35 and that faces away from the first support face 3511 is provided with a plurality of protrusion structures and a plurality of recess structures, and the plurality of protrusion structures and the plurality of recess structures are configured to cooperate with the plurality of connecting assemblies (32, 33, and 34), so that the first support plate 35 is fastened to the plurality of connecting assemblies (32, 33, and 34).

In this embodiment of this application, two ends that are close to the main shaft 31 are respectively defined as a top and a bottom. For example, there may be three connecting assemblies: a bottom connecting assembly 32, a middle connecting assembly 33, and a top connecting assembly 34. The bottom connecting assembly 32, the middle connecting assembly 33, and the top connecting assembly 34 are arranged at intervals in an extension direction of the main shaft 31. The extension direction of the main shaft 31 is a direction from a bottom end of the main shaft 31 to a top end of the main shaft 31. The plurality of connecting assemblies (32, 33, and 34) move in cooperation, so that the first housing 1 and the second housing 2 move more smoothly and reliably in the process in which the first housing 1 and the second housing 2 are unfolded or folded relative to each other.

It may be understood that there may be more or less connecting assemblies, and the connecting assemblies may be split or combined. Structures of the plurality of connecting assemblies may be the same or slightly different. This is not strictly limited in this application. The following mainly provides descriptions by using the bottom connecting assembly 32 as an example. Both the middle connecting assembly 33 and the top connecting assembly 34 may be designed with reference to the bottom connecting assembly 32.

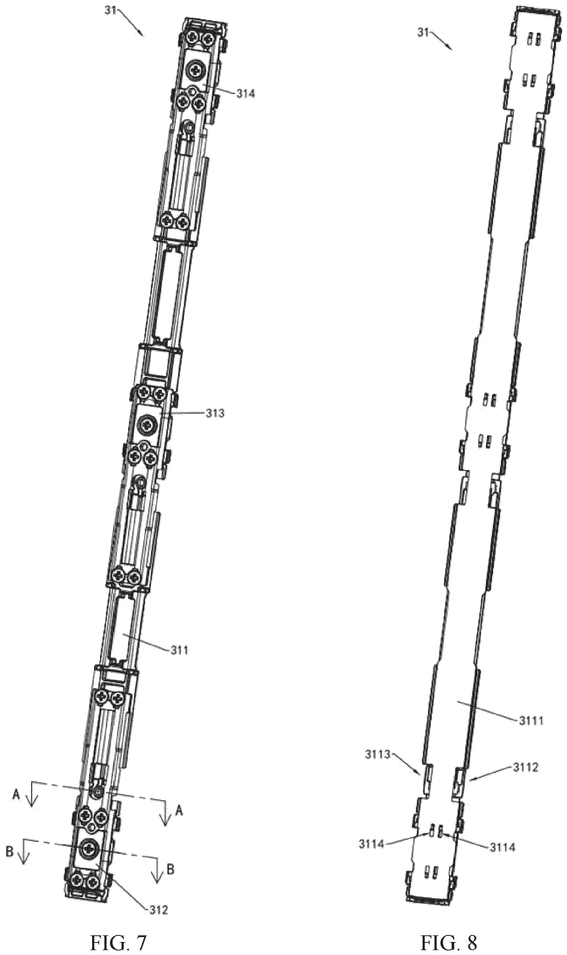

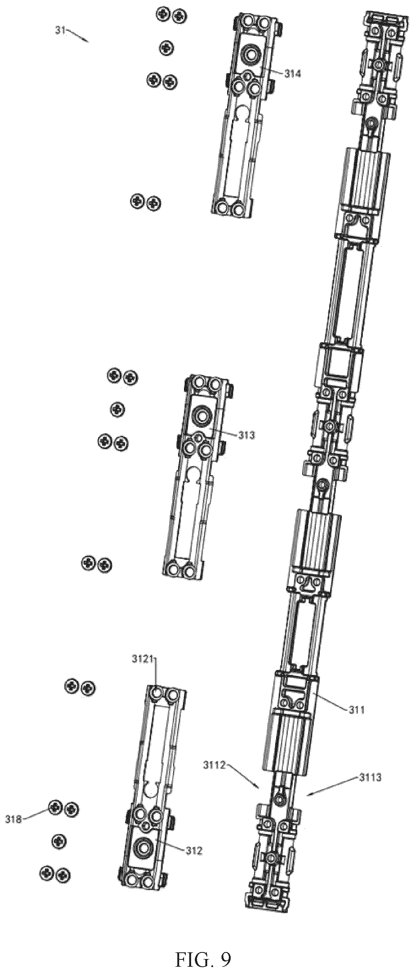

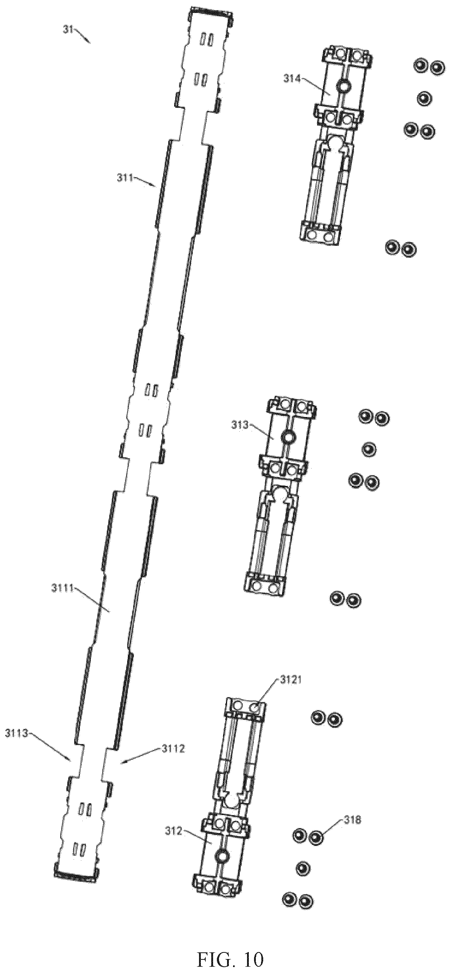

FIG. 7 is a diagram of a structure of the main shaft shown in FIG. 5. FIG. 8 is a diagram of a structure of the main shaft shown in FIG. 7 from another perspective. FIG. 9 is a diagram of an exploded structure of the main shaft shown in FIG. 7. FIG. 10 is a diagram of an exploded structure of the main shaft shown in FIG. 8. A perspective of FIG. 8 is obtained by flipping leftward/rightward a perspective of FIG. 7, and a perspective of FIG. 10 is obtained by flipping leftward/rightward a perspective of FIG. 9.

In some embodiments, the main shaft 31 includes a main inner shaft 311 and a plurality of cover bodies (312, 313, and 314). The main inner shaft 311 may be a continuous structural member, and the extension direction of the main shaft 31 corresponds to an extension direction of the main inner shaft 311. The plurality of cover bodies (312, 313, and 314) are disposed at intervals in the extension direction of the main shaft 31, and are all fastened to the main inner shaft 311. The plurality of cover bodies (312, 313, and 314) may include a bottom cover body 312, a middle cover body 313, and a top cover body 314. The bottom cover body 312 is located at a bottom of the main inner shaft 311, and accommodation space for installing the bottom connecting assembly 32 is formed between the bottom cover body 312 and the main inner shaft 311. The middle cover body 313 is located in the middle of the main inner shaft 311, and accommodation space for installing the middle connecting assembly 33 is formed between the middle cover body 313 and the main inner shaft 311. The top cover body 314 is located at the top of the main inner shaft 311, and accommodation space for installing the top connecting assembly 34 is formed between the top cover body 314 and the main inner shaft 311. It may be understood that a quantity and structures of the plurality of cover bodies (312, 313, and 314) are set in a correspondence with the plurality of connecting assemblies (32, 33, and 34).

For example, a main support face 3111 is formed on a side that is of the main inner shaft 311 and that faces away from the plurality of cover bodies (312, 313, and 314), and the main support face 3111 may provide a flat support environment in the opened state. It may be understood that the main support face 3111 of the main inner shaft 311 is the main support face 3111 of the main shaft 31. In this embodiment, the main support face 3111 is a plane, and the main support face 3111 in a plane state provides a flat support environment in the opened state for the bendable portion of the flexible display 20. In some other embodiments, the main support face 3111 may alternatively be a curved face or a plane in which a plurality of segments are connected, and is configured to support the bendable portion 202 of the flexible display 20 of different electronic devices 100 in the opened state. This is not strictly limited in this application.

The main inner shaft 311 of the main shaft 31 may be further provided with a plurality of first avoidance holes 3112, a plurality of second avoidance holes 3113, and a plurality of third avoidance holes 3114, and all avoidance holes penetrate through the main support face 3111. The plurality of first avoidance holes 3112 and the plurality of second avoidance holes 3113 are disposed away from each other on two sides of the main inner shaft 311, the plurality of third avoidance holes 3114 are disposed in the middle of the main inner shaft 311, and the first avoidance holes 3112, the second avoidance holes 3113, and the third avoidance holes 3114 are all configured to provide avoidance for the plurality of connecting assemblies (32, 33, and 34) in a process in which the foldable assembly 3 acts.

For example, the bottom cover body 312 may be approximately of a cover body structure in which a middle portion is recessed and two sides are raised. A plurality of cooperation structures are disposed on a surface that is of the bottom cover body 312 and that faces the main inner shaft 311, and the plurality of cooperation structures are configured to cooperate with the main inner shaft 311, to form accommodation space located at the bottom. The plurality of cooperation structures may include structures such as a recess, an opening, a protrusion, and a notch. In this embodiment, a fastening hole 3121 is further disposed in some protrusion structures of the bottom cover body 312, and a plurality of fasteners 318 may pass through a fastening hole 3121 of the bottom cover body 312 and penetrate into a fastening hole 3121 of the main inner shaft 311, to implement a fastening relationship between the bottom cover body 312 and the main inner shaft 311. The fastener 318 may be but is not limited to a screw, a bolt, or a rivet.

The middle cover body 313 and the top cover body 314 may be disposed with reference to the bottom cover body 312. The middle cover body 313 and the top cover body 314 are not described in this embodiment of this application.

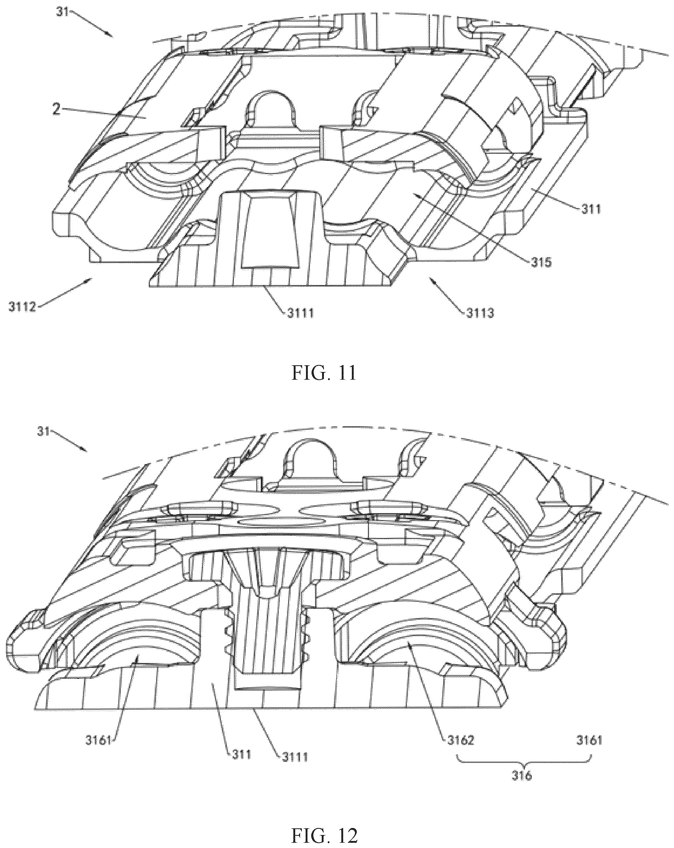

Refer to FIG. 9 and FIG. 11 together. FIG. 11 is a diagram of a cross-sectional structure after the main shaft shown in FIG. 7 is cut along a cross section A-A.

For example, first accommodation space 315 is formed between the main inner shaft 311 and the bottom cover body 312, and two ends of the first accommodation space 315 respectively communicate with spaces on two sides of the main shaft 31. The first accommodation space 315 communicates with the first avoidance hole 3112 and the second avoidance hole 3113 of the main inner shaft 311. The first accommodation space 315 is configured to install a part of a structure of the bottom connecting assembly 32.

Refer to FIG. 9 and FIG. 12 together. FIG. 12 is a diagram of a cross-sectional structure after the main shaft shown in FIG. 7 is cut along a cross section B-B.

For example, second accommodation space 316 is further formed between the main inner shaft 311 and the bottom cover body 312. The second accommodation space 316 includes first arc-shaped space 3161 and second arc-shaped space 3162. One end of the first arc-shaped space 3161 may be connected to the third avoidance hole 3114, and the other end of the first arc-shaped space 3161 communicates with space on a side that is of the main shaft 31 and on which the first avoidance hole 3112 is disposed. A center of a circle of the first arc-shaped space 3161 is located on a side that is of the main inner shaft 311 and that faces away from the bottom cover body 312. One end of the second arc-shaped space 3162 may be connected to another third avoidance hole 3114, and the other end of the second arc-shaped space 3162 communicates with space on a side that is of the main shaft 31 and on which the second avoidance hole 3113 is disposed. A center of a circle of the second arc-shaped space 3162 is located on a side that is of the main inner shaft 311 and that faces away from the bottom cover body 312. The second accommodation space 316 is configured to install another part of the structure of the bottom connecting assembly 32.

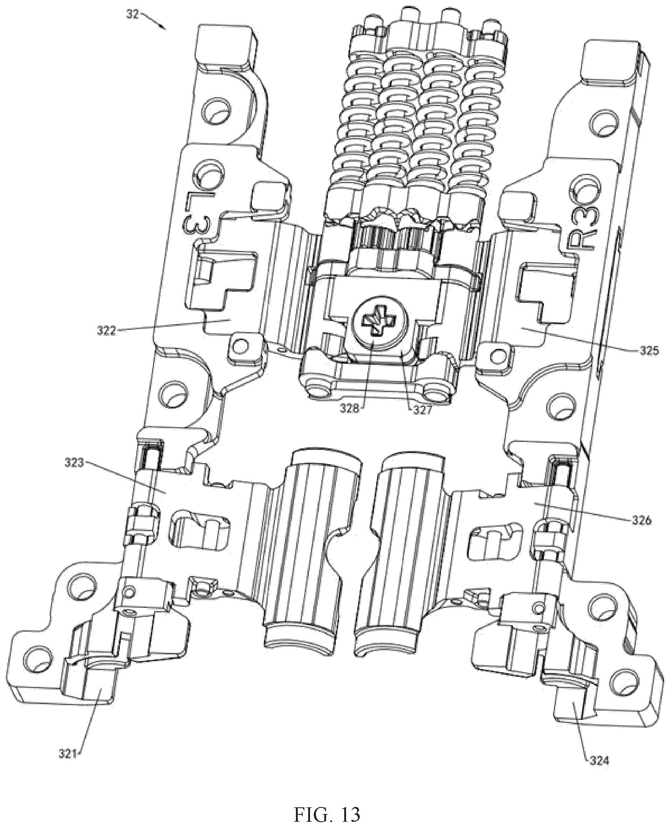

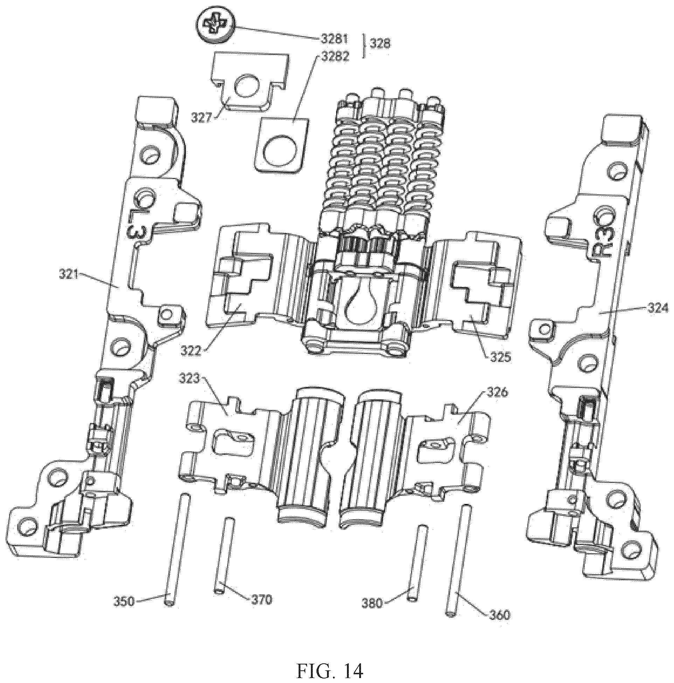

FIG. 13 is a diagram of a structure of a bottom connecting assembly shown in FIG. 5. FIG. 14 is a diagram of a partial exploded structure of the bottom connecting assembly shown in FIG. 13.

In some embodiments, the bottom connecting assembly 32 includes a first fastening bracket 321, a first swing arm 322, a first rotating arm 323, a second fastening bracket 324, a second swing arm 325, a second rotating arm 326, a stop block 327, and an adjustment assembly 328. The bottom connecting assembly 32 may further include a plurality of rotating shafts (350, 360, 370, and 380), and the plurality of rotating shafts (350, 360, 370, and 380) are configured to be inserted into another component of the bottom connecting assembly 32, so that components are connected. The bottom connecting assembly 32 may include a control mechanism, the control mechanism includes the first swing arm 322 and the second swing arm 325, and the control mechanism may be of a modular structure, to simplify an assembly process of the foldable assembly 3. The adjustment assembly 328 may include a limiting member 3281 and an elastic member 3282.

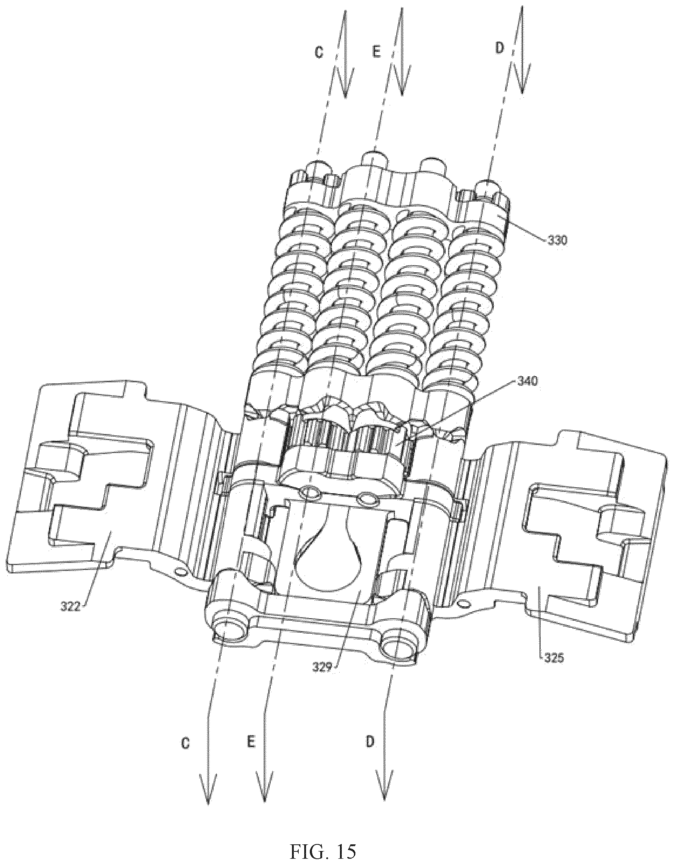

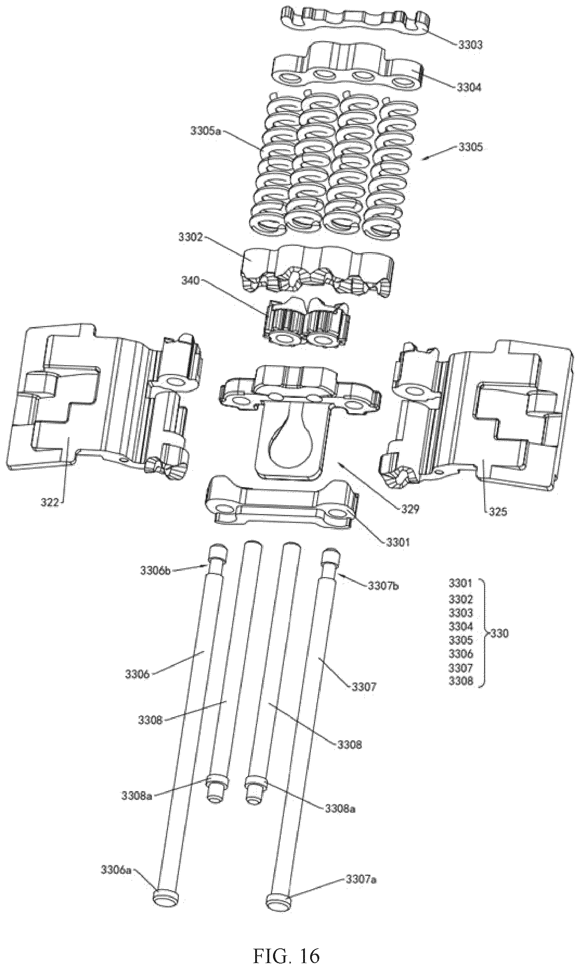

FIG. 15 is a diagram of a partial structure of the control mechanism shown in FIG. 14. FIG. 16 is a diagram of an exploded structure of the structure shown in FIG. 15.

In some embodiments, the control mechanism further includes a clamping member 329, a damping assembly 330, and a synchronous gear 340. The damping assembly 330 includes a first clamping block 3301, a second clamping block 3302, a fastening board 3303, a limiting block 3304, an elastic component 3305, a first rotating shaft 3306, a second rotating shaft 3307, and a plurality of third rotating shafts 3308. The control mechanism is inserted into another component by using the first rotating shaft 3306, the second rotating shaft 3307, and the plurality of third rotating shaft 3308, to form the modular structure.

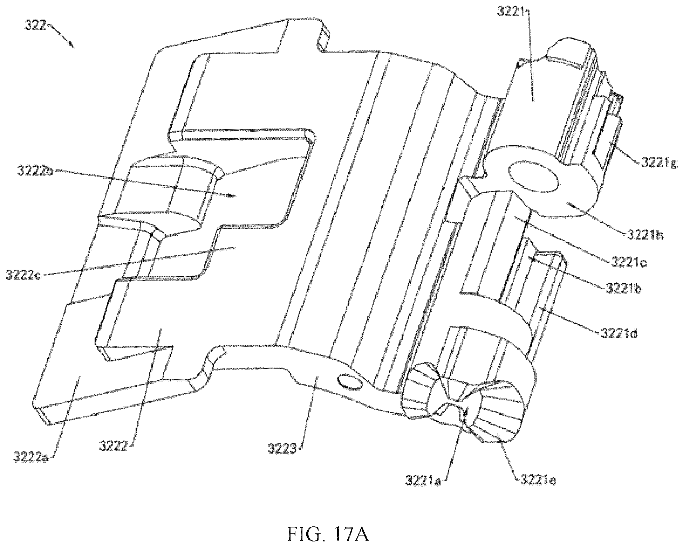

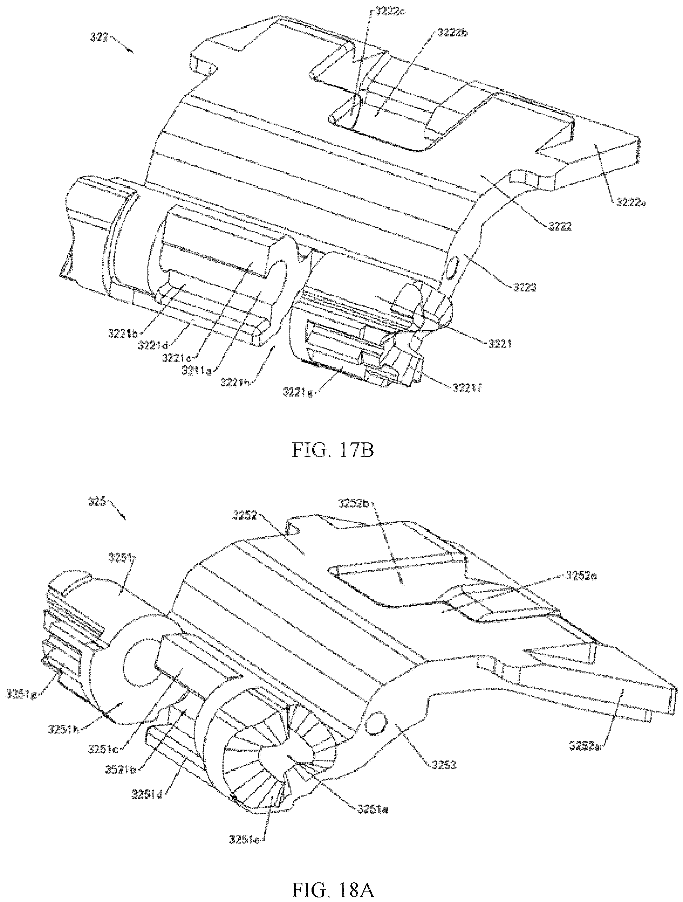

FIG. 17A is a diagram of a structure of the first swing arm shown in FIG. 14. FIG. 17B is a diagram of a structure of the first swing arm shown in FIG. 17A from another perspective.

For example, the first swing arm 322 may include a first end portion 3221 and a second end portion 3222. The first end portion 3221 of the first swing arm 322 is provided with a rotating shaft hole 3221a, and the rotating shaft hole 3221a penetrates through two ends of the first end portion 3221 of the first swing arm 322.

The first end portion 3221 of the first swing arm 322 is further provided with first avoidance space 3221b. The first avoidance space 3221b is located in a middle portion of the first end portion 3221 of the first swing arm 322. The first avoidance space 3221b may communicate with the rotating shaft hole 3221a, so that the middle portion of the first end portion 3221 is approximately in a C-shaped structure. The first swing arm 322 further includes a first stop end face 3221c, and the first stop end face 3221c is formed on a wall face of the first avoidance space 3221b.

For example, the first end portion 3221 of the first swing arm 322 is further provided with a first compensation block 3221d. The first compensation block 3221d may be disposed close to the first avoidance space 3221b. For example, the first compensation block 3221d may form a part of the wall face of the first avoidance space 3221b. The first compensation block 3221d and the first stop end face 3221c may be disposed at an interval. For example, the first compensation block 3221d and the first stop end face 3221c may be respectively formed at two ends of the C-shaped structure.

The first end portion 3221 of the first swing arm 322 is further provided with a structure cooperating with the damping assembly 330. For example, the first end portion 3221 of the first swing arm 322 may include a plurality of first protrusions 3221e, a plurality of second protrusions 3221f, and a plurality of engagement teeth 2111g. The plurality of first protrusions 3221e and the plurality of second protrusions 3221f are disposed away from each other at the two ends of the first end portion 3221 of the first swing arm 322, the plurality of first protrusions 3221e are arranged in an annular shape and are spaced apart from each other, the plurality of first protrusions 3221e are disposed around the rotating shaft hole 3221a of the first end portion 3221 of the first swing arm 322, the plurality of second protrusions 3221f are arranged in an annular shape and are spaced apart from each other, and the plurality of second protrusions 3221f are disposed around the rotating shaft hole 3221a of the first end portion 3221 of the first swing arm 322. The plurality of engagement teeth 2111g are located on a side face of the first end portion 3221 of the first swing arm 322, for example, may be located between the second protrusion 3221f and the first avoidance space 3221b.

In some embodiments, the first end portion 3221 of the first swing arm 322 is further provided with a first limiting groove 3221h, and the first limiting groove 3221h communicates with the rotating shaft hole 3221a. In this embodiment, the first limiting groove 3221h may be located between the first avoidance space 3221b and the plurality of engagement teeth 2111g. In some other embodiments, the first limiting groove 3221h may alternatively be located between the first avoidance space 3221b and the plurality of first protrusions 3221e, or may be located at another location.

For example, the second end portion 3222 of the first swing arm 322 includes a sliding block 3222a, and the sliding block 3222a may protrude at two ends of the second end portion 3222 of the first swing arm 322. For example, the second end portion 3222 of the first swing arm 322 may be further provided with a through hole 3222b, and the through hole 3222b may reduce a weight of the first swing arm 322, so that the foldable apparatus 10 is lightweight. The second end portion 3222 of the first swing arm 322 is further provided with a protrusion 3222c, and the protrusion 3222c is located at an edge of the through hole 3222b, to form a part of a wall face of the through hole 3222b.

The first swing arm 322 further includes a connecting portion 3223 connected to the first end portion 3221 and the second end portion 3222. For example, the connecting portion 3223 of the first swing arm 322 may be bent relative to the first end portion 3221 of the first swing arm 322, so that a structure design of the first swing arm 322 is more flexible, and a connecting requirement and a shape requirement of the bottom connecting assembly 32 and the foldable assembly 3 can be better met.

The first swing arm 322 may be an integral structural member, to have high structural strength. For example, the first swing arm 322 may be formed by using a metal injection process or another process. This is not strictly limited in this application.

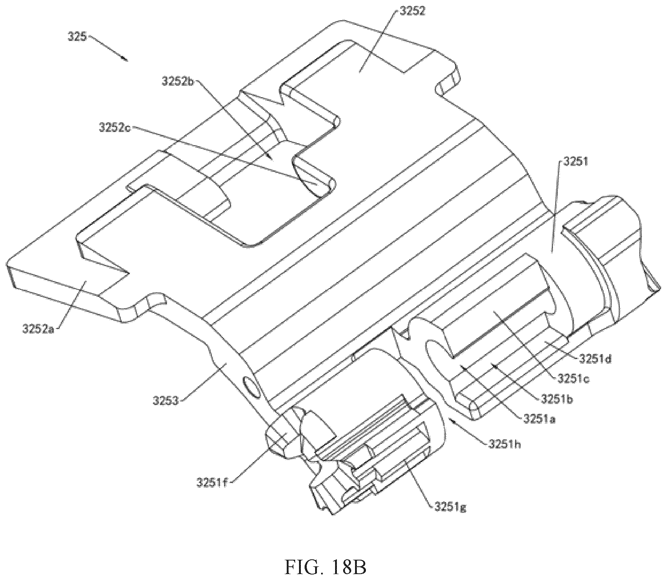

FIG. 18A is a diagram of a structure of the second swing arm shown in FIG. 14. FIG. 18B is a diagram of a structure of the second swing arm shown in FIG. 18A from another perspective.

For example, the second swing arm 325 may include a first end portion 3251 and a second end portion 3252. The first end portion 3251 of the second swing arm 325 is provided with a rotating shaft hole 3251a, and the rotating shaft hole 3251a penetrates through two ends of the first end portion 3251 of the second swing arm 325.

The first end portion 3251 of the second swing arm 325 is further provided with second avoidance space 3251b. The second avoidance space 3251b is located in a middle portion of the first end portion 3251 of the second swing arm 325. The second avoidance space 3251b may communicate with the rotating shaft hole 3251a, so that the middle portion of the first end portion 3251 is approximately in a C shape. The second swing arm 325 further includes a second stop end face 3251c, and the second stop end face 3251c is formed on a wall face of the second avoidance space 3251b.

For example, the first end portion 3251 of the second swing arm 325 is further provided with a second compensation block 3251d. The second compensation block 3251d may be disposed close to the second avoidance space 3251b. For example, the second compensation block 3251d may form a part of the wall face of the second avoidance space 3251b. The second compensation block 3251d and the second stop end face 3251c may be disposed at an interval. For example, the second compensation block 3251d and the second stop end face 3251c may be respectively formed at two ends of the C-shaped structure.

The first end portion 3251 of the second swing arm 325 is further provided with a structure cooperating with the damping assembly 330. For example, the first end portion 3251 of the second swing arm 325 may include a plurality of first protrusions 3251e, a plurality of second protrusions 3251f, and a plurality of engagement teeth 3251g. The plurality of first protrusions 3251e and the plurality of second protrusions 3251f are disposed away from each other at the two ends of the first end portion 3251 of the second swing arm 325, the plurality of first protrusions 3251e are arranged in an annular shape and are spaced apart from each other, the plurality of first protrusions 3251e are disposed around the rotating shaft hole 3251a of the first end portion 3251 of the second swing arm 325, the plurality of second protrusions 3251f are arranged in an annular shape and are spaced apart from each other, and the plurality of second protrusions 3251f are disposed around the rotating shaft hole 3251a of the first end portion 3251 of the second swing arm 325. The plurality of engagement teeth 3251g are located on a side face of the first end portion 3251 of the second swing arm 325, for example, may be located between the second protrusion 3251f and the second avoidance space 3251b.

In some embodiments, the first end portion 3251 of the second swing arm 325 is further provided with a second limiting groove 3251h, and the second limiting groove 3251h communicates with the rotating shaft hole 3251a. In this embodiment, the second limiting groove 3251h may be located between the second avoidance space 3251b and the plurality of engagement teeth 3251g. In some other embodiments, the second limiting groove 3251h may alternatively be located between the second avoidance space 3251b and the plurality of first protrusions 3251e, or may be located at another location.

For example, the second end portion 3252 of the second swing arm 325 includes a sliding block 3252a, and the sliding block 3252a may protrude at two ends of the second end portion 3252 of the second swing arm 325. For example, the second end portion 3252 of the second swing arm 325 may be further provided with a through hole 3252b, and the through hole 3252b may reduce a weight of the second swing arm 325, so that the foldable apparatus 10 is lightweight. The second end portion 3252 of the second swing arm 325 is further provided with a protrusion 3252c, and the protrusion 3252c is located at an edge of the through hole 3252b, to form a part of a wall face of the through hole 3252b.

The second swing arm 325 further includes a connecting portion 3253 connected to the first end portion 3251 and the second end portion 3252. For example, the connecting portion 3253 of the second swing arm 325 may be bent relative to the first end portion 3251 of the second swing arm 325, so that a structure design of the second swing arm 325 is more flexible, and a connecting requirement and a shape requirement of the bottom connecting assembly 32 and the foldable assembly 3 can be better met.

The second swing arm 325 may be an integral structural member, to have high structural strength. For example, the second swing arm 325 may be formed by using a metal injection process or another process. This is not strictly limited in this application.

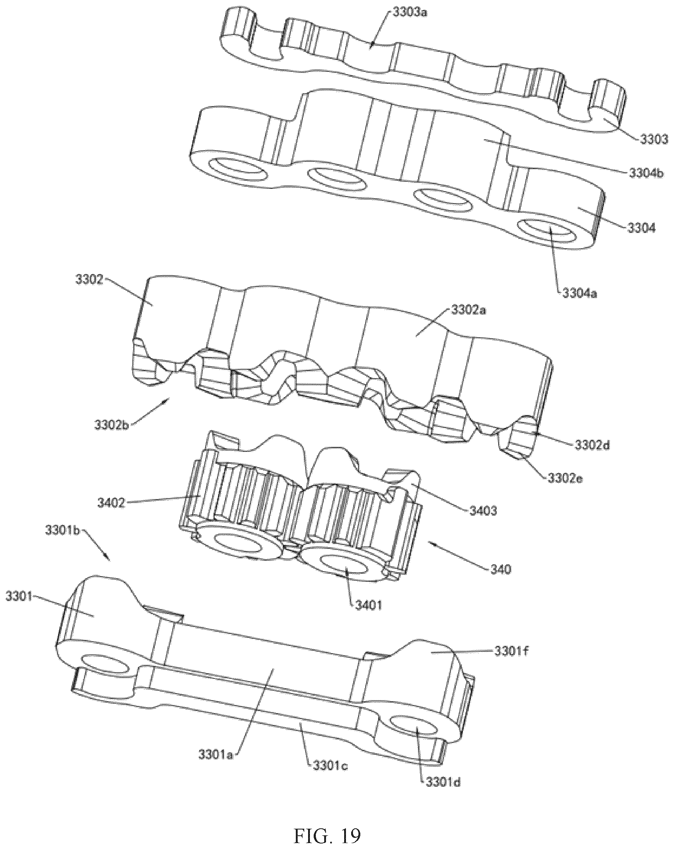

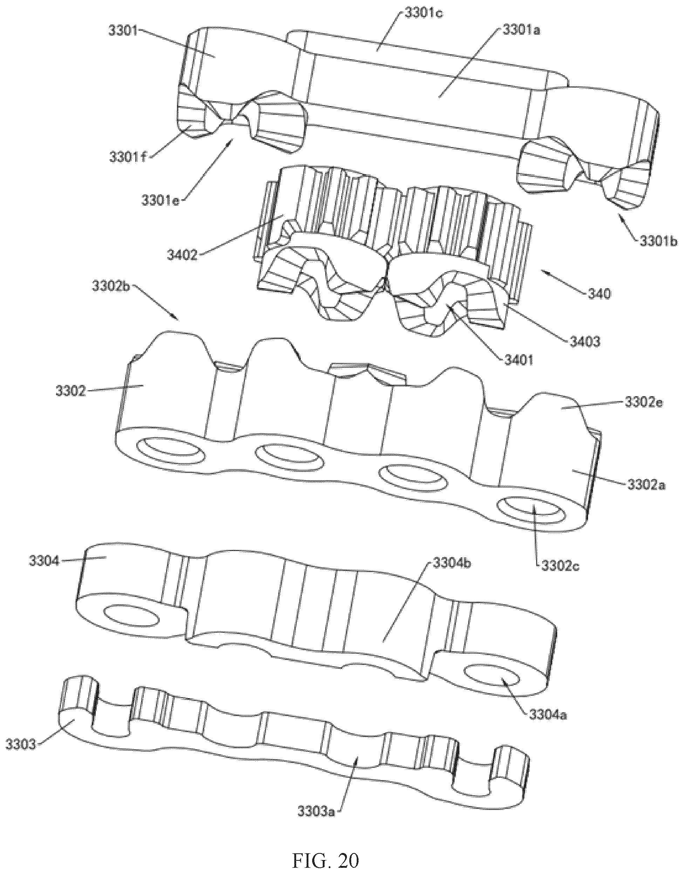

FIG. 19 is a diagram of a partial structure of the control mechanism shown in FIG. 16. FIG. 20 is a diagram of a structure of the structure shown in FIG. 19 from another perspective.

For example, the plurality of synchronous gears 340 are engaged with each other, and each synchronous gear 340 is provided with a rotating shaft hole 3401. Each synchronous gear 340 includes a plurality of engagement teeth 3402 and a plurality of third protrusions 3403. The plurality of engagement teeth 3402 may be located at one end of the synchronous gear 340, and are disposed around the rotating shaft hole 3401, and a plurality of engagement teeth 3402 of two adjacent synchronous gears 340 are engaged with each other. The plurality of third protrusions 3403 are located at the other end of the synchronous gear 340, and the plurality of third protrusions 3403 are arranged around the rotating shaft hole 3401 and are spaced apart from each other. In this embodiment, "there are two synchronous gears 340" is used as examples for illustration.

For example, the first clamping block 3301 includes a first clamping plate 3301a, two first protruding block groups 3301b, and a first tray 3301c. The first clamping plate 3301a includes two first through holes 3301d, and the two first through holes 3301d are disposed at an interval. The two first protruding block groups 3301b are fastened on one side of the first clamping plate 3301a, and the two first protruding block groups 3301b are respectively disposed in a correspondence with the two first through holes 3301d. Each first protruding block group 3301b may include a plurality of first protruding blocks 3301f, the plurality of first protruding blocks 3301f are arranged in an annular shape and are spaced apart from each other, the plurality of first protruding blocks 3301f are disposed around a corresponding first through hole 3301d, and a first clamping slot 3301e is formed between two adjacent first protruding blocks 3301f. The first tray 3301c is fastened to a side that is of the first clamping plate 3301a and that faces away from the two first protruding block groups 3301b. The first tray 3301c can increase structural strength of the first clamping plate 3301a. The first clamping block 3301 may be an integral structural member, to have high structural strength.

For example, the second clamping block 3302 includes a second clamping plate 3302a and a plurality of second protruding block groups 3302b, and the plurality of second protruding block groups 3302b are fastened on a surface of a same side of the second clamping plate 3302a. The second clamping plate 3302a includes a plurality of second through holes 3302c, the plurality of second through holes 3302c are disposed at intervals, and the plurality of second through holes 3302c are disposed in a one-to-one correspondence with the plurality of second protruding block groups 3302b. There may be four second through holes 3302c and four second protruding block groups 3302b. Each second protruding block group 3302b may include a plurality of second protruding blocks 3302e, the plurality of second protruding blocks 3302e are arranged in an annular shape and are spaced apart from each other, the plurality of second protruding blocks 3302e are disposed around a corresponding second through hole 3302c, and a second clamping slot 3302d is formed between two adjacent second protruding blocks 3302e. The second clamping block 3302 may be an integral structural member, to have high structural strength.

For example, the fastening board 3303 includes a plurality of clamping slots 3303a that are spaced apart from each other, and the clamping slot 3303a forms an opening on a side of the fastening board 3303, so that another component may be clamped into the clamping slot 3303a through the opening. The fastening board 3303 may be approximately in a plate shape.

For example, the limiting block 3304 is provided with a plurality of third through holes 3304a, and the plurality of third through holes 3304a are spaced apart from each other. The limiting block 3304 may be further provided with a protruding block 3304b, and the protruding block 3304b protrudes on a side of the limiting block 3304.

Refer to FIG. 16 again. For example, the elastic component 3305 includes a plurality of springs 3305a. In this embodiment, descriptions are provided by using an example in which the elastic component 3305 includes four springs 3305a. In some other embodiments, the elastic component 3305 may alternatively be of an elastic material such as an elastic rubber. This is not strictly limited in this application.

For example, an end of the first rotating shaft 3306 is provided with a limiting cam 3306a, and an outer diameter of the limiting cam 3306a is greater than an outer diameter of a main body portion of the first rotating shaft 3306. The other end of the first rotating shaft 3306 is provided with a limiting clamping slot 3306b, the limiting clamping slot 3306b contracts inward relative to an outer surface of the main body portion of the first rotating shaft 3306, and a diameter of a slot bottom wall of the limiting clamping slot 3306b is less than the outer diameter of the main body portion of the first rotating shaft 3306.

An end of the second rotating shaft 3307 is provided with a limiting cam 3307a, and an outer diameter of the limiting cam 3307a is greater than an outer diameter of a main body portion of the second rotating shaft 3307. The other end of the second rotating shaft 3307 is provided with a limiting clamping slot 3307b, the limiting clamping slot 3307b contracts inward relative to an outer surface of the main body portion of the second rotating shaft 3307, and a diameter of a slot bottom wall of the limiting clamping slot 3307b is less than the outer diameter of the main body portion of the second rotating shaft 3307.

The third rotating shaft 3308 is provided with a limiting cam 3308a, the limiting cam 3308a is disposed close to an end portion of the third rotating shaft 3308, and an outer diameter of the limiting cam 3308a is greater than an outer diameter of a main body portion of the third rotating shaft 3308.

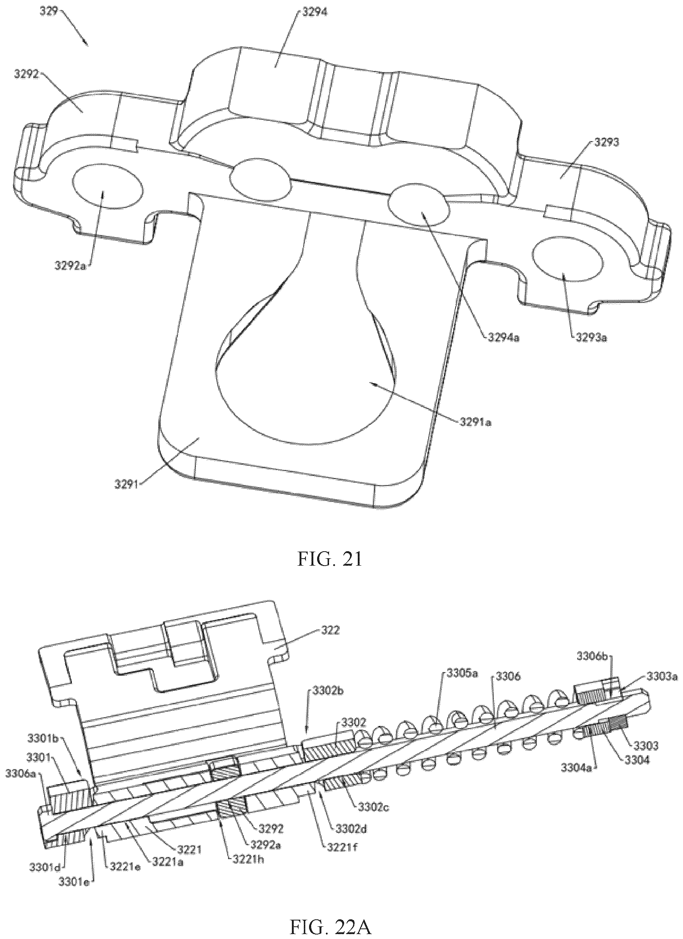

FIG. 21 is a diagram of a structure of the clamping member shown in FIG. 15.

In some embodiments, the clamping member 329 may include a fastening portion 3291, a first clamping portion 3292, a second clamping portion 3293, and a third clamping portion 3294. The fastening portion 3291 may be provided with a through hole 3291a. The fastening portion 3291 may be approximately in a plate shape. The first clamping portion 3292 and the second clamping portion 3293 are respectively fastened on two sides of the fastening portion 3291. The first clamping portion 3292 is provided with a first through hole 3292a, and the second clamping portion 3293 is provided with a second through hole 3293a. The third clamping portion 3294 is fastened between the first clamping portion 3292 and the second clamping portion 3293, the third clamping portion 3294 may be further fastened to the fastening portion 3291, and the third clamping portion 3294 is configured to increase structural strength of the clamping member 329. The third clamping portion 3294 is provided with a plurality of third through holes 3294a. An overall structure of the first clamping portion 3292, the third clamping portion 3294, and the second clamping portion 3293 may be approximately in a plate shape, and the overall structure is bent relative to the fastening portion 3291.

It should be noted that in this embodiment, the clamping member 329 is an integral structure, and the integral clamping member 329 has high structural strength and good stability. For example, the clamping member 329 may be formed by using a metal injection forming process, or may be formed by using another process. In some other embodiments, the first clamping portion 3292, the second clamping portion 3293, the third clamping portion 3294, and the fastening portion 3291 may alternatively be separately formed and then fastened. This is not strictly limited in this application.

It may be understood that, in this embodiment, the first clamping portion 3292 and the second clamping portion 3293 of the clamping member 329 are fastened to the fastening portion 3291 by using the third clamping portion 3294. In some other embodiments, in the clamping member 329, the third clamping portion 3294 may alternatively not be used, and the first clamping portion 3292 and the second clamping portion 3293 are directly fastened to the fastening portion 3291.

Refer to FIG. 15 to FIG. 21 again. For example, the first clamping block 3301 and the second clamping block 3302 are disposed at an interval, and the plurality of first protruding block groups 3301b of the first clamping block 3301 face the plurality of second protruding block groups 3302b of the second clamping block 3302. The first swing arm 322, the second swing arm 325, and the plurality of synchronous gears 340 are all located between the first clamping block 3301 and the second clamping block 3302. The plurality of first protrusions 3221e of the first swing arm 322 are disposed to face the first clamping block 3301, the plurality of second protrusions 3221f of the first swing arm 322 are disposed to face the second clamping block 3302, the plurality of first protrusions 3251e of the second swing arm 325 are disposed to face the first clamping block 3301, the plurality of second protrusions 3251f of the second swing arm 325 are disposed to face the second clamping block 3302, and the plurality of third protrusions 3403 of the plurality of synchronous gears 340 are disposed to face the second clamping block 3302. The first end portion 3221 of the first swing arm 322 is indirectly engaged with the first end portion 3251 of the second swing arm 325 by using the plurality of synchronous gears 340. Two synchronous gears 340 are engaged with each other through respective engagement teeth 3402, and the two synchronous gears 340 are respectively engaged with the first end portion 3221 of the first swing arm 322 and the first end portion 3251 of the second swing arm 325.

For example, the clamping member 329 is located between the first swing arm 322 and the second swing arm 325, and the clamping member 329 is located between the first clamping block 3301 and the plurality of synchronous gears 340. The fastening portion 3291 of the clamping member 329 is located between the first clamping block 3301 and the third clamping portion 3294 of the clamping member 329. The first clamping portion 3292 of the clamping member 329 clamps the first end portion 3221 of the first swing arm 322, and the second clamping portion 3293 clamps the first end portion 3251 of the second swing arm 325.

For example, the fastening board 3303 is located on a side that is of the second clamping block 3302 and that faces away from the first clamping block 3301, and the limiting block 3304 is located between the second clamping block 3302 and the fastening board 3303. The elastic component 3305 is located between the limiting block 3304 and the second clamping block 3302.

The first rotating shaft 3306, the second rotating shaft 3307, and two third rotating shafts 3308 are inserted into the foregoing plurality of components, so that the control mechanism forms the modular structure. Details are as follows:

Refer to FIG. 19, FIG. 20, and FIG. 22A together. FIG. 22A is a diagram of a cross-sectional structure after the control mechanism shown in FIG. 15 is cut along a cross section C-C. In some embodiments, the first clamping portion 3292 of the clamping member 329 is clamped into the first limiting groove 3221h of the first end portion 3221 of the first swing arm 322, to implement a clamping relationship between the clamping member 329 and the first swing arm 322. The first rotating shaft 3306 is inserted into the first clamping block 3301, the first end portion 3221 of the first swing arm 322, the first clamping portion 3292 of the clamping member 329, the second clamping block 3302, one spring 3305a, the limiting block 3304, and the fastening board 3303. The first rotating shaft 3306 passes through one first through hole 3301d of the first clamping block 3301, the rotating shaft hole 3221a of the first end portion 3221 of the first swing arm 322, the first through hole 3292a of the first clamping portion 3292 of the clamping member 329, one second through hole 3302c of the second clamping block 3302, inner space of one spring 3305a, one third through hole 3304a of the limiting block 3304, and one clamping slot 3303a of the fastening board 3303. The plurality of first protrusions 3221e of the first end portion 3221 of the first swing arm 322 are disposed in a correspondence with one first protruding block group 3301b of the first clamping block 3301, and the plurality of second protrusions 3221f of the first end portion 3221 of the first swing arm 322 are disposed in a correspondence with one second protruding block group 3302b of the second clamping block 3302.

The spring 3305a is in a compressed state, the limiting cam 3306a of the first rotating shaft 3306 is located on a side that is of the first clamping block 3301 and that faces away from the second clamping block 3302, and abuts against the first clamping block 3301, the fastening board 3303 is partially clamped into the limiting clamping slot 3306b of the first rotating shaft 3306, and the fastening board 3303 abuts against a sidewall of the limiting clamping slot 3306b of the first rotating shaft 3306. One end of the spring 3305a abuts against the limiting block 3304, the limiting block 3304 abuts against the fastening board 3303, the fastening board 3303 abuts against the sidewall of the limiting clamping slot 3306b of the first rotating shaft 3306, the limiting cam 3306a of the first rotating shaft 3306 abuts against the first clamping block 3301, and the other end of the spring 3305a abuts against the second clamping block 3302, so that the first clamping block 3301 and the second clamping block 3302 tend to approach each other. In this case, one first protruding block group 3301b of the first clamping block 3301 abuts against the plurality of first protrusions 3221e of the first swing arm 322, and one second protruding block group 3302b of the second clamping block 3302 abuts against the plurality of second protrusions 3221f of the first swing arm 322.

In some states, the plurality of first protrusions 3221e of the first swing arm 322 and a plurality of first protruding blocks 3301f of a first protruding block group 3301b of the first clamping block 3301 are interleaved to form a clamping structure, and the plurality of first protrusions 3221e are correspondingly clamped into the plurality of first clamping slots 3301e of the first protruding block group 3301b; and the plurality of second protrusions 3221f of the first swing arm 322 and a plurality of second protruding blocks 3302e of a second protruding block group 3302b of the second clamping block 3302 are interleaved to form a clamping structure, and the plurality of second protrusions 3221f are correspondingly clamped into the plurality of second clamping slots 3302d of the second protruding block group 3302b.

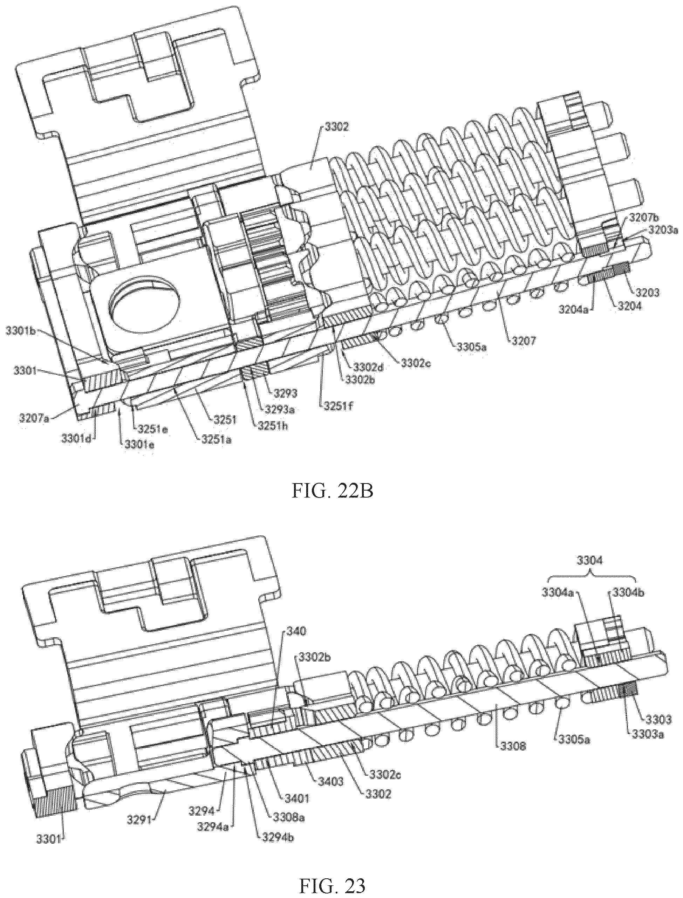

Refer to FIG. 19, FIG. 20, and FIG. 22B together. FIG. 22B is a diagram of a cross-sectional structure after the control mechanism shown in FIG. 15 is cut along a cross section D-D.

In some embodiments, the second clamping portion 3293 of the clamping member 329 is clamped into the second limiting groove 3251h of the first end portion 3251 of the second swing arm 325, to implement a clamping relationship between the clamping member 329 and the second swing arm 325. The second rotating shaft 3307 is inserted into the first clamping block 3301, the first end portion 3251 of the second swing arm 325, the second clamping portion 3293 of the clamping member 329, the second clamping block 3302, another spring 3305a, the limiting block 3304, and the fastening board 3303. The second rotating shaft 3307 passes through another first through hole 3301d of the first clamping block 3301, the rotating shaft hole 3251a of the first end portion 3251 of the second swing arm 325, the second through hole 3293a of the second clamping portion 3293 of the clamping member 329, another second through hole 3302c of the second clamping block 3302, inner space of the other spring 3305a, another third through hole 3304a of the limiting block 3304, and another clamping slot 3303a of the fastening board 3303. The plurality of first protrusions 3251e of the first end portion 3251 of the second swing arm 325 are disposed in a correspondence with another first protruding block group 3301b of the first clamping block 3301, and the plurality of second protrusions 3251f of the first end portion 3251 of the second swing arm 325 are disposed in a correspondence with another second protruding block group 3302b of the second clamping block 3302.

The spring 3305a is in a compressed state, the limiting cam 3307a of the second rotating shaft 3307 is located on a side that is of the first clamping block 3301 and that faces away from the second clamping block 3302, and abuts against the first clamping block 3301, the fastening board 3303 is partially clamped into the limiting clamping slot 3307b of the second rotating shaft 3307, and the fastening board 3303 abuts against a sidewall of the limiting clamping slot 3307b of the second rotating shaft 3307. One end of the spring 3305a abuts against the limiting block 3304, the limiting block 3304 abuts against the fastening board 3303, the fastening board 3303 abuts against the sidewall of the limiting clamping slot 3307b of the second rotating shaft 3307, the limiting cam 3307a of the second rotating shaft 3307 abuts against the first clamping block 3301, and the other end of the spring 3305a abuts against the second clamping block 3302, so that the first clamping block 3301 and the second clamping block 3302 tend to approach each other. In this case, another first protruding block group 3301b of the first clamping block 3301 abuts against the plurality of first protrusions 3251e of the second swing arm 325, and another second protruding block group 3302b of the second clamping block 3302 abuts against the plurality of second protrusions 3251f of the second swing arm 325.

In some states, the plurality of first protrusions 3251e of the second swing arm 325 and a plurality of first protruding blocks 3301f of another first protruding block group 3301b of the first clamping block 3301 are interleaved to form a clamping structure, and the plurality of first protrusions 3251e are correspondingly clamped into a plurality of first clamping slots 3301e of the another first protruding block group 3301b; and the plurality of second protrusions 3251f of the second swing arm 325 and a plurality of second protruding blocks 3302e of another second protruding block group 3302b of the second clamping block 3302 are interleaved to form a clamping structure, and the plurality of second protrusions 3251f are correspondingly clamped into the plurality of second clamping slots 3302d of the another second protruding block group 3302b.

In this embodiment, the elastic component 3305 is configured to generate an elastic force, so that the first end portion 3221 of the first swing arm 322 and the first end portion 3251 of the second swing arm 325 both abut against the first clamping block 3301 and the second clamping block 3301, the plurality of first protrusions 3221e of the first swing arm 322 cooperate with one first protruding block group 3301b to form a clamping structure, the plurality of second protrusions 3221f of the first swing arm 322 cooperate with one second protruding block group 3302b to form a clamping structure, the plurality of first protrusions 3251e of the second swing arm 325 cooperate with another first protruding block group 3301b to form a clamping structure, and the plurality of second protrusions 3251f of the second swing arm 325 cooperate with another second protruding block group 3302b to form a clamping structure.

In this embodiment, two first protruding block groups 3301b that are of the first clamping block 3301 and that are located at an end portion are disposed in a correspondence with second protruding block groups 3302b that are of the second clamping block 3302 and that are located at an end portion. In a first protruding block group 3301b and a second protruding block group 3302b that are correspondingly disposed, a location of a first protruding block 3301f may be directly opposite to a location of a second protruding block 3302e, and a location of a first clamping slot 3301e may be directly opposite to a location of a second clamping slot 3302d. In some other embodiments, the location of the first protruding block 3301f and the location of the second protruding block 3302e may alternatively be staggered or have another location relationship, and the location of the first clamping slot 3301e and the location of the second clamping slot 3302d may alternatively be staggered or have another location relationship. This is not strictly limited in this application.

Refer to FIG. 19, FIG. 20, and FIG. 23. FIG. 23 is a diagram of a cross-sectional structure after the control mechanism shown in FIG. 15 is cut along a cross section E-E.

For example, the third rotating shaft 3308 is inserted into the clamping member 329, one synchronous gear 340, the second clamping block 3302, another spring 3305a, the limiting block 3304, and the fastening board 3303. The third rotating shaft 3308 sequentially passes through the third through hole 3294a of the third clamping portion 3294 of the clamping member 329, the rotating shaft hole 3401 of one synchronous gear 340, another second through hole 3302c of the second clamping block 3302, inner space of another spring 3305a, another third through hole 3304a of the limiting block 3304, and another clamping slot 3303a of the fastening board 3303.

In some embodiments, the third clamping portion 3294 of the clamping member 329 may be further provided with a sunk slot 3294b, the sunk slot 3294b communicate with the third through hole 3294a of the third clamping portion 3294, and a slot opening of the sunk slot 3294b is formed on an end face that is of the third clamping portion 3294 and that faces away from the fastening portion 3291. The limiting cam 3308a of the third rotating shaft 3308 may be partially or completely located in the sunk slot 3294b of the third clamping portion 3294.

The spring 3305a may be in the compressed state, one side face of the limiting cam 3308a of the third rotating shaft 3308 may be disposed in abutment against a bottom wall of the sunk slot 3294b of the third clamping portion 3294, and the other side face of the limiting cam 3308a of the third rotating shaft 3308 may also abut against one synchronous gear 340. Because the second clamping block 3302 tends to approach the first clamping block 3301, one second protruding block group 3302b of the second clamping block 3302 abuts against the plurality of third protrusions 3403 of the synchronous gear 340, to form a clamping structure.

For example, the protruding block 3304b of the limiting block 3304 covers a clamping slot 3304a that is disposed in the fastening board 3303 and that is used to install the third rotating shaft 3308, to prevent an end portion of the third rotating shaft 3308 from being raised, and increase stability of the damping assembly 330. In some other embodiments, the protruding block 3304b of the limiting block 3304 may also cover another clamping slot 3303a that is in the fastening board 3303 and that is used to install the first rotating shaft 3306 and/or the second rotating shaft 3307. This is not strictly limited in this application.

In this embodiment, a quantity of third rotating shafts 3308 is the same as a quantity of synchronous gears 340, and the second clamping block 3302 is provided with a corresponding second through hole 3302c used to insert the third rotating shaft 3308; the limiting block 3304 is provided with a corresponding third through hole 3304a used to insert the third rotating shaft 3308; and the fastening board 3303 is provided with a corresponding through hole 3303a used to insert the third rotating shaft 3308. It may be understood that, in some other embodiments, the third rotating shaft 3308 may not be disposed, and the plurality of synchronous gears 340 are rotatably connected to the clamping member 329 by using a pin shaft or another structure. This is not strictly limited in this application.

Refer to FIG. 22A, FIG. 22B, and FIG. 23. Under an action of an elastic force of the elastic component 3305 and a cooperation action of structures of all components, an entire control mechanism forms a modular whole, and the first swing arm 322 and the second swing arm 325 can rotate relative to each other.

For example, when the first swing arm 322 and the second swing arm 325 rotate relative to each other, for the clamping structure between the plurality of first protrusions 3221e of the first end portion 3221 of the first swing arm 322 and the corresponding first protruding block group 3301b, the first protrusion 3221e is detached from one first clamping slot 3301e, crosses one first protruding block 3301f, and is clamped into another adjacent first clamping slot 3301e; and for a clamping structure between the plurality of second protrusions 3221f of the first end portion 3221 of the first swing arm 322 and the corresponding second protruding block group 3302b, the second protrusion 3221f is detached from one second clamping slot 3302d, crosses one second protruding block 3302e, and is clamped into another adjacent second clamping slot 3302d. In this process, the first end portion 3221 of the first swing arm 322 pushes the second clamping block 3302 to move toward the fastener, and pushes the first clamping block 3301 to move away from the clamping member 329, and the elastic component 3305 is compressed, to generate a partial damping force and a partial push force. Similarly, when the first swing arm 322 and the second swing arm 325 rotate relative to each other, for the clamping structure between the plurality of first protrusions 3251e of the first end portion 3251 of the second swing arm 325 and the corresponding first protruding block group 3301b, the first protrusion 3251e is detached from one first clamping slot 3301e, crosses one first protruding block 3301f, and is clamped into another adjacent first clamping slot 3301e; and for a clamping structure between the plurality of second protrusions 3251f of the first end portion 3251 of the second swing arm 325 and the corresponding second protruding block group 3302b, the second protrusion 3251f is detached from one second clamping slot 3302d, crosses one second protruding block 3302e, and is clamped into another adjacent second clamping slot 3302d. In this process, the first end portion 3251 of the second swing arm 325 pushes the second clamping block 3302 to move toward the clamping member 329, and the elastic component 3305 is compressed, to generate another partial damping force and another partial push force.

Because the synchronous gear 340 is engaged with the first end portion 3221 of the first swing arm 322 and the first end portion 3251 of the second swing arm 325, when the first swing arm 322 and the second swing arm 325 rotate relative to each other, the synchronous gear 340 rotates. For the clamping structure between the plurality of third protrusions 3403 of the synchronous gear 340 and the corresponding second protruding block group 3302b, the third protrusion 3403 of the synchronous gear 340 is detached from one second clamping slot 3302d, crosses one second protruding block 3302e, and is clamped into another adjacent second clamping slot 3302d. In this process, the synchronous gear 340 pushes the second clamping block 3302 to move toward the clamping member 329, and the elastic component 3305 is compressed, to generate still another partial damping force and still another partial push force.

In other words, before the first protrusions (3221e and 3251e) cross the first protruding block 3301f, the second protrusions (3221f and 3251f) cross the second protruding block 3302e, and the third protrusion 3403 crosses the second protruding block 3302e, because of a damping force generated in this process, the first swing arm 322 and the second swing arm 325 can rotate relative to each other only when a driving force is applied to the first swing arm 322 and the second swing arm 325. In addition, after the first protrusions (3221e and 3251e) cross the first protruding block 3301f, the second protrusions (3221f and 3251f) cross the second protruding block 3302e, and the third protrusion 3403 crosses the second protruding block 3302e, a push force generated in this process may push the first swing arm 322 to continue to rotate relative to the second swing arm 325.

In addition, because the elastic component 3305 is in the compressed state, an end face that is of the first clamping portion 3292 and that is close to the second clamping block 3302 and a wall face that of the first limiting groove 3221h of the first swing arm 322 and that is close to the second clamping block 3302 abut against each other, to form a friction surface; an end face that is of the second clamping portion 3293 and that is close to the second clamping block 3302 and a wall face that is of the second limiting groove 3251h of the second swing arm 325 and that is close to the second clamping block 3302 abut against each other, to form a friction surface; and an end face that is of the synchronous gear 340 and that faces away from the second clamping block 3302 and an end face that is of the third clamping portion 3294 and that is close to the second clamping block 3302 abut against each other, to form a friction surface. When the first swing arm 322 and the second swing arm 325 rotate relative to each other, friction torque is formed and a damping force is generated on all the friction surfaces. Alternatively, an end face that is of the first clamping portion 3292 and that is close to the first clamping block 3301 and a wall face that of the first limiting groove 3221h of the first swing arm 322 and that is close to the first clamping block 3301 abut against each other, to form a friction surface; an end face that is of the second clamping portion 3293 and that is close to the first clamping block 3301 and a wall face that is of the second limiting groove 3251h of the second swing arm 325 and that is close to the first clamping block 3301 abut against each other, to form a friction surface; and an end face that is of the synchronous gear 340 and that faces away from the second clamping block 3302 and an end face that is of the third clamping portion 3294 and that is close to the second clamping block 3302 abut against each other, to form a friction surface. When the first swing arm 322 and the second swing arm 325 rotate relative to each other, friction torque is formed and a damping force is generated on all the friction surfaces. In other words, in a process in which the first swing arm 322 and the second swing arm 325 rotate relative to each other, a plurality of friction surfaces are formed for the control mechanism, and friction torque is formed and a damping force is generated on the plurality of friction surfaces.

In this embodiment, under an action of the synchronous gear 340, rotation of the first swing arm 322 and rotation of the second swing arm 325 are synchronously performed, and a rotation angle of the first swing arm 322 may be the same as a rotation angle of the second swing arm 325, so that the entire control mechanism has better synchronization.

It may be understood that, in some other embodiments, the synchronous gear 340 may not be provided with a third protrusion 3403, and a damping force and a push force when the first swing arm 322 and the second swing arm 325 rotate relative to each other are provided only through cooperation between the damping assembly 330 and each of the first swing arm 322 and the second swing arm 325. Certainly, in still some other embodiments, the control mechanism may not be provided with a synchronization gear 340.

It should be noted that, in some other embodiments, the clamping structure between the damping assembly 330 and the swing arm may also be different. For example, a shape of the first protruding block 3301f may be changed, so that when the first protrusion 3221e of the first swing arm 322 crosses the first protruding block 3301f of the first clamping block 3301, the damping assembly 330 generates only a damping force for the first swing arm 322 without generating a push force. In other words, the damping assembly 330 may only be configured to provide resistance when the first swing arm 322 and the second swing arm 325 rotate relative to each other. A clamping structure between the damping assembly 330 and a swing arm is not strictly limited in this application.

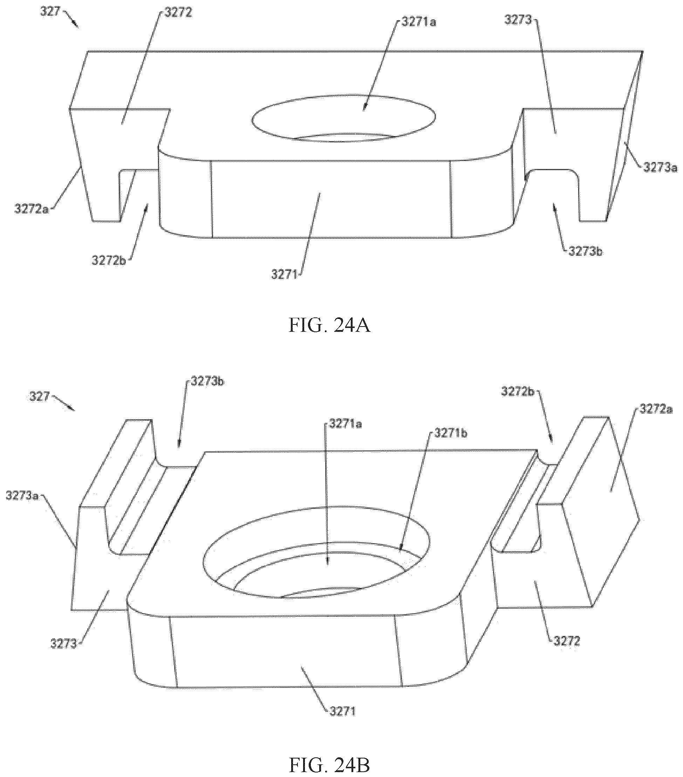

FIG. 24A is a diagram of a structure of the stop block shown in FIG. 14. FIG. 24B is a diagram of a structure after the stop block shown in FIG. 24A is flipped leftward/rightward.

In some embodiments, the stop block 327 includes a main body portion 3271, a first stop portion 3272, and a second stop portion 3273, the first stop portion 3272 is fastened on one side of the main body portion 3271, and the second stop portion 3273 is fastened on the other side of the main body portion 3271. The stop block 327 may be an integral structural member. For example, the main body portion 3271 may be provided with a through hole 3271a and a limiting slot 3271b, and the limiting slot 3271b communicates with the through hole 3271a. The stop block 327 may be assembled with and fastened to another structure through the through hole 3271a and the limiting slot 3271b in the main body portion 3271.

For example, the stop block 327 may include a first stop face 3272a and a second stop face 3273a. The first stop face 3272a and the second stop face 3273a are disposed away from each other. The first stop face 3272a may be formed on an end face that is of the first stop portion 3272 and that faces away from the main body portion 3271, and the second stop face 3273a may be formed on an end face that is of the second stop portion 3273 and that faces away from the main body portion 3271.

For example, the stop block 327 is further provided with a first avoidance slot 3272b and a second avoidance slot 3273b. Both the first avoidance slot 3272b and the second avoidance slot 3273b are located between the first stop face 3272a and the second stop face 3273a. The first avoidance slot 3272b is disposed close to the first stop face 3272a, and the second avoidance slot 3273b is disposed close to the second stop face 3273a. For example, the first avoidance slot 3272b is located between the first stop portion 3272 and the main body portion 3271, and the second avoidance slot 3273b is located between the main body portion 3271 and the second stop portion 3273.

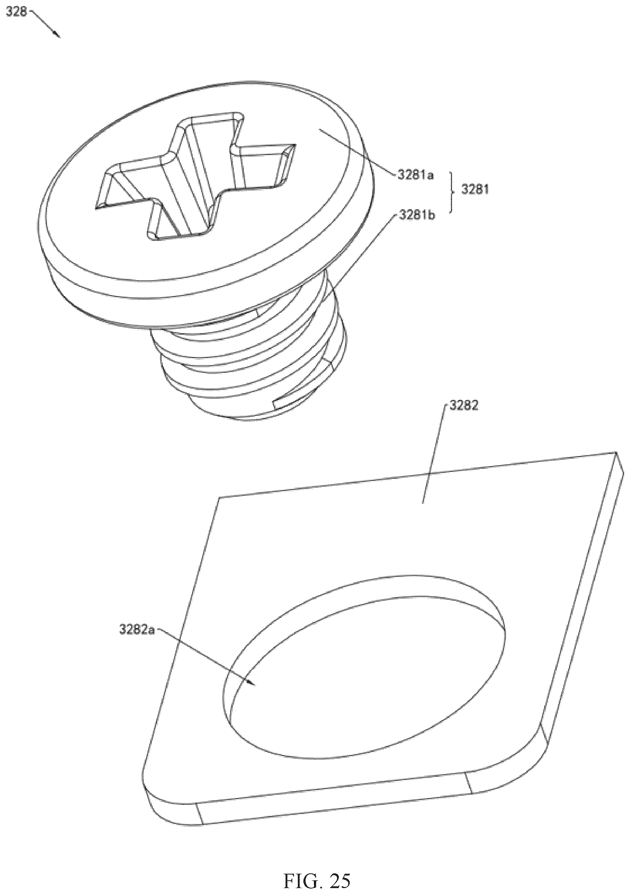

FIG. 25 is a diagram of a structure of an adjustment assembly shown in FIG. 14.

In some embodiments, the limiting member 3281 of the adjustment assembly 328 may include a limiting end 2381a and a connecting end 3281b, and the connecting end 3281b is fastened to one end face of the limiting end 2381a. The limiting member 3281 may be an integral structural member. The elastic member 3282 may be an elastic gasket 3282, and the elastic member 3282 is provided with a through hole 3282a. In some other embodiments, the elastic member 3282 may be further a leaf spring or another elastic structural member. This is not strictly limited in this application.

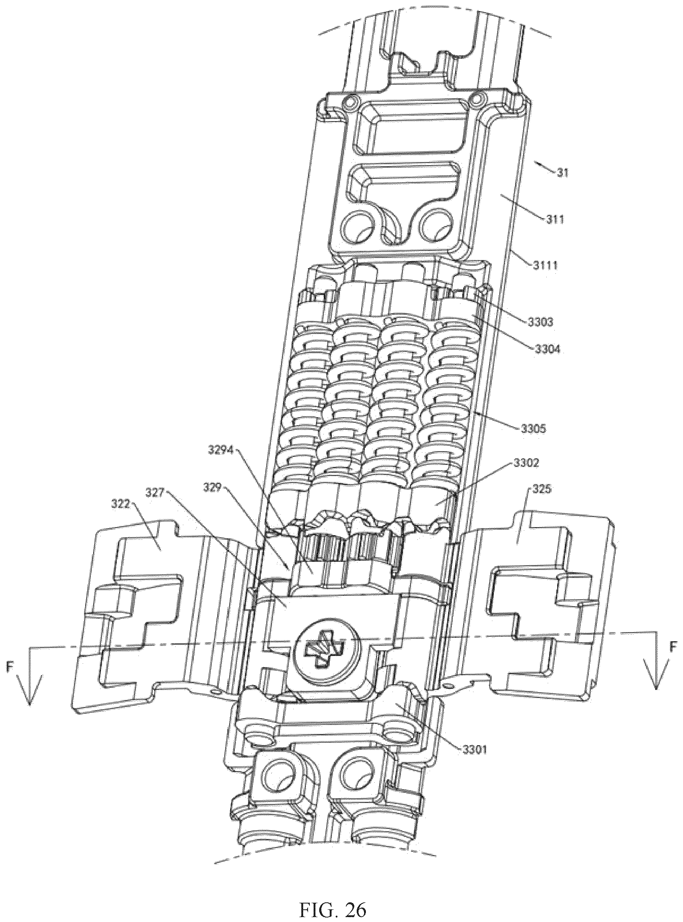

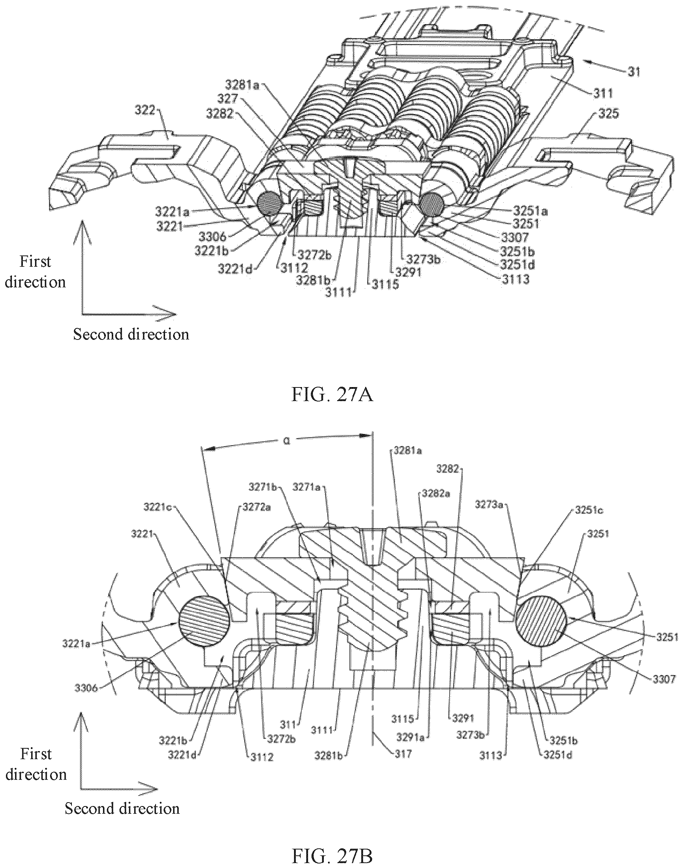

FIG. 26 is a diagram of an assembly structure of a partial structure of the bottom connecting assembly shown in FIG. 13 and the main inner shaft shown in FIG. 9. FIG. 27A is a diagram of a cross-sectional structure after the structure shown in FIG. 26 is cut along a cross section F-F. FIG. 27B is a diagram of a part of the structure shown in FIG. 27A from another perspective.

In some embodiments, as shown in FIG. 26, the control mechanism is installed on a side that is of the main inner shaft 311 and that faces away from the main support face 3111, for example, may be installed in the first accommodation space 315 of the main shaft 31 (as shown in FIG. 11). The stop block 327 may be installed in the control mechanism, the clamping member 329 may be located between the first swing arm 322 and the second swing arm 325, and the stop block 327 may be located between the third clamping portion 3294 of the clamping member 329 and the first clamping block 3301.

In some other embodiments, the damping assembly 330 may alternatively not be provided with the limiting block 3304 and the fastening board 3303. For example, an end that is of the elastic component 3305 and that faces away from the second clamping block 3302 may directly abut against a wall face that is of the first accommodation space 315 and that is on the main inner shaft 311, and the other end abuts against the second clamping block 3302. The elastic component 3305 is in the compressed state, a plurality of second protrusions of the first swing arm 322 and one protruding block group of the second clamping block form a clamping structure (as shown in FIG. 22A), a plurality of second protrusions of the second swing arm 325 and another protruding block group of the second clamping block form a clamping structure (as shown in FIG. 22B), and a plurality of third protrusions of the synchronous gear and still another protruding block group of the second clamping block form a clamping structure (as shown in FIG. 23). The damping assembly 330 may still provide a damping force and a pull force for rotation of the first swing arm 322 and the second swing arm 325. A specific structure and an implementation of the damping assembly 330 are not strictly limited in this embodiment of this application.

Refer to FIG. 27A and FIG. 27B together. For example, the fastening portion 3291 of the clamping member 329 is stacked between the main inner shaft 311 of the main shaft 31 and the stop block 327, and the elastic member 3282 is located between the fastening portion 3291 of the clamping member 329 and the stop block 327. A protruding block 3115 may be further disposed on the main inner shaft 311, and the protruding block 3115 protrudes away from the main support face 3111. The protruding block 3115 is built into the through hole 3291a of the fastening portion 3291 of the clamping member 329, the through hole 3282a of the elastic member 3282, and the limiting slot 3271b of the main body portion 3271 of the stop block 327. The protruding block 3115 may implement limiting of the stop block 327 and the clamping member 329 in the extension direction of the main shaft 31. In some embodiments, a threaded hole is further disposed in the protruding block 3115. For example, the connecting end 3281b of the limiting member 3281 may be provided with an external thread. For example, the limiting member 3281 may be a screw. The limiting end 2381a of the limiting member 3281 is located on a side that is of the stop block 327 and that faces away from the main inner shaft 311, and the connecting end 3281b of the limiting member 3281 passes through the through hole 3271a and the limiting slot 3271b of the main body portion 3271 of the stop block 327, and is threadedly connected to the main inner shaft 311 through the threaded hole.

The elastic member 3282 is in the compressed state, and two end faces of the elastic member 3282 respectively abut against the main body portion 3271 of the stop block 327 and the fastening portion 3291 of the clamping member 329. Under an action of an elastic force of the elastic member 3282, the main body portion 3271 of the stop block 327 abuts against the limiting end 2381a of the limiting member 3281, and the fastening portion 3291 of the clamping member 329 abuts against the main inner shaft 311. In other words, one end of the elastic member 3282 abuts against the stop block 327, and the other end indirectly abuts against the main inner shaft 311 of the main shaft 31. In this case, both the clamping member 329 and the stop block 327 are fastened to the main inner shaft 311, in other words, are fastened to the main shaft 31. Because the clamping member 329 is a part of the modular control mechanism, the control mechanism can be integrally installed on the main shaft 31 by using the clamping member 329, and extension directions of the first rotating shaft 3306, the second rotating shaft 3307, and the plurality of third rotating shafts 3308 of the control mechanism are all parallel to the extension direction of the main shaft 31. When the first swing arm 322 rotates relative to the first rotating shaft 3306, the first swing arm 322 can rotate relative to the main inner shaft 311 (namely, the entire main shaft 31); and when the second swing arm 325 rotates relative to the second rotating shaft 3307, the second swing arm 325 can rotate relative to the main inner shaft 311 (namely, the entire main shaft 31). In other words, the first end portion 3221 of the first swing arm 322 may be connected to the main shaft 31 through rotation of the first rotating shaft 3306, and the first end portion 3251 of the second swing arm 325 may be connected to the main shaft 31 through rotation of the second rotating shaft 3307. In addition, because the stop block 327 and the fastening portion 3291 of the clamping member 329 are stacked, the stop block 327 and the clamping member 329 can fully use thickness space perpendicular to the main support face 3111, to increase space utilization of the main shaft 31, and help thin the entire foldable assembly 3. In addition, the stop block 327 is stacked between the fastening portion 3291 of the clamping member 329 and the main inner shaft 311, so that the stop block 327 and the clamping member 329 may be jointly fastened to the main inner shaft 311 by using only a same fastening structure (for example, a threaded connection structure of the limiting member 3281 and the protruding block 3115 in this embodiment), to effectively reduce a quantity of fastening structures, help simplify a structure of the main inner shaft 311, and reduce production costs of the foldable assembly 3.

Refer to FIG. 22A, FIG. 22B, FIG. 26, and FIG. 27A together. Because the fastening portion 3291 of the clamping member 329 is fastened to the main inner shaft 311 of the main shaft 31, the clamping member 329 cannot move relative to the main shaft 31 in the extension direction of the main shaft 31. In addition, because the first clamping portion 3292 of the clamping member 329 is clamped into the first limiting groove 3221h and the second clamping portion 3293 of the clamping member 329 is clamped into the second limiting groove 3251h, neither the first swing arm 322 nor the second swing arm 325 can move relative to the main shaft 31 in the extension direction of the main shaft 31. In other words, the clamping member 329 is configured to limit movement of the first swing arm 322 and the second swing arm 325 in the extension direction of the main shaft 31.

As shown in FIG. 27A and FIG. 27B, when the first swing arm 322 and the second swing arm 325 are in an opened state, the first stop end face 3221c of the first swing arm 322 abuts against the first stop face 3272a of the stop block 327, the first stop face 3272a and the first stop portion 3272 of the stop block 327 are both partially located in the first avoidance space 3221b of the first swing arm 322, and the first compensation block 3221d of the first swing arm 322 is at least partially located in the first avoidance hole 3112 of the main inner shaft 311; and the second stop end face 3251c of the second swing arm 325 abuts against the second stop face 3273a of the stop block 327, the second stop face 3273a and the second stop portion 3273 of the stop block 327 are both partially located in the second avoidance space 3251b of the second swing arm 325, and the second compensation block 3251d of the second swing arm 325 is at least partially located in the second avoidance hole 3113 of the main inner shaft 311.

In a process in which the first swing arm 322 and the second swing arm 325 are folded relative to each other, the first swing arm 322 rotates counterclockwise, the first stop end face 3221c of the first swing arm 322 is away from the first stop face 3272a of the stop block 327, and one end of the first compensation block 3221d of the first swing arm 322 is close to the stop block 327 and is transferred to the first avoidance slot 3272b of the stop block 327; and the second swing arm 325 rotates clockwise, the second stop end face 3251c of the second swing arm 325 is away from the second stop face 3273a of the stop block 327, and the second compensation block 3251d of the second swing arm 325 is away from the stop block 327 and is transferred to the second avoidance slot 3273b of the stop block 327. It should be noted that rotation directions of the first swing arm 322 and the second swing arm 325 in this embodiment of this application are both described based on an illustrated direction. In use of an actual product, the rotation directions of the first swing arm 322 and the second swing arm 325 may be exchanged.

When the first swing arm 322 and the second swing arm 325 are in a closed state, an included angle between the first stop end face 3221c and the first stop face 3272a of the first swing arm 322 reaches a preset maximum value, the first compensation block 3221d of the first swing arm 322 is at least partially located in the first avoidance slot 3272b of the stop block 327, and the first stop portion 3272 of the stop block 327 may be partially located between the first rotating shaft 3306 and the first compensation block 3221d; and an included angle between the second stop end face 3251c and the second stop face 3273a of the second swing arm 325 reaches a preset maximum value, the second compensation block 3251d of the second swing arm 325 is at least partially located in the second avoidance slot 3273b of the stop block 327, and the second stop portion 3273 of the stop block 327 may be partially located between the second rotating shaft 3307 and the second compensation block 3251d.

In a process in which the first swing arm 322 and the second swing arm 325 are unfolded relative to each other, the first swing arm 322 rotates clockwise, the first stop end face 3221c of the first swing arm 322 is close to the first stop face 3272a of the stop block 327, and one end of the first compensation block 3221d of the first swing arm 322 is away from the stop block 327 and is clamped into the first avoidance hole 3112. The second swing arm 325 rotates counterclockwise, the second stop end face 3251c of the second swing arm 325 is close to the second stop face 3273a of the stop block 327, and one end of the second compensation block 3251d of the second swing arm 325 is away from the stop block 327 and is clamped into the second avoidance hole 3113.

In this embodiment, a stop cooperation structure of the first stop face 3272a of the stop block 327 and the first stop end face 3221c of the first swing arm 322 and a stop cooperation structure of the second stop face 3273a of the stop block 327 and the second stop end face 3251c of the second swing arm 325 may be disposed, to prevent the first swing arm 322 and the second swing arm 325 from continuing to rotate relative to each other when the first swing arm 322 and the second swing arm 325 are unfolded relative to each other to the opened state. Therefore, an included angle between the first swing arm 322 and the second swing arm 325 can reach a preset angle, to avoid excessive rotation. In addition, a stop action performed on the two swing arms (322 and 325) is implemented by using the independent stop block 327, to prevent the two swing arms (322 and 325) in the opened state from pressing cover bodies (312, 313, and 314) of the main shaft 31, prevent the main shaft 31 from being deformed, and ensure flatness of the main shaft 31. In addition, in this embodiment, the stop action performed on the two swing arms (322 and 325) can be implemented by using only one stop block 327, to effectively reduce a quantity of stop blocks 327 required by the foldable assembly 3, and reduce space that is inside the foldable assembly 3 and that is occupied by the stop block 327.

In some embodiments, the main shaft 31 further includes a median face 317, the first stop face 3272a and the second stop face 3273a are symmetrical about the median face 317, and the first swing arm 322 and the second swing arm 325 are symmetrical about the median face 317. It should be noted that in this application, that the median face 317 is perpendicular to the main support face 3111 and is parallel to the extension direction of the main shaft 31 is defined. In this application, the two stop faces (3272a and 3273a) and the two swing arms (322 and 325) are both symmetrical about a same face, so that when the first swing arm 322 abuts against the first stop face 3272a, the second swing arm 325 may also abut against the second stop face 3273a. In other words, when the first swing arm 322 and the second swing arm 325 are in the opened state, the included angle between the first swing arm 322 and the second swing arm 325 reaches a preset value, the first swing arm 322 partially abuts against the first stop face 3272a while the second swing arm 325 partially abuts against the second stop face 3273a, and the first stop face 3272a and the second stop face 3273a both implement a stop action performed on the first swing arm 322 and the second swing arm 325. The first swing arm 322 and the second swing arm 325 cannot continue to rotate relative to the main shaft 31, and the included angle between the first swing arm 322 and the second swing arm 325 reaches the preset value and does not increase.

To simplify description, that the main shaft 31 has a first direction and a second direction is defined. The first direction is perpendicular to the main support face 3111, and the second direction is perpendicular to the first direction and is perpendicular to the extension direction of the main shaft 31. In this case, the first direction is parallel to the median face 317 of the main shaft 31, and the second direction is perpendicular to the median face 317 of the main shaft 31. Because the first stop face 3272a and the second stop face 3273a are symmetrical about the median face 317, the first swing arm 322 abuts against the first stop face 3272a while the second swing arm 325 abuts against the second stop face 3273a. Therefore, a component force exerted by the first swing arm 322 on the first stop face 3272a in the second direction and a component force exerted by the second swing arm 325 on the second stop face 3273a in the second direction may cancel each other, and a force balance is achieved for the stop block 327 in the second direction; and a component force exerted by the first swing arm 322 on the first stop face 3272a in the first direction, a component force exerted by the second swing arm 325 on the second stop face 3273a in the first direction, and a force exerted by a fastening structure (namely, the limiting member 3281 in this embodiment) on the stop block 327 form a group of balanced force, and a force balance is achieved for the stop block 327 in the first direction. The fastening structure exerts only a force on the main inner shaft 311 in the first direction, and does not exert a force in the second direction. Therefore, stability of the main shaft 31 is high, and stability of the entire bottom connecting assembly 32 is high. In addition, forces exerted by the first swing arm 322 and the second swing arm 325 on the stop block 327 are balanced in the second direction, to reduce a deformation amount after the stop block 327 is pressed, and help ensure precise control of the included angle when the first swing arm 322 and the second swing arm 325 are opened relative to each other.

For example, an included angle α between the first stop face 3272a and the median face 317 falls within a range of 0° to 45°. A range of the included angle α between the first stop face 3272a and the median face 317 is controlled, so that a component force of an acting force exerted by the first swing arm 322 on the stop block 327 in the second direction can be greater than a component force in the first direction, and a component force of an acting force exerted by the second swing arm 325 on the stop block 327 in the second direction can be greater than a component force in the first direction. However, the component force of the acting force exerted by the first swing arm 322 on the stop block 327 in the second direction and the component force of the acting force exerted by the second swing arm 325 on the stop block 327 in the second direction cancel each other, to effectively reduce a value of a combined force exerted by the swing arms (322 and 325) on the stop block 327. Therefore, an interacting force between the stop block 327 and the fastening structure (namely, the limiting member 3281) is reduced, an interacting force between the fastening structure and the main inner shaft 311 is reduced, structural security of the fastening structure is increased, and security of the foldable assembly 3 is increased. For example, the included angle α between the first stop face 3272a and the median face 317 may fall within a range of 5° to 25°. Further, the included angle α between the first stop face 3272a and the median face 317 may fall within a range of 8° to 15°, for example, 10° or 12°.

For example, the first stop face 3272a and the second stop face 3273a each may be a plane, to reduce processing difficulty of the stop block 327, and improve processing precision. In this case, the first stop end face 3221c of the first swing arm 322 and the second stop end face 3251c of the second swing arm 325 may also be correspondingly disposed as planes, processing difficulty of the first swing arm 322 and the second swing arm 325 is small, and precision is high. It may be understood that, in this embodiment, the included angle α between the first stop face 3272a and the median face 317 is an included angle between two planes.

In some embodiments, when the included angle α between the first stop face 3272a and the median face 317 is greater than 0°, the included angle between the first swing arm 322 and the second swing arm 325 in the opened state may be controlled by adjusting relative locations of the stop block 327 and the main shaft 31 in the thickness direction (namely, the first direction) of the foldable assembly 3. Specifically, when the first swing arm 322 and the second swing arm 325 are in the opened state, if the included angle between the first swing arm 322 and the second swing arm 325 is greater than the preset value, the limiting member 3281 may be rotated, so that the limiting end 2381a of the limiting member 3281 approaches the main shaft 31 in the first direction, and the stop block 327 approaches the main shaft 31 when being pushed by the limiting end 2381a of the limiting member 3281, and presses the elastic member 3282, to further compress the elastic member 3282. In this case, the first stop face 3272a of the stop block 327 presses the first stop end face 3221c of the first swing arm 322, the first swing arm 322 rotates counterclockwise under an action of a pressure force, the second stop face 3273a of the stop block 327 presses the second stop end face 3251c of the second swing arm 325, the second swing arm 325 rotates clockwise under an action of a pressure force, and the included angle between the first swing arm 322 and the second swing arm 325 may be reduced to the preset value. When the first swing arm 322 and the second swing arm 325 are in the opened state, if the included angle between the first swing arm 322 and the second swing arm 325 is less than the preset value, the limiting member 3281 may be rotated reversely, so that the limiting end 2381a of the limiting member 3281 is away from the main shaft 31 in the first direction, and the stop block 327 is away from the main shaft 31 along with the limiting end 2381a under an elastic force of the elastic member 3282. A compression amount of the elastic member 3282 decreases. In this case, the first stop face 3272a of the stop block 327 is away from the first stop end face 3221c of the first swing arm 322, there is a gap between the first stop face 3272a of the stop block 327 and the first stop end face 3221c of the first swing arm 322, the second stop face 3273a of the stop block 327 is away from the second stop end face 3251c of the second swing arm 325, there is a gap between the second stop face 3273a of the stop block 327 and the second stop end face 3251c of the second swing arm 325, the first swing arm 322 and the second swing arm 325 may continue to rotate relative to each other, and the included angle between the first swing arm 322 and the second swing arm 325 may increase to the preset value.

In other words, when the included angle α between the first stop face 3272a and the median face 317 is greater than 0° and the first swing arm 322 and the second swing arm 325 are in the opened state, the relative locations of the stop block 327 and the main shaft 31 in the first direction are adjusted by adjusting the adjustment assembly 328, so that the first stop end face 3221c of the first end portion 3221 of the first swing arm 322 and the first stop face 3272a are away from each other or press each other, a rotation angle of the first swing arm 322 may be further adjusted, the first end portion 3251 of the second swing arm 325 and the second stop face 3273a are away from each other or press each other, and a rotation angle of the second swing arm 325 may be further adjusted. Finally, the included angle between the first swing arm 322 and the second swing arm 325 in the opened state is adjusted.

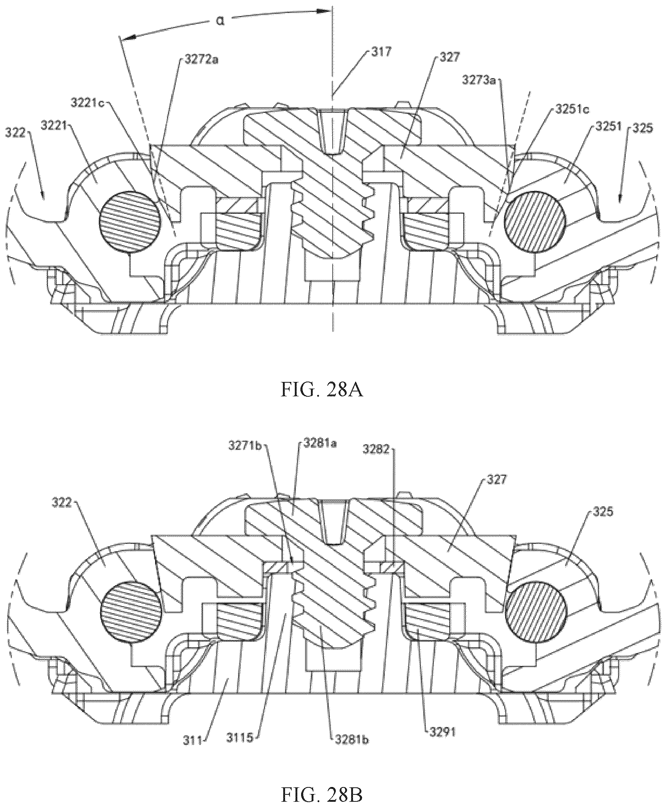

FIG. 28A is a diagram of a structure of the structure shown in FIG. 27B in another embodiment.

In some other embodiments, the first stop face 3272a and the second stop face 3273a may alternatively be curved faces. For example, the first stop face 3272a is a convex curved face, the first stop face 3272a protrudes away from the median face 317, the first stop end face 3221c is a recessed curved face, and the first stop end face 3221c is recessed toward the first end portion 3221 of the first swing arm 322; and the second stop face 3273a is a recessed curved face, the second stop face 3273a protrudes away from the median face 317, the second stop end face 3251c is a recessed curved face, and the second stop end face 3251c is recessed toward the first end portion 3251 of the second swing arm 325. In this case, the included angle α between the first stop face 3272a and the median face 317 is an included angle between the median face 317 and a plane formed by connecting the first stop face 3272a and two edges in the first direction. When the second stop face 3273a is a curved face, also refer to the first stop face 3272a. Details are not described herein again. The first stop end face 3221c of the first swing arm 322, the first stop face 3272a, the second stop end face 3251c of the second swing arm 325, and the second stop face 3273a are disposed as curved faces, so that when the first swing arm 322 and the second swing arm 325 are in the opened state, a contact area between the first stop end face 3221c of the first swing arm 322 and the first stop face 3272a and a contact area between the second stop end face 3251c of the second swing arm 325 and the second stop face 3273a can be increased, to reduce stress concentration at an abutment, reduce a local deformation amount of the stop block 327, and ensure precise control of the included angle when the first swing arm 322 and the second swing arm 325 are opened relative to each other.

FIG. 28B is a diagram of a structure of the structure shown in FIG. 27B in another embodiment.

In some other embodiments, a location of the elastic member 3282 may also be changed. For example, the elastic member 3282 may be located between the protruding block 3115 of the main inner shaft 311 of the main shaft 31 and a bottom wall of the limiting slot 3271b of the stop block 327. The elastic member 3282 is in the compressed state and abuts against the protruding block 3115 of the main shaft 31 and the limiting end 2381a of the limiting member 3281. In this case, the elastic member 3282 is still in the compressed state, and may still provide a necessary elastic force in a process of adjusting the included angle when the first swing arm 322 and the second swing arm 325 are opened. A necessary gap is reserved between the stop block 327 and the fastening portion 3291 of the clamping member 329, the fastening portion of the clamping member is fastened to the main inner shaft 311 by using another fastener, and the gap is used to provide adjustment space for the stop block 327.

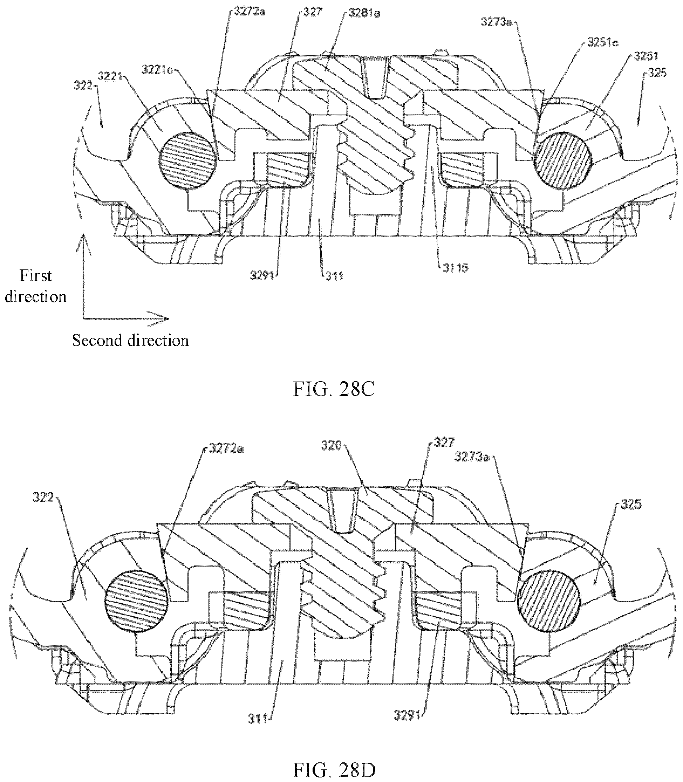

FIG. 28C is a diagram of a structure of the structure shown in FIG. 27B in another embodiment.

In some other embodiments, the adjustment assembly 328 may alternatively not be provided with the elastic member 3282, and the adjustment assembly 328 uses the limiting end 2381a of the limiting member 3281 and the main inner shaft 311 to jointly limit movement space of the stop block 327 in the first direction. It may be understood that in this case, a necessary gap is reserved between the stop block 327 and the fastening portion of the clamping member 329, a necessary gap is also reserved between the stop block 327 and the protruding block 3115 of the main inner shaft 311, and the fastening portion 3291 of the clamping member 329 is fastened to the main inner shaft 311 by using another fastener. In a possible use case, when the first swing arm 322 and the second swing arm 325 are unfolded relative to each other, the first stop face 3272a of the stop block 327 continuously abuts against the first stop end face 3221c of the first end portion 3221 of the first swing arm 322, the first end portion 3221 of the first swing arm 322 pushes the first stop portion 3272 of the stop block 327 to move in the first direction, the second stop face 3273a of the stop block 327 continuously abuts against the second stop end face 3251c of the first stop end portion 3251 of the second swing arm 325, and the first end portion 3251 of the second swing arm 325 pushes the second stop portion 3273 of the stop block 327 to move in the first direction. Therefore, the entire stop block 327 is away from the main inner shaft 311 in the first direction and finally abuts against the limiting end 2381a of the limiting member 3281. Therefore, the stop block 327 does not move any more, the first stop face 3272a and the second stop face 3273a of the stop block 327 do not move any more, the first swing arm 322 and the second swing arm 325 do not rotate relative to each other, and the stop block 327 performs a stop action on the first swing arm 322 and the second swing arm 325. When the included angle between the first swing arm 322 and the second swing arm 325 in the opened state needs to be adjusted, only a relative distance between the limiting member 3281 and the main inner shaft 311 in the first direction needs to be adjusted.

In some other embodiments, for example, the limiting member 3281 of the adjustment assembly 328 may alternatively be of another adjustable structure.

For example, the adjustment assembly 328 still includes the limiting member 3281 and the elastic member 3282, and the limiting member 3281 may be a nut. In addition, the protruding block 3115 of the main shaft 31 is provided with an external thread, and the nut is threadedly connected to the protruding block 3115 with the external thread. The elastic member 3282 is in the compressed state, and the elastic force of the elastic member 3282 enables the stop block 327 to abut against the nut, to implement a limiting action performed by the nut on the stop block 327. Relative locations of the limiting member 3281 and the main inner shaft 311 in the first direction may be adjusted by rotating the nut, to adjust relative locations of the stop block 327 and the main inner shaft 311 in the first direction. Therefore, the included angle between the first swing arm 322 and the second swing arm 325 when the first swing arm 322 and the second swing arm 325 are in the opened state is adjusted.

For another example, the adjustment assembly 328 includes the limiting member 3281 and is not provided with the elastic member 3282, the limiting member 3281 may be a nut, the protruding block 3115 of the main shaft 31 is provided with the external thread, the protruding block 3115 passes through the limiting slot 3271b and the through hole 3271a of the stop block 327 and is partially exposed, and the nut is threadedly connected to the protruding block 3115 with the external thread. The included angle between the first swing arm 322 and the second swing arm 325 when the first swing arm 322 and the second swing arm 325 are in the opened state is adjusted based on an adjustable limiting action of the nut and through pushing of the first swing arm 322 and pushing of the second swing arm 325.

FIG. 28D is a diagram of a structure of FIG. 27B in another embodiment.

In some embodiments, the bottom connecting assembly 32 may not be provided with the adjustment assembly 328, and the stop block 327 and the fastening portion 3291 of the clamping member 329 may be fastened to the main inner shaft 311 of the main shaft 31 only by using the fastener 320. For example, the fastener 320 may be a screw. The fastener 320 is threadedly connected to the threaded hole of the protruding block 3115, one end of the stop block 327 abuts against the fastener 320, and the other end abuts against the fastening portion 3291 of the clamping member 329. In this case, the stop block 327 and the main inner shaft 311 are fastened relative to each other. The first stop face 3272a of the stop block 327 may still perform a stop action on the first swing arm 322, and the second stop face 3273a of the stop block 327 may still perform a stop action on the second swing arm 325. In some other embodiments, the fastener 320 may also be connected to all of the bottom cover body 312; the bottom cover body 312, the stop block 327, the fastening portion 3291 of the clamping member 329, and the main inner shaft 311 form a locking state; the bottom cover body 312 and the main inner shaft 311 jointly fasten the stop block 327 and the clamping member 329; and overall structure strength is high, to help reduce a deformation degree of the main shaft 31 in the opened state.

It may be understood that, in some other embodiments, a connection manner between the main inner shaft 311, the clamping member 329, and the stop block 327 may alternatively be implemented in another manner. For example, the stop block 327 is movably connected to the clamping member 329 by using a screw or a bolt or in another manner, and the clamping member 329 is fastened to the main inner shaft 311 by using a screw or a bolt or in another manner. Relative locations of the stop block 327 and the main inner shaft 311 are adjusted by adjusting relative locations of the stop block 327 and the clamping block. Alternatively, the clamping member 329 and the stop block 327 are arranged at intervals in the extension direction of the main shaft 31, the stop block 327 is moveably connected to the main inner shaft 311, the elastic member 3282 abuts between the stop block 327 and the main inner shaft 311, the clamping member 329 is fastened to the main inner shaft 311, and the relative locations of the stop block 327 and the main inner shaft 311 are directly adjusted. In this case, there is no stacking location relationship between the clamping member 329 and the stop block 327, and the protruding block 3115 of the main shaft 31 may be directly built into the limiting slot 3271b of the clamping block. A connection manner between the main inner shaft 311, the clamping member 329, and the stop block 327 is not strictly limited in this application.

In some other embodiments, the stop block 327 and the clamping member 329 may alternatively jointly form an integral limiting connecting member, to have higher structural strength. The following describes, with reference to the accompanying drawings, the limiting connecting member and a specific embodiment in which the limiting connecting member is applied to the bottom connecting assembly 32. For other structures, refer to the foregoing embodiments. Details are not described below.

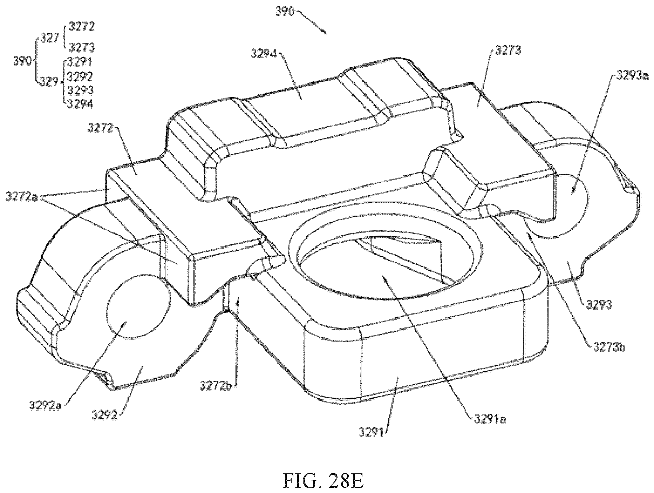

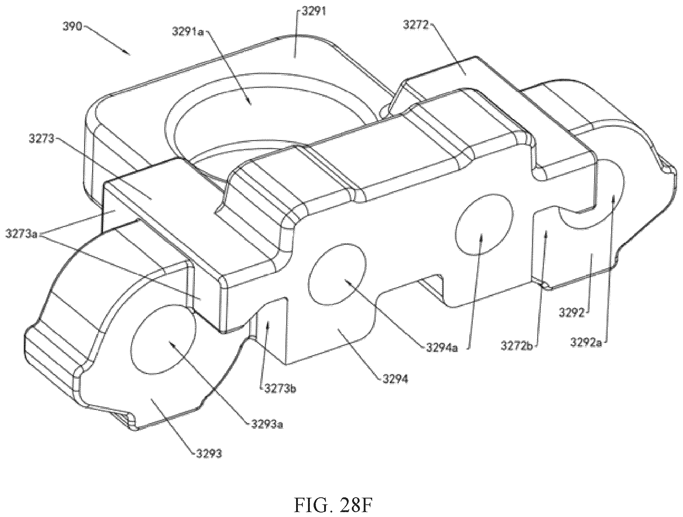

FIG. 28E is a diagram of a structure of a limiting connecting member. FIG. 28F is a diagram of a structure of the structure shown in FIG. 28E from another perspective.

In some embodiments, the limiting connecting member 390 is an integral structural member, a partial structure of the limiting connecting member 390 forms the stop block 327, and the partial structure forms the clamping member 329. The clamping member 329 may include the fastening portion 3291, the first clamping portion 3292, and the second clamping portion 3293. The stop block 327 may include the first stop portion 3272 and the second stop portion 3273. The first clamping portion 3292 and the second clamping portion 3293 are both fastened to two sides of the fastening portion 3291, the first stop portion 3272 is fastened to the first clamping portion 3292, and the second stop portion 3273 is fastened to the second clamping portion 3293. The fastening portion 3291 may be approximately in a plate shape, the fastening portion 3291 may be further provided with the through hole 3291a, and the through hole 3291a communicates with two end faces of an upper end face and a lower end face of the fastening portion 3291. The first clamping portion 3292 is provided with the first through hole 3292a, and the second clamping portion 3293 is provided with the second through hole 3293a. The first stop portion 3272 may be provided with the first stop face 3272a, and the first stop face 3272a is formed on an end face that is of the first stop portion 3272 and that faces away from the fastening portion 3291. For example, the first stop face 3272a may be segmented by the first clamping portion 3292 into two partial stop faces. The second stop face 3273 may be provided with the second stop face 3273a, and the second stop face 3273a is formed on an end face that is of the second stop portion 3273 and that faces away from the fastening portion 3291. For example, the second stop face 3273a may be segmented by the second clamping portion 3293 into two partial stop faces at an interval.

The clamping member 329 may further include the third clamping portion 3294. The third clamping portion 3294 may be located between the first clamping portion 3292 and the second clamping portion 3293, and between the first stop portion 3272 and the second stop portion 3273. For example, the third clamping portion 3294 may be fastened to the first clamping portion 3292, the second clamping portion 3293, the first stop portion 3272, the second stop portion 3273, and the fastening portion 3291. A blind hole 3294a may be disposed on a side that is of the third clamping portion 3294 and that faces away from the fastening portion 3291. The first clamping portion 3292, the second clamping portion 3293, and the third clamping portion 3294 may be in a plate shape, and are all bent relative to the fastening portion 3291, the first stop portion 3272, and the second stop portion 3273.

For example, the limiting connecting member 390 may be further provided with the first avoidance slot 3272b and the second avoidance slot 3273b, and the first avoidance slot 3272b and the second avoidance slot 3273b are both located between the first stop face 3272a and the second stop face 3273a. The first avoidance slot 3272b is disposed close to the first stop face 3272a, and the second avoidance slot 3273b is disposed close to the second stop face 3273a. For example, the first avoidance slot 3272b may be segmented by the first clamping portion 3292 into two parts of space, a partial wall face of the part of the space is formed on the fastening portion 3291, and a partial wall face of the other part of the space is formed on the third clamping portion 3293; and the second avoidance slot 3273b may be segmented by the second clamping portion 3293 into two parts of space, a wall face of one part of the space is formed on the fastening portion 3291, and a wall face of the other part of the space is formed on the third clamping portion 3293.

It may be understood that, in some other embodiments, an additional connecting portion may be further disposed between the first stop portion 3272 and the second stop portion 3273, to fasten the first stop portion 3272 and the second stop portion 3273, and enhance overall strength of the limiting connecting member 390. A connection location between the first stop face 3272a and the first clamping portion 3292 may alternatively be changed. For example, the connection location between the first stop face 3272a and the first clamping portion 3292 may be located at one end of the first stop face 3272a. A connection location between the second stop face 3273a and the second clamping portion 3293 may alternatively be changed. For example, the connection location between the second stop face 3273a and the second clamping portion 3293 may be located at one end of the second stop face 3273a. In other words, the first stop face 3272a may be a complete continuous plane, and the second stop face 3273a may be a complete continuous plane. This is not strictly limited in this application.

It may be understood that the first stop portion 3272 and the second stop portion 3273 of the limiting connecting member 390 constitute the stop block 327. For details of another solution of the stop block 327 in this embodiment, refer to related descriptions of the stop block 327 in the foregoing embodiments. Details are not described herein again.

In addition, the fastening portion 3291, the first clamping portion 3292, the second clamping portion 3293, and the third clamping portion 3294 of the limiting connecting member 390 constitute the clamping member 329. For details of another solution of the clamping member 329 in this embodiment, refer to related descriptions of the clamping member 329 in the foregoing embodiments. Details are not described herein again.

In some other embodiments, the stop block and the clamping member of the limiting connecting member 390 may alternatively form an integral structure in an assembling manner.

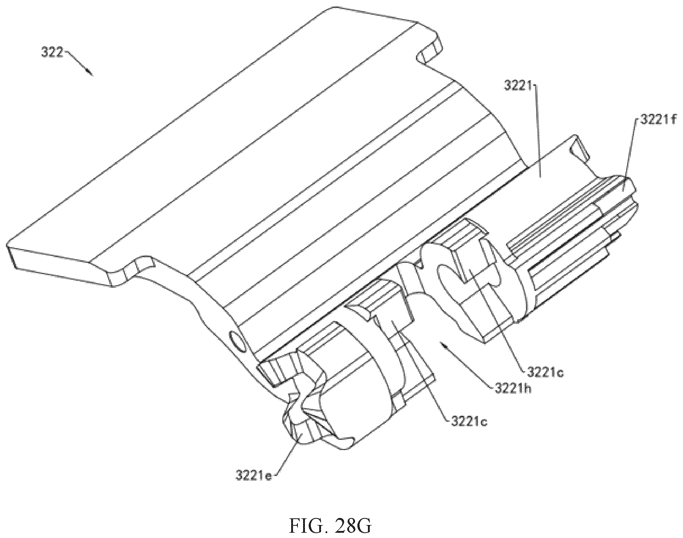

FIG. 28G is a diagram of a structure of the structure shown in FIG. 17A in another embodiment. Some slot holes and some protruding structures that are in the second end portion 3222 of the first swing arm 322 and that cooperate with the first support plate 35 are omitted in FIG. 28G. The first swing arm 322 in this embodiment may include most features of the first swing arm 322 in the foregoing embodiments. A same part of the first swing arm 322 in this embodiment and the first swing arm 322 in the foregoing embodiments is not described again. The following mainly describes a difference between the first swing arm 322 in this embodiment and the first swing arm 322 in the foregoing embodiments.

In some embodiments, the first end portion 3221 of the first swing arm 322 includes the first limiting groove 3221h and the first stop face 3272a, the first limiting groove 3221h may segment the first stop end face 3221c, the first stop end face 3221c is segmented into two parts at an interval, one part is close to the first protrusion 3221e of the first swing arm 322, and the other part is close to the second protrusion 3221f of the first swing arm 322. It may be understood that the second limiting groove 3251h of the second swing arm 325 may also segment the second stop end face 3251c, and the second stop end face 3251c is segmented into two parts at an interval.

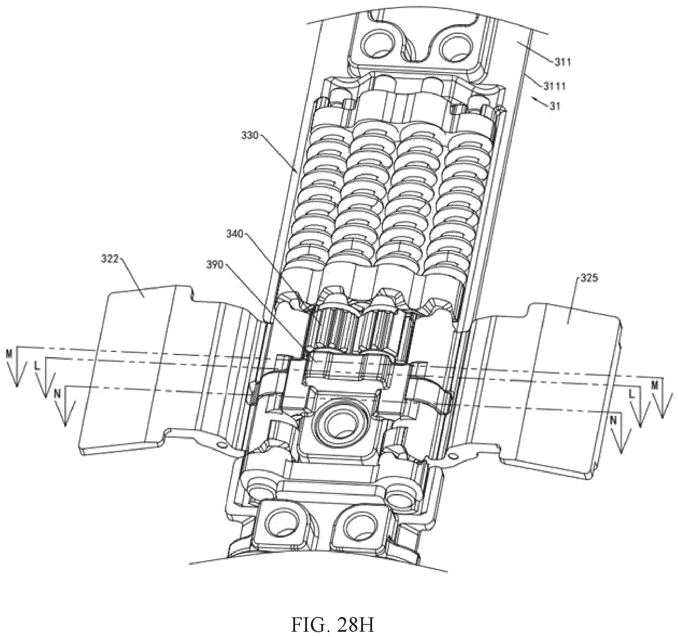

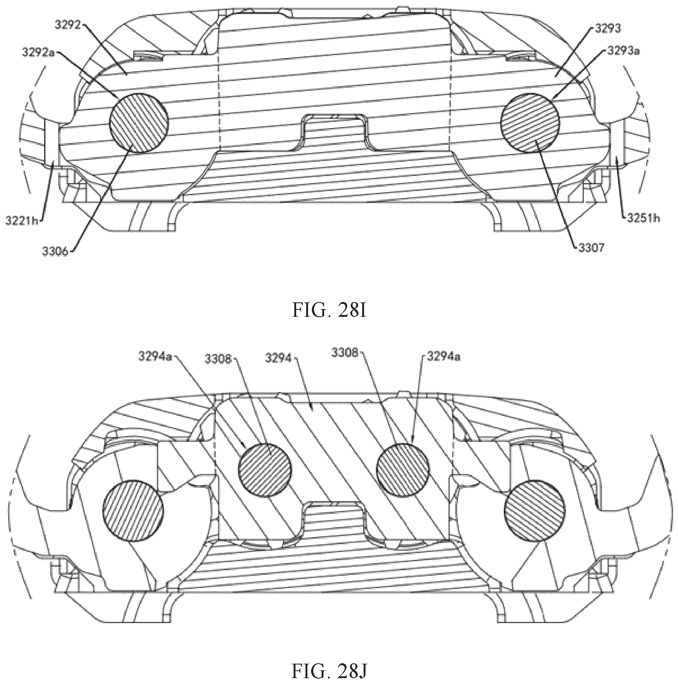

FIG. 28H is a diagram of a partial structure of FIG. 26 in another embodiment. FIG. 28I is a diagram of a cross-sectional structure after FIG. 28H is cut along a cross section L-L. FIG. 28J is a diagram of a cross-sectional structure after FIG. 28H is cut along a cross section M-M. To better illustrate the structure, the bottom cover body 312 is omitted in FIG. 28H.

For example, the limiting connecting member 390 may be installed between the first swing arm 322 and the second swing arm 325 in the control mechanism. For example, the first clamping portion 3292 of the limiting connecting member 390 may be clamped into the first limiting groove 3221h of the first swing arm 322, and the first rotating shaft 3306 may pass through the first through hole 3292a of the first clamping portion 3292 of the limiting connecting member 390, to be inserted into the limiting connecting member 390; the second clamping portion 3293 of the limiting connecting member 390 may be clamped into the second limiting groove 3251h of the second swing arm 325, the second rotating shaft 3307 may pass through the second through hole 3293a of the second clamping portion 3293 of the limiting connecting member 390, to be inserted into the limiting connecting member 390; and the third rotating shaft 3308 is partially clamped into the blind hole 3294a of the third clamping portion 3294 of the limiting connecting member 390, to be inserted into the limiting connecting member 390. The limiting connecting member 390, the first swing arm 322, the second swing arm 325, the synchronous gear 340, and the damping assembly 330 form a control mechanism with a modular structure under an insertion action of the first rotating shaft 3306, the second rotating shaft 3307, and the third rotating shaft 3308.

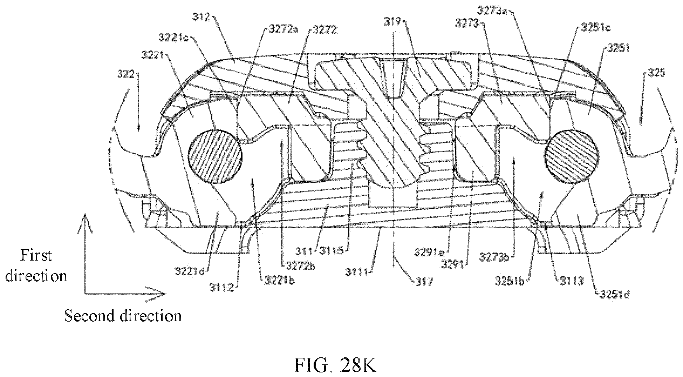

FIG. 28K is a diagram of a cross-sectional structure after FIG. 28H is cut along a cross section N-N.

For example, the control mechanism may be installed between the main inner shaft 311 and the bottom cover body 312, for example, may be installed in the first accommodation space 315 of the main shaft 31 (as shown in FIG. 11). For example, the control mechanism may be fastened to the main shaft 31 by using the fastener 319.

The protruding block 3115 may be disposed on the main inner shaft 311 of the main shaft 31, and the protruding block 3115 protrudes away from the main support face 3111. The protruding block 3115 is built into the through hole 3291a of the fastening portion 3291 of the limiting connecting member 390, and the protruding block 3115 may implement limiting of the limiting connecting member 390 in the extension direction of the main shaft 31. The fastener 319 may fasten the bottom cover body 312, the limiting connecting member 390, and the main inner shaft 311. For example, the fastener 319 may be threadedly connected to the protruding block 3115. Because the limiting connecting member 390 is a part of the modular control mechanism, the control mechanism can be integrally installed on the main shaft 31 by using the limiting connecting member 390, and extension directions of the first rotating shaft 3306, the second rotating shaft 3307, and the plurality of third rotating shafts 3308 of the control mechanism are all parallel to the extension direction of the main shaft 31. When the first swing arm 322 rotates relative to the first rotating shaft 3306, the first swing arm 322 can rotate relative to the main shaft 31; and when the second swing arm 325 rotates relative to the second rotating shaft 3307, the second swing arm 325 can rotate relative to the main shaft 31. In other words, the first end portion 3221 of the first swing arm 322 may be connected to the main shaft 31 through rotation of the first rotating shaft 3306, and the first end portion 3251 of the second swing arm 325 may be connected to the main shaft 31 through rotation of the second rotating shaft 3307.

When the first swing arm 322 and the second swing arm 325 are in the opened state, the first stop end face 3221c of the first swing arm 322 abuts against the first stop face 3272a of the limiting connecting member 390; and the second stop end face 3251c of the second swing arm 325 abuts against the second stop face 3273a of the limiting connecting member 390. Specifically, a partial stop end face that is in the first stop end face 3221c of the first swing arm 322 and that is close to the first protrusion 3221e of the first swing arm 322 abuts against a partial stop face that is in the first stop face 3272a of the first stop portion 3272 of the limiting connecting member 390 and that is close to the fastening portion 3291; and a partial stop end face that is in the first stop end face 3221c of the first swing arm 322 and that is close to the second protrusion 3221f of the first swing arm 322 abuts against a partial stop face that is in the first stop face 3272a of the first stop portion 3272 of the limiting connecting member 390 and that is close to the third clamping portion 3294. A partial stop end face that is in the second stop end face 3251c of the second swing arm 325 and that is close to the first protrusion 3251e of the second swing arm 325 abuts against a partial stop face that is in the second stop face 3273a of the second stop portion 3273 of the limiting connecting member 390 and that is close to the fastening portion 3291; and a partial stop end face that is in the second stop end face 3251c of the second swing arm 325 and that is close to the second protrusion 3251f of the second swing arm 325 abuts against a partial stop face that is in the second stop face 3273a of the second stop portion 3273 of the limiting connecting member 390 and that is close to the third clamping portion 3294.

The following mainly describes, with reference to FIG. 28K, the partial stop face that is in the first stop face 3272a and that is close to the fastening portion 3291 and the partial stop face that is in the second stop face 3273a and that is close to the fastening portion 3291. For the partial stop face that is in the first stop face 3272a and that is close to the third clamping portion 3294 and the partial stop face that is in the second stop face 3273a and that is close to the third clamping portion 3294, refer to the following descriptions.

Specifically, when the first swing arm 322 and the second swing arm 325 are in the opened state, the first stop end face 3221c of the first swing arm 322 abuts against the first stop face 3272a of the limiting connecting member 390, the first stop face 3272a and the first stop portion 3272 of the limiting connecting member 390 are both partially located in the first avoidance space 3221b of the first swing arm 322, and the first compensation block 3221d of the first swing arm 322 is at least partially located in the first avoidance hole 3112 of the main inner shaft 311; and the second stop end face 3251c of the second swing arm 325 abuts against the second stop face 3273a of the limiting connecting member 390, the second stop face 3273a and the second stop portion 3273 of the limiting connecting member 390 are both partially located in the second avoidance space 3251b of the second swing arm 325, and the second compensation block 3251d of the second swing arm 325 is at least partially located in the second avoidance hole 3113 of the main inner shaft 311.

In a process in which the first swing arm 322 and the second swing arm 325 are folded relative to each other, the first swing arm 322 rotates counterclockwise, the first stop end face 3221c of the first swing arm 322 is away from the first stop face 3272a of the limiting connecting member 390, and one end of the first compensation block 3221d of the first swing arm 322 is close to the limiting connecting member 390 and is transferred to the first avoidance slot 3272b of the limiting connecting member 390; and the second swing arm 325 rotates clockwise, the second stop end face 3251c of the second swing arm 325 is away from the second stop face 3273a of the limiting connecting member 390, and the second compensation block 3251d of the second swing arm 325 is away from the limiting connecting member 390 and is transferred to the second avoidance slot 3273b of the limiting connecting member 390.

When the first swing arm 322 and the second swing arm 325 are in a closed state, an included angle between the first stop end face 3221c and the first stop face 3272a of the first swing arm 322 reaches a preset maximum value, the first compensation block 3221d of the first swing arm 322 is at least partially located in the first avoidance slot 3272b of the limiting connecting member 390, and the first stop portion 3272 of the limiting connecting member 390 may be partially located between the first rotating shaft 3306 and the first compensation block 3221d; and an included angle between the second stop end face 3251c and the second stop face 3273a of the second swing arm 325 reaches a preset maximum value, the second compensation block 3251d of the second swing arm 325 is at least partially located in the second avoidance slot 3273b of the limiting connecting member 390, and the second stop portion 3273 of the limiting connecting member 390 may be partially located between the second rotating shaft 3307 and the second compensation block 3251d.

In a process in which the first swing arm 322 and the second swing arm 325 are unfolded relative to each other, the first swing arm 322 rotates clockwise, the first stop end face 3221c of the first swing arm 322 is close to the first stop face 3272a of the limiting connecting member 390, and one end of the first compensation block 3221d of the first swing arm 322 is away from the limiting connecting member 390 and is clamped into the first avoidance hole 3112. The second swing arm 325 rotates counterclockwise, the second stop end face 3251c of the second swing arm 325 is close to the second stop face 3273a of the limiting connecting member 390, and one end of the second compensation block 3251d of the second swing arm 325 is away from the limiting connecting member 390 and is clamped into the second avoidance hole 3113.

In this embodiment, a stop cooperation structure of the first stop face 3272a of the limiting connecting member 390 and the first stop end face 3221c of the first swing arm 322 and a stop cooperation structure of the second stop face 3273a of the limiting connecting member 390 and the second stop end face 3251c of the second swing arm 325 may be disposed, to prevent the first swing arm 322 and the second swing arm 325 from continuing to rotate relative to each other when the first swing arm 322 and the second swing arm 325 are unfolded relative to each other to the opened state. Therefore, an included angle between the first swing arm 322 and the second swing arm 325 can reach a preset angle, to avoid excessive rotation. In addition, a stop action performed on the two swing arms (322 and 325) is implemented by using the independent limiting connecting member 390, to prevent the two swing arms (322 and 325) in the opened state from pressing cover bodies (312, 313, and 314) of the main shaft 31, prevent the main shaft 31 from being deformed, and ensure flatness of the main shaft 31. In addition, the cover bodies (312, 313, and 314) and the main inner shaft 311 are all fastened to the limiting connecting member 390, to help increase structural strength of the main shaft, and reduce a deformation amount of the entire main shaft in the opened state.

In some embodiments, the main shaft 31 further includes a median face 317, the first stop face 3272a and the second stop face 3273a are symmetrical about the median face 317, and the first swing arm 322 and the second swing arm 325 are symmetrical about the median face 317. In this application, the two stop faces (3272a and 3273a) and the two swing arms (322 and 325) are both symmetrical about a same face, so that when the first swing arm 322 abuts against the first stop face 3272a, the second swing arm 325 may also abut against the second stop face 3273a. In this application, the two stop faces (3272a and 3273a) and the two swing arms (322 and 325) are both symmetrical about a same face, so that when the foldable assembly is unfolded relative to each other to the opened state, the second swing arm 325 may also abut against the second stop face 3273a when the first swing arm 322 abuts against the first stop face 3272a, and overall coordination of the foldable assembly is high.

For example, the first stop face 3272a may be further parallel to the median face 317. In other words, the included angle between the first stop face 3272a and the median face 317 is 0°. In this embodiment, the first stop face 3272a, the second stop face 3273a, and the median face 317 are parallel to each other. When the first swing arm 322 and the second swing arm 325 are in the opened state, the first stop end face of the first swing arm 322 is parallel to the median face 317 and abuts against the first stop face 3272a, and the second stop end face of the second swing arm 325 is parallel to the median face 317 and abuts against the second stop face 3273a. In this case, the first stop end face 3221c, the second stop end face 3251c, and the median face 317 are also parallel to each other. In other words, a contact surface between the first swing arm 322 and the limiting connecting member 390 is parallel to the median face 317, and a contact surface between the second swing arm 325 and the limiting connecting member 390 is also parallel to the median face 317. Therefore, the first swing arm 322 exerts only an acting force parallel to the second direction on the limiting connecting member 390, and does not exert an acting force parallel to the first direction. The second swing arm 325 exerts only an acting force parallel to the second direction on the limiting connecting member 390, and does not exert an acting force parallel to the first direction. In the second direction, the acting force exerted by the first swing arm 322 on the limiting connecting member 390 and the acting force exerted by the second swing arm 325 on the limiting connecting member 390 cancel each other. In the first direction, the first swing arm 322 and the second swing arm 325 do not press the limiting connecting member 390. In addition, because the fastener 319 is configured to fasten the limiting connecting member 390 to the main inner shaft 311, when the first swing arm 322 and the second swing arm 325 are in the opened state, the first swing arm 322 and the second swing arm 325 do not exert an acting force in the first direction on the main inner shaft 311. Therefore, the first stop face 3272a is disposed parallel to the median face 317, to effectively reduce a force exerted on point at which the fastener 319 and the main inner shaft 311 are fastened, prevent the main inner shaft 311 from deforming in the first direction when the first swing arm 322 and the second swing arm 325 abut against the limiting connecting member 390, and ensure flatness of the main support face 3111 in the opened state.

In some other embodiments, the fastener 319 may alternatively not lock the bottom cover body 312. In other words, the limiting connecting member 390 is fastened to the main inner shaft 311 by using the fastener 319.

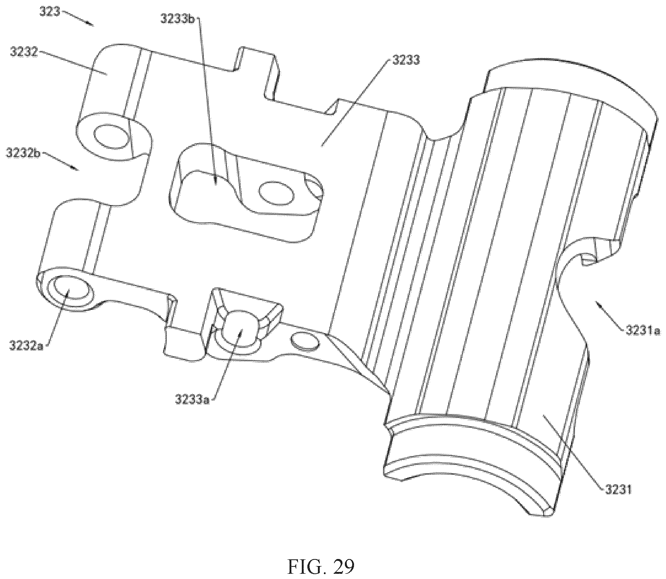

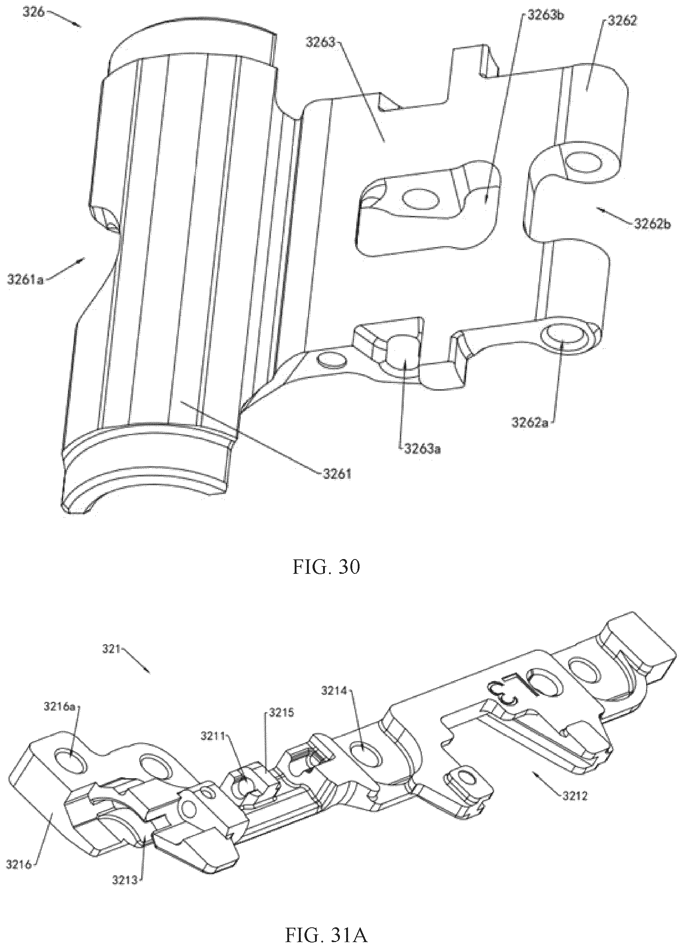

FIG. 29 is a diagram of a structure of a first rotating arm shown in FIG. 14. FIG. 30 is a diagram of a structure of the first rotating arm shown in FIG. 29 from another perspective.

For example, the first rotating arm 323 includes a first end portion 3231 and a second end portion 3232. The first end portion 3231 of the first rotating arm 323 is an arc-shaped arm, a first avoidance notch 3231a is further disposed in a middle portion of the first end portion 3231 of the first rotating arm 323, and the first avoidance notch 3231a is disposed away from the second end portion 3232 of the first rotating arm 323. The second end portion 3232 of the first rotating arm 323 is provided with the first rotating shaft hole 3232a, and the first rotating shaft hole 3232a is located at one end that is of the entire first rotating arm 323 and that faces away from the first end portion 3231. The second end portion 3232 of the first rotating arm 323 is further provided with a second avoidance notch 3232b, and the second avoidance notch 3232b communicates with the first rotating shaft hole 3232a.

The first rotating arm 323 further includes a connecting portion 3233 connected between the first end portion 3231 and the second end portion 3232. The connecting portion 3233 of the first rotating arm 323 may be bent relative to the first end portion 3231 of the first rotating arm 323, so that a structure design of the first rotating arm 323 is more flexible, and a connecting requirement and a shape requirement of the bottom connecting assembly 32 and the foldable assembly 3 can be better met. For example, the connecting portion 3233 of the first rotating arm 323 may be provided with a second rotating shaft hole 3233a and an avoidance hole 3233b, and the avoidance hole 3233b communicates with the second rotating shaft hole 3233a.

The first rotating arm 323 may be an integral structural member, to have high structural strength. For example, the first rotating arm 323 may be formed by using a metal injection molding process or another process. This is not strictly limited in this application.

For example, the second rotating arm 326 includes a first end portion 3261 and a second end portion 3262. The first end portion 3261 of the second rotating arm 326 is an arc-shaped arm, a first avoidance notch 3261a is further disposed in a middle portion of the first end portion 3261 of the second rotating arm 326, and the first avoidance notch 3261a is disposed away from the second end portion 3262 of the second rotating arm 326. The second end portion 3262 of the second rotating arm 326 is provided with the first rotating shaft hole 3262a, and the first rotating shaft hole 3262a is located at one end that is of the entire second rotating arm 326 and that faces away from the first end portion 3261. The second end portion 3262 of the second rotating arm 326 is further provided with a second avoidance notch 3262b, and the second avoidance notch 3262b communicates with the first rotating shaft hole 3262a.

The second rotating arm 326 further includes a connecting portion 3263 connected between the first end portion 3261 and the second end portion 3262. The connecting portion 3263 of the second rotating arm 326 may be bent relative to the first end portion 3261 of the second rotating arm 326, so that a structure design of the second rotating arm 326 is more flexible, and a connecting requirement and a shape requirement of the bottom connecting assembly 32 and the foldable assembly 3 can be better met. For example, the connecting portion 3263 of the second rotating arm 326 may be provided with a second rotating shaft hole 3263a and an avoidance hole 3263b, and the avoidance hole 3263b communicates with the second rotating shaft hole 3263a.

The second rotating arm 326 may be an integral structural member, to have high structural strength. For example, the second rotating arm 326 may be formed by using a metal injection molding process or another process. This is not strictly limited in this application.

For example, a shape of the first rotating arm 323 may be the same as a shape of the second rotating arm 326, and the first rotating arm 323 and the second rotating arm 326 may be of a same type of material, to reduce a quantity of types of materials of the foldable assembly 3, and reduce costs of the foldable assembly 3.

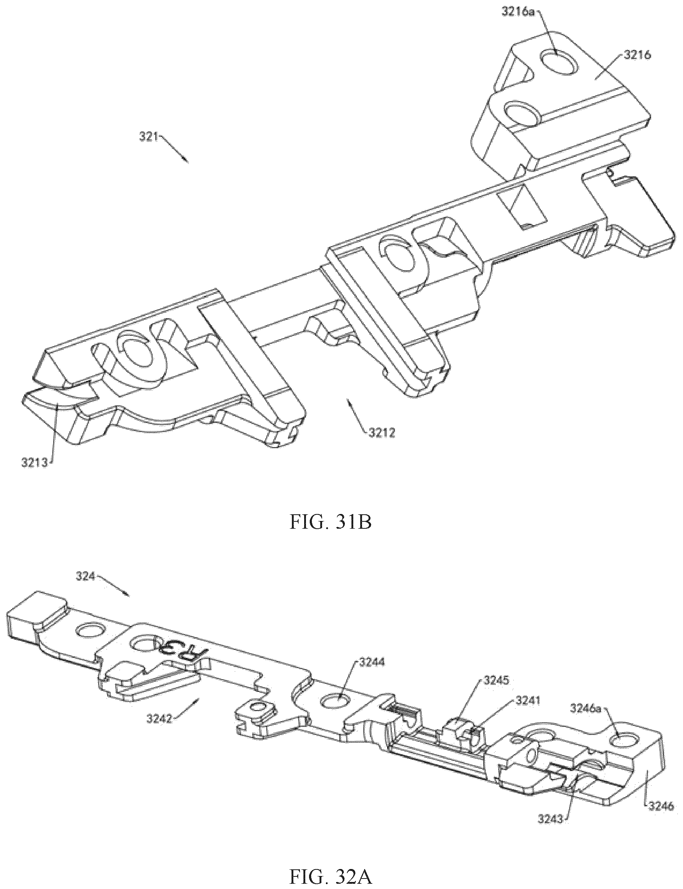

FIG. 31A is a diagram of a structure of the first fastening bracket shown in FIG. 14. FIG. 31B is a diagram of a structure of the first fastening bracket shown in FIG. 14 from another perspective.

For example, the first fastening bracket 321 may include a rotating shaft hole 3211, a sliding slot 3212, two arc-shaped slots 3213, and a plurality of fastening holes 3214. The first fastening bracket 321 may include a plurality of parts that are fastened to each other, and the foregoing hole structure or slot structure may be formed on different parts, or some parts are shared. For example, the first fastening bracket 321 includes a rotatable connecting block 3215, and the rotating shaft hole 3211 is formed in the rotatable connecting block 3215.

The sliding slot 3212 has two sidewalls that are disposed opposite to each other, and the two sidewalls that are disposed opposite to each other are recessed to jointly form guiding space of the sliding slot 3212. One arc-shaped slot 3213 is located at a bottom of the first fastening bracket 321, and a side of the arc-shaped slot 3213 may extend to a bottom end surface of the first fastening bracket 321. Another arc-shaped slot 3213 is located at a top of the first fastening bracket 321, and a side of the arc-shaped slot 3213 may extend to a top end surface of the first fastening bracket 321.

Refer to FIG. 4, FIG. 31A, and FIG. 31B together. In some embodiments, the first fastening bracket 321 is configured to be fastened to the first housing 1. The first fastening bracket 321 may further include a clamping block 3216, and the clamping block 3216 protrudes, to be clamped into the first housing 1. The clamping block 3216 may be provided with a fastening hole 3216a for fastening the first housing 1.

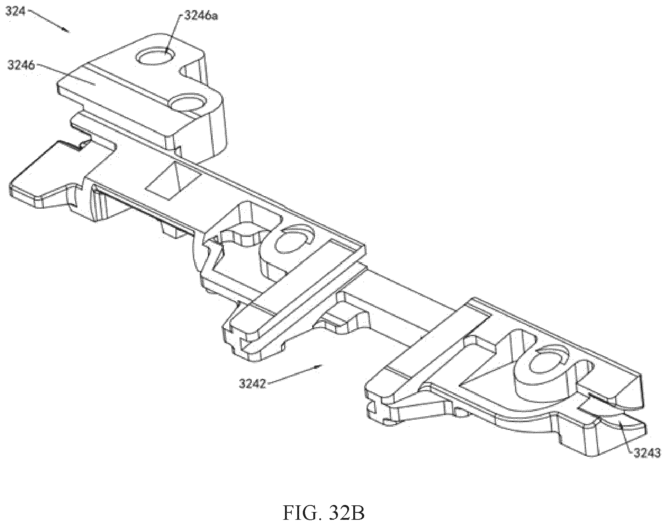

FIG. 32A is a diagram of a structure of the second fastening bracket shown in FIG. 14. FIG. 32B is a diagram of a structure of the second fastening bracket shown in FIG. 14 from another perspective.

For example, the second fastening bracket 324 may include a rotating shaft hole 3241, a sliding slot 3242, two arc-shaped slots 3243, and a plurality of fastening holes 3244. The second fastening bracket 324 may include a plurality of parts that are fastened to each other, and the foregoing hole structure or slot structure may be formed on different parts, or some parts are shared. For example, the second fastening bracket 324 further includes at least one rotatable connecting block 3245, and the rotating shaft hole 3241 is formed in the rotatable connecting block 3245.

The sliding slot 3242 has two sidewalls that are disposed opposite to each other, and the two sidewalls that are disposed opposite to each other are recessed to jointly form guiding space of the sliding slot 3242. One arc-shaped slot 3243 is located at a bottom of the second fastening bracket 324, and a side of the arc-shaped slot 3243 may extend to a bottom end surface of the second fastening bracket 324. Another arc-shaped slot 3243 is located at a top of the second fastening bracket 324, and a side of the arc-shaped slot 3243 may extend to a top end surface of the second fastening bracket 324.

Refer to FIG. 4, FIG. 32A, and FIG. 32B together. In some embodiments, the second fastening bracket 324 is configured to be fastened to the second housing 2. The second fastening bracket 324 may further include a clamping block 3246, and the clamping block 3246 protrudes, to be clamped into the second housing 2. The clamping block 3246 may be provided with a fastening hole 3246a for fastening the second housing 2.

A shape of the second fastening bracket 324 may be the same as a shape of the first fastening bracket 321, and the second fastening bracket 324 and the first fastening bracket 321 may be of a same type of material, to reduce a quantity of types of materials of the foldable assembly 3, and reduce costs of the foldable assembly 3.

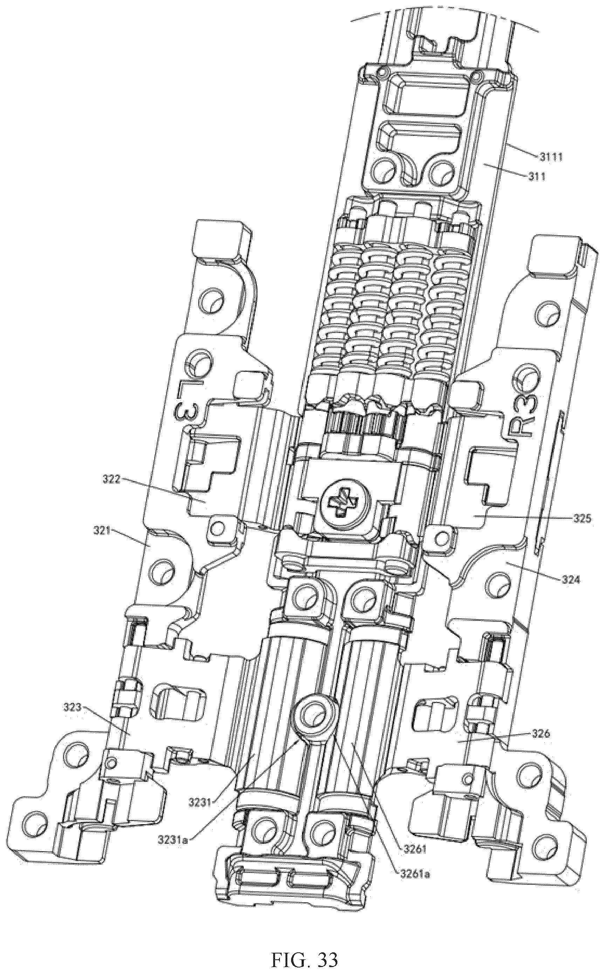

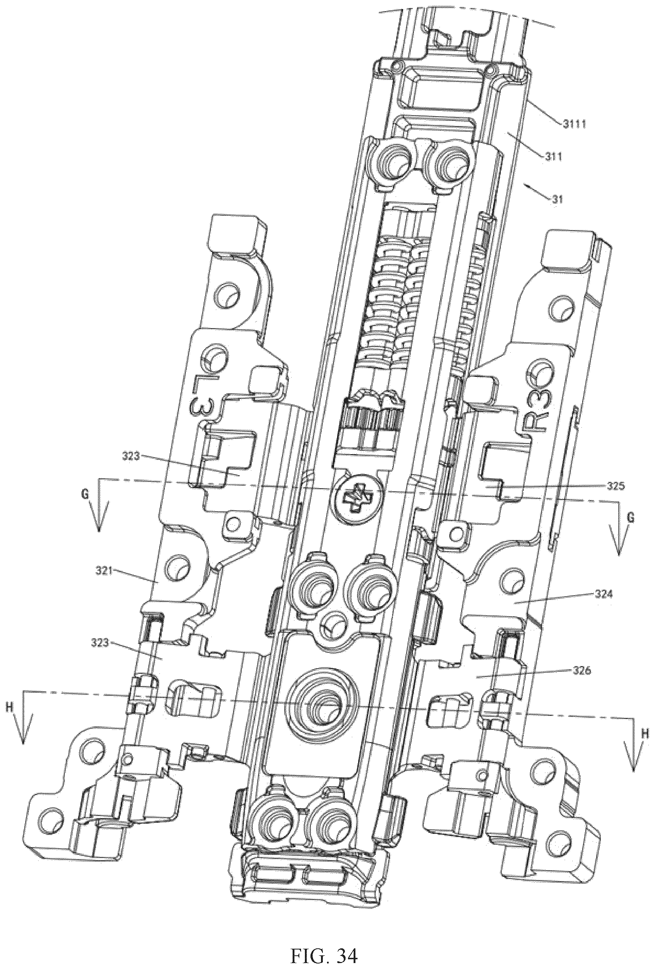

FIG. 33 is a diagram of an assembly structure after a bottom connecting assembly and a main inner shaft are installed. FIG. 34 is a diagram of a structure after the structure shown in FIG. 33 and a bottom cover body are assembled. To better illustrate the structure, a fastener between the bottom cover body 312 and the main inner shaft 311 is hidden in FIG. 34.

For example, the first rotating arm 323 and the second rotating arm 326 are installed on a side that is of the main inner shaft 311 and that faces away from the main support face 3111. For example, the first end portion 3231 of the first rotating arm 323 and the first end portion 3261 of the second rotating arm 326 may be installed in the second accommodation space 316 of the main shaft 31. The first avoidance notch 3231a of the first rotating arm 323 and the first avoidance notch 3261a of the second rotating arm 326 are disposed opposite to each other, and are jointly used to avoid a locating protrusion on the main inner shaft 311. The locating protrusion is configured to fasten the main inner shaft 311 and the bottom cover body 312. The first avoidance notch 3231a of the first rotating arm 323 can prevent the first rotating arm 323 and the main inner shaft 311 from interfering with each other, and the first avoidance notch 3261a of the second rotating arm 326 can prevent the second rotating arm 326 and the main inner shaft 311 from interfering with each other. The first swing arm 322 and the first rotating arm 323 are both connected to the first fastening bracket 321, and the second swing arm 325 and the second rotating arm 326 are both connected to the second fastening bracket 324.

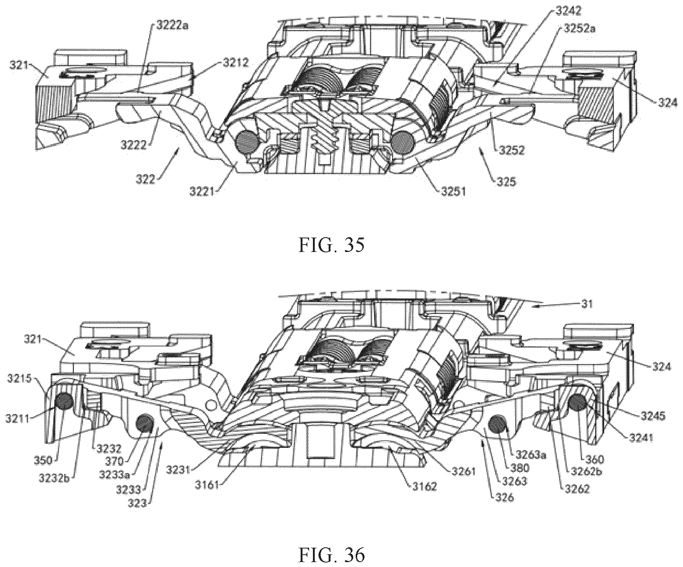

FIG. 35 is a diagram of a cross-sectional structure after the structure shown in FIG. 34 is cut along a cross section G-G.

For example, the sliding block 3222a of the second end portion 3222 of the first swing arm 322 may be installed in the sliding slot 3212 of the first fastening bracket 321, and can slide in the sliding slot 3212 of the first fastening bracket 321, so that the second end portion 3222 of the first swing arm 322 and the first fastening bracket 321 are slidably connected. The sliding block 3252a of the second end portion 3252 of the second swing arm 325 may be installed in the sliding slot 3242 of the second fastening bracket 324, and can slide in the sliding slot 3242 of the second fastening bracket 324, so that the second end portion 3252 of the second swing arm 325 and the second fastening bracket 324 are slidably connected.

Refer to FIG. 4 and FIG. 35. In the electronic device 100, the first fastening bracket 321 is fastened to the first housing 1, and the second fastening bracket 324 is fastened to the second housing 2. When the first housing 1 and the second housing 2 are unfolded or folded relative to each other, the first fastening bracket 321 moves along with the first housing 1, the second fastening bracket 324 moves along with the second housing 2, and the first fastening bracket 321 and the second fastening bracket 324 rotate relative to each other. Because the first end portion 3221 of the first swing arm 322 is rotatably connected to the main shaft 31, the second end portion 3222 of the first swing arm 322 is slidably connected to the first fastening bracket 321, the first end portion 3251 of the second swing arm 325 is rotatably connected to the main shaft 31, and the second end portion 3252 of the second swing arm 325 is slidably connected to the second fastening bracket 324, when the first housing 1 and the second housing 2 are unfolded or folded relative to each other, the first fastening bracket 321 and the second fastening bracket 324 drive the first swing arm 322 and the second swing arm 325 to rotate relative to each other and rotate relative to the main shaft 31.

It may be understood that in some other embodiments, the second end portion 3222 of the first swing arm 322 may alternatively be slidably connected to the first fastening bracket 321 in another manner, and the second end portion 3252 of the second swing arm 325 may be slidably connected to the second fastening bracket 324 in another manner. For example, the second end portion 3222 of the first swing arm 322 may be provided with a sliding slot, a sliding block is disposed on the first fastening bracket 321, and the sliding block is installed in the sliding slot and can slide in the sliding slot; and the second end portion 3252 of the second swing arm 325 may be provided with a sliding slot, a sliding block is disposed on the second fastening bracket 324, and the sliding block is installed in the sliding slot and can slide in the sliding slot. A specific implementation of slidably connecting the first swing arm 322 and the first fastening bracket 321 and a specific implementation of slidably connecting the second swing arm 325 and the second fastening bracket 324 are not strictly limited in this application.

Refer to FIG. 29, FIG. 30, and FIG. 36 together. FIG. 36 is a diagram of a cross-sectional structure after the structure shown in FIG. 34 is cut along a cross section H-H.

For example, the first end portion 3231 of the first rotating arm 323 may be installed in the first arc-shaped space 3161 of the second accommodation space 316, to be rotatably connected to the main shaft 31 by using a virtual shaft; and the second end portion 3232 of the first rotating arm 323 may be rotatably connected to the main shaft 31 by using a solid shaft. For example, the rotatable connecting block 3215 of the first fastening bracket 321 may be clamped into the second avoidance notch 3232b of the first rotating arm 323, and the rotating shaft 350 passes through the rotating shaft hole 3211 of the rotatable connecting block 3215 of the first fastening bracket 321 and the first rotating shaft hole 3232a of the second end portion 3232 of the first rotating arm 323, so that the first rotating arm 323 and the first fastening bracket 321 are rotatably connected. For example, the first end portion 3261 of the second rotating arm 326 may be installed in the second arc-shaped space 3162 of the second accommodation space 316, to be rotatably connected to the main shaft 31 by using a virtual shaft; and the second end portion 3262 of the second rotating arm 326 may be rotatably connected to the main shaft 31 by using a solid shaft. For example, the rotatable connecting block 3245 of the second fastening bracket 324 is clamped into the second avoidance notch 3262b of the second rotating arm 326, and another rotating shaft 360 passes through the rotating shaft hole 3241 of the rotatable connecting block 3245 of the second fastening bracket 324 and the first rotating shaft hole 3262a of the second end portion 3262 of the second rotating arm 326, so that the second rotating arm 326 and the second fastening bracket 324 are rotatably connected.

In other words, the first rotating arm 323 and the second rotating arm 326 are rotatably connected to a main support plate by using the virtual shaft; and the first rotating arm 323 is rotatably connected to the first fastening bracket 321 by using the solid shaft, and the second rotating arm 326 is rotatably connected to the second fastening bracket 324 by using the solid shaft.

In some other embodiments, the first end portion 3231 of the first rotating arm 323 and/or the first end portion 3261 of the second rotating arm 326 may alternatively be rotatably connected to the main shaft 31 in a solid shaft connection manner. This is not strictly limited in this application. In some other embodiments, the second end portion 3232 of the first rotating arm 323 may alternatively be rotatably connected to the first fastening bracket 321 in a virtual shaft connection manner; and/or the second end portion 3262 of the second rotating arm 326 may alternatively be connected to the second fastening bracket 324 in a virtual shaft connection manner. This is not strictly limited in this application.

Refer to FIG. 4 and FIG. 36. In the electronic device 100, the first fastening bracket 321 is fastened to the first housing 1, and the second fastening bracket 324 is fastened to the second housing 2. When the first housing 1 and the second housing 2 are unfolded or folded relative to each other, the first fastening bracket 321 moves along with the first housing 1, the second fastening bracket 324 moves along with the second housing 2, and the first fastening bracket 321 and the second fastening bracket 324 rotate relative to each other. Because the first end portion 3231 of the first rotating arm 323 is rotatably connected to the main shaft 31, the second end portion 3232 of the first rotating arm 323 is rotatably connected to the first fastening bracket 321, the first end portion 3261 of the second rotating arm 326 is rotatably connected to the main shaft 31, and the second end portion 3262 of the second rotating arm 326 is rotatably connected to the second fastening bracket 324, when the first housing 1 and the second housing 2 are unfolded or folded relative to each other, the first fastening bracket 321 and the second fastening bracket 324 drive the first swing arm 322 and the second swing arm 325 to rotate relative to each other and rotate relative to the main shaft 31.

Refer to FIG. 35 and FIG. 36. In this embodiment, the first swing arm 322 is rotatably connected to the main shaft 31 and is slidably connected to the first fastening bracket 321, to form a link sliding block structure, and the first rotating arm 323 is rotatably connected to the main shaft 31 and is rotatably connected to the first fastening bracket 321 to form a link structure; and the second swing arm 325 is rotatably connected to the main shaft 31 and is slidably connected to the second fastening bracket 324, to form a link sliding block structure, and the second rotating arm 326 is rotatably connected to the main shaft 31 and is rotatably connected to the second fastening bracket 324, to form a link structure. The foldable assembly 3 implements, by using the link sliding block structure and the link structure, a process in which the foldable assembly 3 is unfolded relative to each other or folded relative to each other. A quantity of components of the foldable assembly 3 is small, a cooperation relationship and a cooperation location are simple, and a component is easy to be manufactured and assembled, to facilitate mass production. In addition, because the main shaft 31 is linked to the first fastening bracket 321 by using the first swing arm 322 and the first rotating arm 323, and is linked to the second fastening bracket 324 by using the second swing arm 325 and the second rotating arm 326, the foldable assembly 3 has a good mechanism pull resistance capability and a good mechanism pressure resistance capability.

Refer to FIG. 4, FIG. 35, and FIG. 36. For example, the first fastening bracket 321 is configured to fasten the first housing 1, and the second fastening bracket 324 is configured to fasten the second housing 2. In this application, the foldable assembly 3 uses the first swing arm 322 and the first rotating arm 323 to jointly control a movement track of the first fastening bracket 321 and the first housing 1, and uses the second swing arm 325 and the second rotating arm 326 to jointly control a movement track of the second fastening bracket 324 and the second housing 2, so that in a process in which the first housing 1 and the second housing 2 are folded relative to each other, the first fastening bracket 321 drives the first housing 1 to move toward the main shaft 31, and the second fastening bracket 324 drives the second housing 2 to move toward the main shaft 31, and in a process in which the first housing 1 and the second housing 2 are unfolded relative to each other, the first fastening bracket 321 drives the first housing 1 to move away from the main shaft 31, and the second fastening bracket 324 drives the second housing 2 to move away from the main shaft 31. In other words, the foldable assembly 3 can implement an inward pull movement of a housing in a process in which the foldable apparatus 10 changes from the opened state to the closed state, and an outward push movement of a housing in a process in which the foldable apparatus 10 changes from the closed state to the opened state. Further, in a process of unfolding or folding the electronic device 100, a deformation movement centered on the flexible display 20 can be implemented, to reduce a risk of pulling or pressing the flexible display 20, to protect the flexible display 20, and improve reliability of the flexible display 20, so that the flexible display 20 and the electronic device 100 have a long service life.

When the first housing 1 and the second housing 2 rotate relative to each other to the opened state, the first fastening bracket 321 and the second fastening bracket 324 also rotate relative to each other to the opened state. Further, the first swing arm 322 and the second swing arm 325 also rotate relative to each other to the opened state. In this case, the first stop end face 3221c of the first end portion 3221 of the first swing arm 322 abuts against the first stop portion 3272 of the stop block 327, and the second stop end face 3251c of the first end portion 3251 of the second swing arm 325 abuts against the second stop portion 3273 of the stop block 327. The stop block 327 prevents a relative rotation angle between the first swing arm 322 and the second swing arm 325 from exceeding a preset value, to prevent the relative rotation angle between the first fastening bracket 321 and the second fastening bracket 324 from exceeding a preset value, and prevent the relative rotation angle between the first housing 1 and the second housing 2 from exceeding a preset value. Therefore, the stop block 327 stops the first swing arm 322 and the second swing arm 325, to prevent the first housing 1 and the second housing 2 from being overbent when the electronic device 100 is in the opened state, so as to prevent the flexible display 20 from being pulled by the first housing 1 and the second housing 2, improve reliability of the flexible display 20, and increase a service life of the flexible display 20.

In addition, the stop block 327 stops the first swing arm 322 and the second swing arm 325, so that when the included angle between the first housing 1 and the second housing 2 in the opened state is equal to a preset value, and the preset value is 180°, the foldable apparatus 10 provides a flat support environment for the flexible display 20, and the flexible display 20 has good flatness, to optimize light and shadow of the entire electronic device 100.

It may be understood that, there is easily a slight deviation due to a device, a process, or the like in a part manufacturing and assembling process of the foldable apparatus 10. Consequently, product precision after the foldable apparatus 10 is assembled is insufficient. For example, an angle between the two housings (1 and 2) in the opened state exceed the preset value. In this embodiment, after the entire foldable apparatus 10 is assembled, the included angle between the first housing 1 and the second housing 2 may be detected when the foldable apparatus 10 is in the opened state. If the included angle between the first housing 1 and the second housing 2 deviates from the preset value, a location of the stop block 327 may be adjusted by using the adjustment assembly 328, to adjust the included angle between the first swing arm 322 and the second swing arm 325 and the included angle between the first fastening bracket 321 and the second fastening bracket 324, so as to adjust the angle between the first housing 1 and the second housing 2, so that the angle between the first housing 1 and the second housing 2 can be changed to the preset value.

In addition, in a process in which the first swing arm 322 and the second swing arm 325 rotate relative to each other, friction torque is formed and a damping force is generated on a plurality of friction surfaces of the control mechanism, so that when the user rotates the first housing 1 and the second housing 2, a hand feeling is smooth and use experience is better. In addition, in a process in which the user opens the electronic device 100, if an external force is removed, the included angle between the first housing and the second housing may remain unchanged under an action of the damping force, to form a hover state. In the foregoing embodiments, the damping assembly 330 is disposed between the first end portion 3221 of the first swing arm 322 and the first end portion 3251 of the second swing arm 325, the first clamping block 3301 and the second clamping block 3302 form a clamping structure with the first swing arm 322, and the first clamping block 3301 and the second clamping block 3302 form a clamping structure with the second swing arm 325, to implement a damping action of the damping assembly 330 for the first swing arm 322 and the second swing arm 325. In some other embodiments, there may alternatively be two damping assemblies, and the damping assemblies are respectively disposed at a point at which the first fastening bracket and the second end portion of the first swing arm are slidably connected and a point at which the second fastening bracket and the second end portion of the second swing arm are slidably connected. It may be understood that, in this case, a damping cooperation structure in the first end portion of the first swing arm may be disposed at the second end portion of the first swing arm and cooperates with one damping assembly, and a damping cooperation structure in the first end portion of the second swing arm may be disposed at the second end portion of the second swing arm and cooperates with another damping assembly, to implement a damping action for the first swing arm and the second swing arm. The damping cooperation structures of the first swing arm and the second swing arm adaptively change based on structures of the damping assemblies.

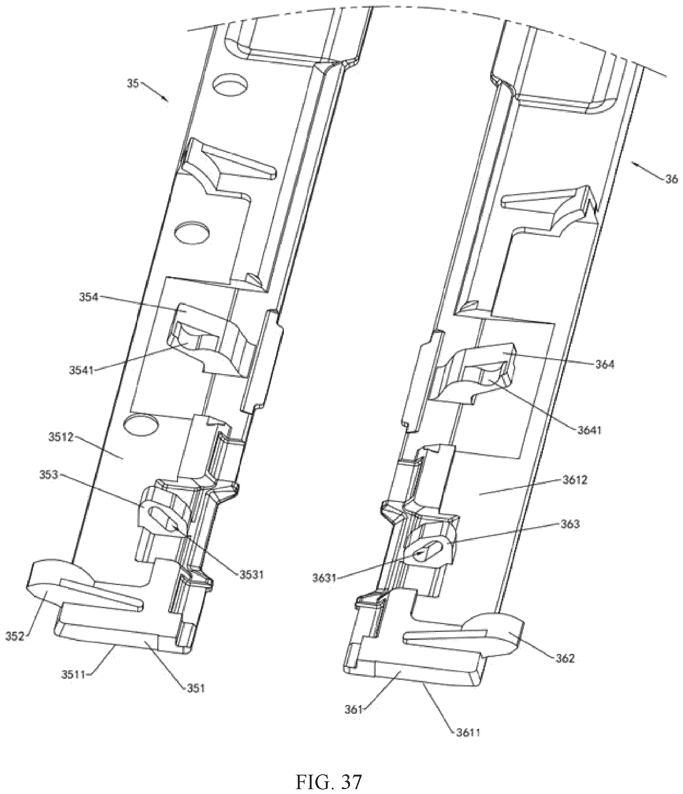

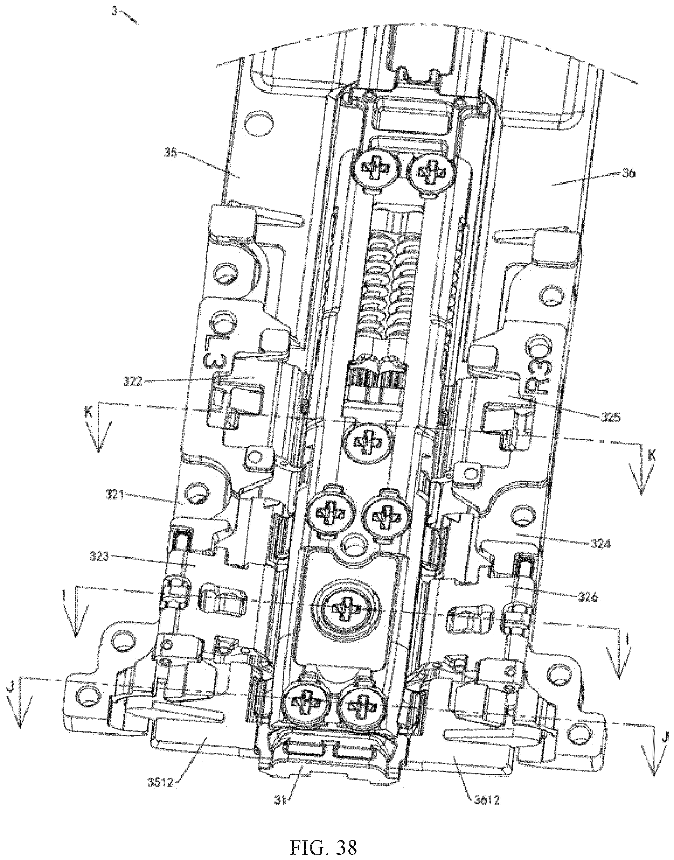

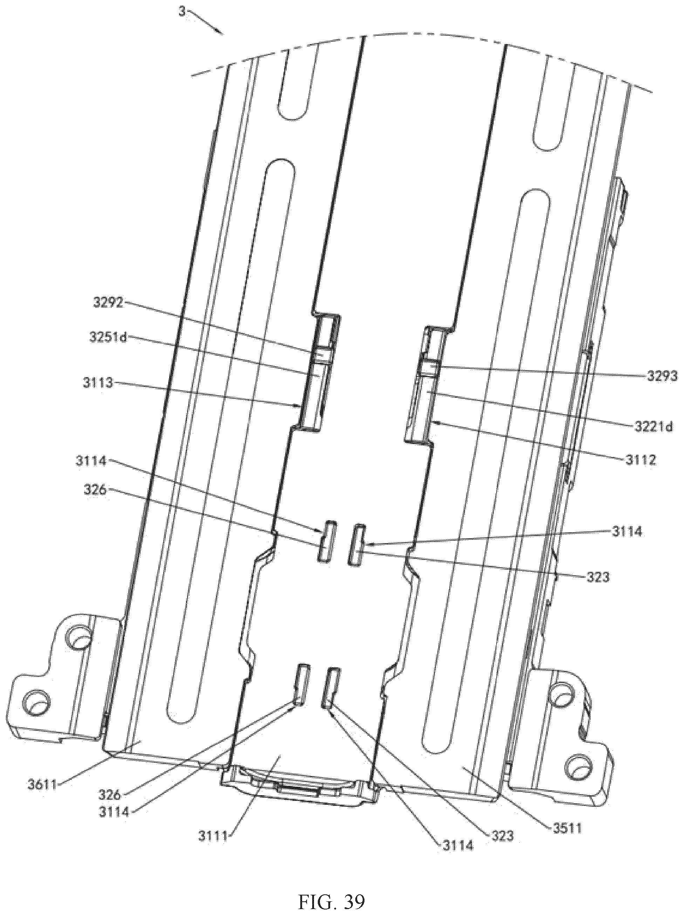

FIG. 37 is a diagram of a partial structure of a first support plate and a second support plate shown in FIG. 5. FIG. 38 is a diagram of a partial enlarged structure of a bottom connecting assembly of a foldable assembly. FIG. 39 is a diagram of a structure after the structure shown in FIG. 38 is folded leftward/rightward.

For example, as shown in FIG. 37, the first support plate 35 may include a first plate body 351, the first support face 3511 of the first support plate 35 is formed on a plate face of one side of the first plate body 351, and a first fastening face 3512 is formed on a plate face of the other side of the first plate body 351. The first support plate 35 may further include a plurality of first rotating blocks 352 disposed at intervals, and the first rotating block 352 is disposed on the first fastening face 3512. The first support plate 35 may further include a first guiding block 353, the first guiding block 353 is disposed on the first fastening face 3512, and the first guiding block 353 is provided with a guiding hole 3531. In some embodiments, the first support plate 35 may further include a first support block 354, and the first support block 354 is disposed on the first fastening face 3512. An arc-shaped support face 3541 is disposed on the first support block 354, a support face 3541 of the first support block 354 is disposed away from the first fastening face 3512, and the support face 3541 may be a recessed curved face.

The second support plate 36 may include a second plate body 361, a second support face 3611 of the second support plate 36 is formed on a plate face of one side of the second plate body 361, a second fastening face 3612 is formed on a plate face of the other side of the second plate body 361, the second support plate 36 may further include a plurality of second rotating blocks 362 disposed at intervals, and the second rotating block 362 is disposed on the second fastening face 3612. The second support plate 36 may further include a second guiding block 363, the second guiding block 363 is disposed on the second fastening face 3612, and the second guiding block 363 is provided with a guiding hole 3631. In some embodiments, the second support plate 36 may further include a second support block 364, and the second support block 364 is disposed on the second fastening face 3612. An arc-shaped support face 3641 is disposed on the second support block 364, a support face 3641 of the second support block 364 is disposed away from the second fastening face 3612, and the support face may be a recessed curved face 3641.

For example, with reference to FIG. 13, FIG. 37, and FIG. 38, the first support plate 35 and the second support plate 36 are connected to the bottom connecting assembly 32. The first fastening face 3512 of the first support plate 35 faces the bottom connecting assembly 32, and the first support plate 35 may be connected to the first fastening bracket 321 and the first rotating arm 323 by using a plurality of structures fastened to the first fastening face 3512 of the first support plate 35. The second fastening face 3612 of the second support plate 36 faces the bottom connecting assembly 32, and the second support plate 36 may be connected to the second fastening bracket 324 and the second rotating arm 326 by using a plurality of structures fastened to the second fastening face 3612 of the second support plate 36.

With reference to FIG. 4 and FIG. 39, for example, when the foldable assembly 3 is in the opened state, the first support plate 35 and the second support plate 36 are respectively located on two sides of the main shaft 31. The first support face 3511 of the first support plate 35, the main support face 3111 of the main shaft 31, and the second support face 3611 of the second support plate 36 face a same direction, and may be parallel to each other, for example, may be disposed to be flush with each other, to provide a flatter support environment for the bendable portion 202 of the flexible display 20.

When the foldable assembly 3 is in the opened state, the first compensation block 3221d of the first end portion 3221 of the first swing arm 322 and the first clamping portion 3292 of the clamping member 329 are partially located in the first avoidance hole 3112 of the main inner shaft 311; the second compensation block 3251d of the first end portion 3251 of the second swing arm 325 and the second clamping portion 3293 of the clamping member 329 are partially located in the second avoidance hole 3113 of the main inner shaft 311; and end portions of the first rotating arm 323 and the second rotating arm 326 are partially located in the third avoidance hole 3114. Because the first compensation block 3221d, the first clamping portion 3292, the first rotating arm 323, the second compensation block 3251d, the second clamping portion 3293, and the second rotating arm 326 fill an avoidance hole in the main inner shaft 311, and the first support plate 35, the second support plate 36, and the main inner shaft 311 in the electronic device 100 are disposed in a correspondence with the bendable portion 202 of the flexible display 20, the electronic device 100 is in the opened state, the bendable portion 202 of the flexible display 20 is not obviously recessed. When the foldable assembly 3 is in the opened state, an end face of the first compensation block 3221d, an end face of the first clamping portion 3292, an end face of the second compensation block 3251d, an end face of the second clamping portion 3293, a tail end face of the first end portion 3231 of the first rotating arm 323, a tail end face of the first end portion 3261 of the second rotating arm 326, and a main support face 3111 of the main inner shaft 311 are jointly spliced, to form a regular planar support structure. Therefore, when the electronic device 100 is in the opened state, the bendable portion 202 of the entire flexible display 20 has high flatness, and the user has good viewing experience.

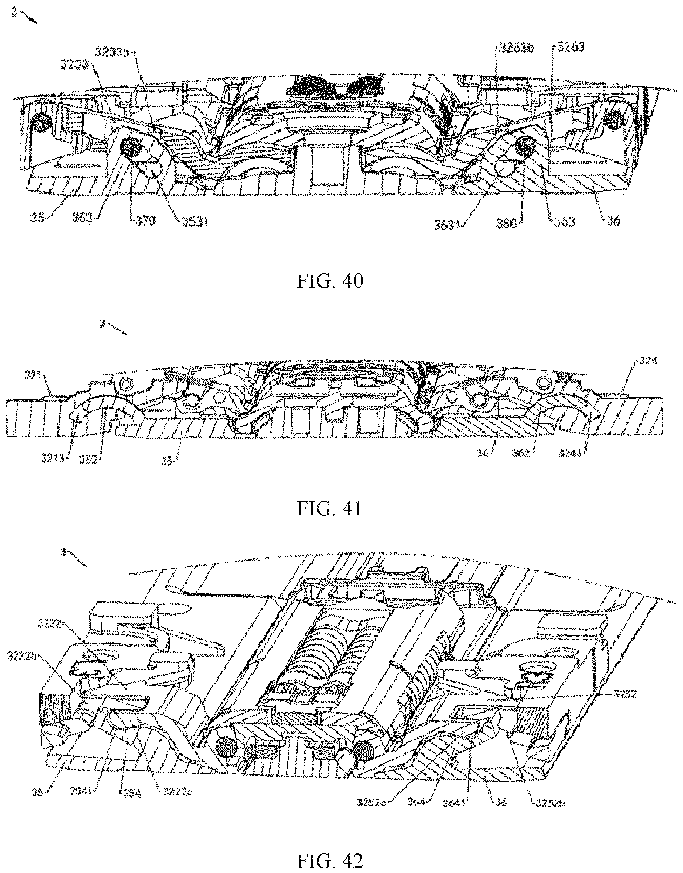

Refer to FIG. 36 and FIG. 40. FIG. 40 is a diagram of a cross-sectional structure after FIG. 38 is cut along a cross section I-I.

For example, the first support plate 35 is slidably connected to the first rotating arm 323. For example, the first guiding block 353 of the first support plate 35 is installed in the avoidance hole 3233b of the connecting portion 3233 of the first rotating arm 323, and the rotating shaft 370 passes through the second rotating shaft hole 3233a of the connecting portion 3233 of the first rotating arm 323 and the guiding hole 3531 of the first guiding block 353 of the first support plate 35, so that the first rotating arm 323 and the first support plate 35 are slidably connected. The second guiding block 363 of the second support plate 36 is installed in the avoidance hole 3263b of the connecting portion 3263 of the second rotating arm 326, and another rotating shaft 380 passes through the second rotating shaft hole 3263a of the connecting portion 3263 of the second rotating arm 326 and the guiding hole 3631 of the second guiding block 363 of the second support plate 36, so that the second rotating arm 326 and the second support plate 36 are slidably connected. It may be understood that, in some other embodiments, a cooperation structure between the sliding block and a sliding rail or another cooperation structure may alternatively be used to slidably connect the first rotating arm 323 and the first support plate 35 and slidably connect the second rotating arm 326 and the second support plate 36. This is not strictly limited in this application.

FIG. 41 is a diagram of a cross-sectional structure after FIG. 38 is cut along a cross section J-J.

For example, the first support plate 35 is rotatably connected to the first fastening bracket 321. For example, the first rotating block 352 of the first support plate 35 is installed in the arc-shaped slot 3213 of the first fastening bracket 321, so that the first support plate 35 and the first fastening bracket 321 are rotatably connected. The second support plate 36 is rotatably connected to the second fastening bracket 324. For example, the second rotating block 362 of the second support plate 36 is installed in the arc-shaped slot 3243 of the second fastening bracket 324, so that the second support plate 36 and the second fastening bracket 324 are rotatably connected. In other words, the first support plate 35 and the second support plate 36 are respectively rotatably connected to the first fastening bracket 321 and the second fastening bracket 324 by using virtual shafts. It may be understood that the first support plate 35 and/or the second support plate 36 may alternatively be rotatably connected to the first fastening bracket 321 and/or the second fastening bracket 324 by using the solid shaft. This is not strictly limited in this application.

It may be understood that in this embodiment, there are two groups of cooperation structures of the first rotating block 352 and the arc-shaped slot 3213. In some other embodiments, there may alternatively be one or more groups of cooperation structures of the first rotating block 352 and the arc-shaped slot 3213. There are two groups of cooperation structures of the second rotating block 362 and the arc-shaped slot 3243. In some other embodiments, there may alternatively be one or more groups of cooperation structures of the first rotating block 362 and the arc-shaped slot 3243. With reference to FIG. 4, FIG. 40, and FIG. 41, in this embodiment, the first support plate 35 and the first fastening bracket 321 are rotatably connected, the first support plate 35 and the first rotating arm 323 are slidably connected, the second support plate 36 and the second fastening bracket 324 are rotatably connected, and the second support plate 36 and the second rotating arm 326 are slidably connected. In the process in which the foldable apparatus 10 is folded or unfolded relative to each other, in other words, when the first housing 1 is folded or unfolded relative to the second housing 2, the first fastening bracket 321 and the second fastening bracket 324 rotate relative to each other, the first rotating arm 323 and the second rotating arm 326 rotate relative to each other, the first fastening bracket 321 and the first rotating arm 323 jointly drive the first support plate 35 to rotate, and the second fastening bracket 324 and the second rotating arm 326 jointly drive the second support plate 36 to rotate, so that the first support plate 35 and the second support plate 36 rotate relative to each other, to better support and protect the flexible display 20. The bendable portion 202 of the flexible display 20 is folded or unfolded relative to each other under an action of the first support plate 35 and the second support plate 36.

FIG. 42 is a diagram of a cross-sectional structure after FIG. 38 is cut along a cross section K-K.

For example, when the foldable assembly 3 is in the opened state, the first support block 354 of the first support plate 35 is clamped into the through hole 3222b of the second end portion 3222 of the first swing arm, the first support block 354 of the first support plate 35 abuts against the protrusion 3222c of the second end portion 3222 of the first swing arm 322, the second support block 364 of the second support plate 36 is clamped into the through hole 3252b of the second end portion 3252 of the second swing arm 325, and the second support block 364 of the second support plate 36 abuts against the protrusion 3252c of the second end portion 3252 of the second swing arm 325. The protrusion 3222c of the first swing arm 322 may abut against the arc-shaped support face 3541 of the first support block 354, and the protruding block 3252c of the second swing arm 325 may abut against the arc-shaped support face 3641 of the second support block 364. In this case, the first swing arm 322 can support the first support plate 35, and the second swing arm 325 can support the second support plate 36, so that a support environment including the first support plate 35 and the second support plate 36 is more reliable, to help increase a service life of the flexible display 20.

In some other embodiments, a location of a point at which the first support plate 35, the second support plate 36, and the bottom connecting assembly 32 are connected may alternatively change. For example, the first support plate 35 may be slidably connected to the first swing arm 322 without being slidably connected to the first rotating arm 323, and a location of a point at which the first support plate 35 and the first fastening bracket 321 are rotatably connected may alternatively be located in the middle of the first fastening bracket 321. This is not strictly limited in this application.

It should be noted that in the foregoing embodiments, the first swing arm 322 serves as the first transmission member, the second swing arm 325 serves as the second transmission member, and the stop block 327 stops the first housing 1 and the second housing 2 by stopping the first swing arm 322 and the second swing arm 325. Correspondingly, the first end portion 3221 of the first swing arm 322 has the first stop end face 3221c that is configured to cooperate to implement a stop, and the first end portion 3251 of the second swing arm 325 has a second stop end face 3251c that is configured to cooperate to implement a stop.

It may be understood that, in some other embodiments, the stop block 327 may alternatively stop another transmission member of the bottom connecting assembly 32, to stop the first housing 1 and the second housing 2. For example, the stop block 327 may stop the first transmission member and the second transmission member. The first transmission member may be the first rotating arm 323, and the second transmission member may be the second rotating arm 326. The following provides example descriptions.

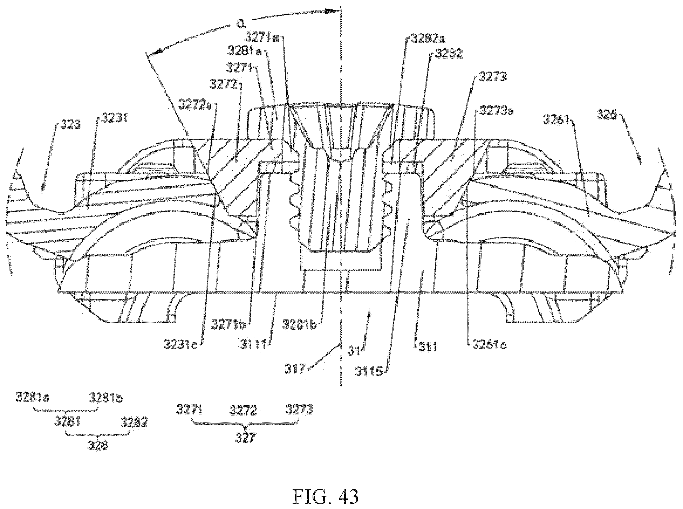

FIG. 43 is a diagram of an internal structure of a partial structure of an electronic device in some other embodiments according to this application. An electronic device 100 in this embodiment includes most technical features of the electronic device 100 in the foregoing embodiments. A main difference between the electronic device 100 in this embodiment and the electronic device 100 in the foregoing embodiments is as follows: Structures of a first rotating arm 323 and a second rotating arm 326 of the electronic device 100 in this embodiment slightly change, an installation location of a stop block 327 changes, a structure of a main shaft 31 adaptively changes, and the stop block 327 limits the first rotating arm 323 and the second rotating arm 326. For another design of the electronic device 100 in this embodiment, refer to the foregoing embodiments. Details are not described below. Details are as follows:

In some embodiments, a foldable assembly 3 may include a main shaft 31, the first rotating arm 323, the second rotating arm 326, and the stop block 327. The main shaft 31 may include a main inner shaft 311, the main inner shaft 311 may include a main support face 3111, and the main support face 3111 is configured to support the bendable portion 202 of the flexible display 20 (as shown in FIG. 4). A protruding block 3115 may be further disposed on the main inner shaft 311 of the main shaft 31, and the protruding block 3115 protrudes away from the main support face 3111.

The first rotating arm 323 may include a first end portion 3231, and the first end portion 3231 of the first rotating arm 323 has a first stop end face 3231c. The second rotating arm 326 may include a first end portion 3261, and the first end portion 3261 of the second rotating arm 326 has a second stop end face 3261c.

The stop block 327 may include a main body portion 3271, a first stop portion 3272, and a second stop portion 3273, the first stop portion 3272 is fastened on one side of the main body portion 3271, and the second stop portion 3273 is fastened on the other side of the main body portion 3271. The main body portion 3271 may be provided with a through hole 3271a and a limiting slot 3271b, and the limiting slot 3271b communicates with the through hole 3271a. The stop block 327 may further include a first stop face 3272a and a second stop face 3273a. The first stop face 3272a and the second stop face 3273a are disposed away from each other. The first stop face 3272a may be formed on an end face that is of the first stop portion 3272 and that faces away from the main body portion 3271, and the second stop face 3273a may be formed on an end face that is of the second stop portion 3273 and that faces away from the main body portion 3271.

For example, the foldable assembly 3 may further include an adjustment assembly 328, and the adjustment assembly 328 is configured to adjust relative locations of the stop block 327 and the main inner shaft 311 of the main shaft 31 in a thickness direction of the foldable assembly 3. The adjustment assembly 328 may include a limiting member 3281 and an elastic member 3282. The limiting member 3281 may include a limiting end 2381a and a connecting segment. The elastic member 3282 may be an elastic gasket, and the elastic member 3282 may be provided with a through hole 3282a.

In some embodiments, the first rotating arm 323 and the second rotating arm 326 are installed on two sides of the main shaft 31, and the stop block 327 is fastened to the main shaft 31. For example, the first rotating arm 323 and the second rotating arm 326 are installed on two sides of the protruding block 3115 of the main inner shaft 311 of the main shaft 31. The elastic member 3282 is located between the protruding block 3115 and the stop block 327, and the protruding block 3115 is built into the through hole 3282a of the elastic member 3282 and the limiting slot 3271b of the stop block 327, to implement limiting of the stop block 327 in an extension direction of the main shaft 31. The protruding block 3115 may be provided with a threaded hole. The connecting end 3281b of the limiting member 3281 may be provided with an external thread. For example, the limiting member 3281 may be a screw. The limiting end 2381a of the limiting member 3281 is located on a side that is of the stop block 327 and that faces away from the main inner shaft 311, and the connecting end 3281b of the limiting member 3281 passes through the through hole 3271a and the limiting slot 3271b of the stop block 327, and is threadedly connected to the main inner shaft 311 through the threaded hole. The elastic member 3282 is in a compressed state, and two end faces of the elastic member 3282 respectively abut against the stop block 327 and the protruding block 3115 of the main inner shaft 311. Further, the stop block 327 and the main shaft 31 are fastened.

In this embodiment, when the first rotating arm 323 and the second rotating arm 326 are unfolded relative to each other, the first stop end face 3231c of the first rotating arm 323 rotates toward the first stop face 3272a of the stop block 327, and the second stop end face 3261c of the second rotating arm 326 rotates toward the second stop face 3273a of the stop block 327. When the first rotating arm 323 and the second rotating arm 326 are in an opened state, the first stop end face 3231c partially abuts against the first stop face 3272a of the stop block 327, and the second stop end face 3261c partially abuts against the second stop face 3273a of the stop block 327, to ensure that an included angle between the first rotating arm 323 and the second rotating arm 326 is a preset value, and avoid excessive rotation. Further, when it is ensured that the entire electronic device 100 is in an opened state, an included angle between the first housing 1 and the second housing 2 is a preset value, to prevent the entire flexible display 20 from being overbent, and increase a service life of the flexible display 20. In addition, in a symmetrical structure of the first stop face 3272a and the second stop face 3273a, a stop action performed on the two rotating arms (323 and 326) can be implemented by using only one stop block 327, to effectively reduce a quantity of stop blocks 327 required by the foldable assembly 3, and reduce space that is inside the foldable assembly 3 and that is occupied by the stop block 327. In addition, in this embodiment, the stop action performed on the two rotating arms (323 and 326) can be implemented by using only one stop block 327, to effectively reduce a quantity of stop blocks 327 required by the foldable assembly 3, and reduce space that is inside the foldable assembly 3 and that is occupied by the stop block 327.

In some embodiments, the main shaft 31 further includes a median face 317, the first stop face 3272a and the second stop face 3273a are symmetrical about the median face 317, and the first rotating arm 323 and the second rotating arm 326 are symmetrical about the median face 317. The two stop faces (3272a and 3273a) and the two rotating arms (323 and 326) are symmetrical about a same face, so that when the first rotating arm 323 and the second rotating arm 326 are in the opened state, and the included angle between the first rotating arm 323 and the second rotating arm 326 reaches a preset value, the first stop face 3272a of the stop block 327 abuts against the first stop end face 3231c of the first rotating arm 323, and the second stop face 3273a of the stop block 327 abuts against the second stop end face 3261c of the second rotating arm 326. Therefore, stability of the entire main shaft 31 is high, and stability of the entire bottom connecting assembly 32 is high. In addition, a deformation amount after the stop block 327 is pressed is small, to help ensure precise control of the included angle when the first rotating arm 323 and the second rotating arm 326 are opened relative to each other.

For example, an included angle α between the first stop face 3272a and the median face 317 falls within a range of 0° to 45°. A range of the included angle α between the first stop face 3272a and the median face 317 is controlled, to effectively reduce a value of a combined force exerted by the first rotating arm 323 and the second rotating arm 326 on the stop block 327, reduce an interacting force between the stop block 327 and a fastening structure (namely, the limiting member 3281) between the stop block 327 and the main shaft 31, reduce an interacting force between the fastening structure and the main shaft 31, and help increase structural security of the fastening structure and increase security of the foldable assembly 3.

In some embodiments, when the included angle α between the first stop face 3272a and the median face 317 is greater than 0°, the included angle between the first rotating arm 323 and the second rotating arm 326 in the opened state may be controlled by adjusting relative locations of the stop block 327 and the main shaft 31 in the thickness direction of the foldable assembly 3. Specifically, if the included angle between the first rotating arm 323 and the second rotating arm 326 exceeds a preset value, in other words, an angle between the first rotating arm 323 and the second rotating arm 326 in the opened state is too large, the limiting member 3281 may be rotated, so that the limiting end 2381a of the limiting member 3281 is close to the main shaft 31, the stop block 327 presses the elastic member 3282 when being pressed by the limiting end 2381a, the elastic member 3282 is compressed, and the stop block 327 is close to the main shaft 31 along with the limiting end 2381a. The first stop face 3272a of the stop block 327 presses the first stop end face 3231c of the first rotating arm 323, the first rotating arm 323 rotates counterclockwise under an action of a pressure force, the second stop face 3273a of the stop block 327 presses the second stop end face 3261c of the second rotating arm 326, the second rotating arm 326 rotates clockwise under an action of a pressure force, and the included angle between the first rotating arm 323 and the second rotating arm 326 may be reduced to the preset value. Therefore, the flexible display 20 can be effectively prevented from being overbent because the included angle between the first rotating arm 323 and the second rotating arm 326 is too large, to increase a service life of the flexible display 20. If the included angle between the first rotating arm 323 and the second rotating arm 326 is less than a preset value, in other words, the included angle between the first rotating arm 323 and the second rotating arm 326 in the opened state is too small, the limiting member 3281 may be reversely rotated, so that the limiting end 2381a of the limiting member 3281 is away from the main shaft 31, and further, the stop block 327 is away from the main shaft 31 along with the limiting end 2381a under an elastic force of the elastic member 3282. The first stop face 3272a of the stop block 327 is away from the first stop end face 3231c of the first rotating arm 323, there is a gap between the first stop face 3272a of the stop block 327 and the first stop end face 3231c of the first rotating arm 323, and the first rotating arm 323 continues to rotate clockwise. The second stop face 3273a of the stop block 327 is away from the second stop end face 3261c of the second rotating arm 326, there is a gap between the second stop face 3273a of the stop block 327 and the second stop end face 3261c of the second rotating arm 326, the second rotating arm 326 continues to rotate counterclockwise, and the included angle between the first rotating arm 323 and the second rotating arm 326 may be increased to the preset value. A relative distance between the stop block 327 and the first rotating arm 323 in the thickness direction of the foldable apparatus 10 is increased, to effectively prevent the flexible display 20 from being pressed when the included angle between the first rotating arm 323 and the second rotating arm 326 is too small, and increase a service life of the flexible display 20.

It may be understood that the adjustment assembly 328 may alternatively not be provided with the elastic member 3282, and the adjustment assembly 328 uses the limiting end 2381a of the limiting member 3281 and the main inner shaft 311 to jointly limit movement space of the stop block 327 in the thickness direction of the foldable assembly 3. In this case, the relative locations of the stop block 327 and the main shaft 31 may still be adjusted by adjusting relative locations of the limiting member 3281 and the main shaft 31, to adjust the included angle between the first rotating arm 323 and the second rotating arm 326 in the opened state.

In some other embodiments, the foldable assembly 3 may not be provided with the adjustment assembly 328, and the stop block 327 and the main inner shaft 311 are fastened by using only the fastener. In this case, the stop block 327 and the main inner shaft 311 are fastened relative to each other. The first stop face 3272a of the stop block 327 may still perform a stop action on the first rotating arm 323, and the second stop face 3273a of the stop block 327 may still perform a stop action on the second rotating arm 326.

It may be understood that descriptions are provided by using an example in which the electronic device 100 is a mobile phone in the foregoing embodiments. When the electronic device 100 is a foldable electronic product such as a tablet, a notebook computer, or a wearable device, and the foldable apparatus 10 is in the opened state, the included angle between the first housing 1 and the second housing 2 may alternatively be 120°, 150°, or another angle. In other words, based on the stop action performed by the stop block 327, when first stop end faces (3221c and 3231c) of a first transmission member abut against the first stop face 3272a and second stop end faces (3251c and 3261c) of a second transmission member abut against the second stop face 3273a, the included angle between the first housing 1 and the second housing 2 is 120°, 150°, or another angle, to prevent the flexible display 20 from being overbent. In addition, the adjustment assembly 328 may be further disposed to adjust the relative locations of the first stop face 3272a and the first stop end faces (3221c and 3231c), and the relative locations of the second stop face 3273a and the second stop end faces (3251c and 3261c), to eliminate an error in part precision and part assembling.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (100), comprising a foldable apparatus (10) and a flexible display (20), wherein
the foldable apparatus (10) comprises a first housing (1), a second housing (2), and a foldable assembly (3), the foldable assembly (3) is connected to the first housing (1) and the second housing (2), and through movement of the foldable assembly (3), the first housing (1) and the second housing (2) are capable of being unfolded relative to each other to an opened state or folded relative to each other to a closed state;
the flexible display (20) comprises a first non-bendable portion (201), a bendable portion (202), and a second non-bendable portion (203) that are sequentially arranged, the first non-bendable portion (201) is fastened to the first housing (1), the second non-bendable portion (203) is fastened to the second housing (2), and the bendable portion (202) is deformed in a process in which the first housing (1) and the second housing (2) are unfolded relative to each other or folded relative to each other;
the foldable assembly (3) comprises a main shaft (31), a first fastening bracket (321), first transmission members (322 and 323), a second fastening bracket (324), second transmission members (325 and 326), and a stop block (327);
the first fastening bracket (321) is fastened to the first housing (1), and the second fastening bracket (324) is fastened to the second housing (2);
first end portions (3221 and 3231) of the first transmission members (322 and 323) are rotatably connected to the main shaft (31), second end portions (3222 and 3232) of the first transmission members (322 and 323) are connected to the first fastening bracket (321), and the first end portions (3221 and 3231) of the first transmission members (322 and 323) have first stop end faces (3221c and 3231c);
first end portions (3251 and 3261) of the second transmission members (325 and 326) are rotatably connected to the main shaft (31), second end portions (3252 and 3262) of the second transmission members (325 and 326) are connected to the second fastening bracket (324), and the first end portions (3251 and 3261) of the second transmission members (325 and 326) have second stop end faces (3251c and 3261c);
the stop block (327) comprises a first stop face (3272a) and a second stop face (3273a) that are disposed away from each other, and the stop block (327) is installed in the main shaft (31);
in a process in which the first housing (1) and the second housing (2) are unfolded relative to each other, the first stop end faces (3221c and 3231c) are close to the first stop face (3272a), and the second stop end faces (3251c and 3261c) are close to the second stop face (3273a); and
when the first housing (1) and the second housing (2) are in the opened state, the first stop end faces (3221c and 3231c) abut against the first stop face (3272a), and the second stop end faces (3251c and 3261c) abut against the second stop face (3273a).

2. The electronic device (100) according to claim 1, wherein the main shaft (31) has a main support face (3111) and a median face (317), the main support face (3111) is configured to support the bendable portion (202), and the median face (317) is perpendicular to the main support face (3111) and is parallel to an extension direction of the main shaft (31); and
the first stop face (3272a) and the second stop face (3273a) are symmetrical about the median face (317), and the first transmission members (322 and 323) and the second transmission members (325 and 326) are symmetrical about the median face (317).

3. The electronic device (100) according to claim 2, wherein the stop block (327) is fastened to the main shaft (31), and the first stop face (3272a) is parallel to the median face (317).

4. The electronic device (100) according to claim 3, wherein the main shaft (31) comprises a main inner shaft (311) and cover bodies (312, 313, and 314), the stop block (327) is located between the main inner shaft (311) and the cover bodies (312, 313, and 314), and the main inner shaft (311), the stop block (327), and the cover bodies (312, 313, and 314) are tightly locked by using a fastener (319).

5. The electronic device (100) according to claim 3 or 4, wherein the first transmission members (322 and 323) are a first swing arm (322), a second end portion (3222) of the first swing arm (322) is slidably connected to the first fastening bracket (321), the second transmission members (325 and 326) are a second swing arm (325), and a second end portion (3252) of the second swing arm (325) is slidably connected to the second fastening bracket (324).

6. The electronic device (100) according to claim 5, wherein the foldable assembly (3) further comprises a clamping member (329), the clamping member (329) comprises a fastening portion (3291), a first clamping portion (3292), and a second clamping portion (3293), the first clamping portion (3292) and the second clamping portion (3293) are respectively fastened on two sides of the fastening portion (3291), the fastening portion (3291) is fastened to the main shaft (31), the first clamping portion (3292) clamps the first swing arm (322), and is configured to limit movement of the first swing arm (322) in the extension direction of the main shaft (31), and the second clamping portion (3293) clamps the second swing arm (325), and is configured to limit movement of the second swing arm (325) in the extension direction of the main shaft (31); and
the stop block (327) comprises a first stop portion (3272) and a second stop portion (3273), the first stop portion (3272) is fastened to the first clamping portion (3292), the first stop face (3272a) is formed on an end face that is of the first stop portion (3272) and that faces away from the fastening portion (3291), the second stop portion (3273) is fastened to the second clamping portion (3293), and the second stop face (3273a) is formed on an end face that is of the second stop portion (3273) and that faces away from the fastening portion (3291).

7. The electronic device (100) according to claim 6, wherein the clamping member (329) and the stop block (327) jointly form an integral limiting connecting member (390).

8. The electronic device (100) according to claim 2, wherein an included angle between the first stop face (3272a) and the median face (317) is greater than 0°; and
the foldable assembly (3) further comprises an adjustment assembly (328), and the adjustment assembly (328) is configured to adjust relative locations of the stop block (327) and the main shaft (31) in a thickness direction of the foldable assembly (3).

9. The electronic device (100) according to claim 8, wherein the adjustment assembly (328) comprises a limiting member (3281) and an elastic member (3282), the limiting member (3281) comprises a limiting end (3281a) and a connecting end (3281b), the limiting end (3281a) of the limiting member (3281) is located on a side that is of the stop block (327) and that faces away from the main shaft (31), the connecting end (3281b) of the limiting member (3281) passes through the stop block (327) and is threadedly connected to the main shaft (31), and the elastic member (3282) abuts between the stop block (327) and the main shaft (31).

10. The electronic device (100) according to claim 9, wherein a protruding block (3115) is disposed on the main shaft (31), and the protruding block (3115) is disposed away from the main support face (3111);
the stop block (327) comprises a main body portion (3271), a first stop portion (3272), and a second stop portion (3273), the first stop portion (3272) is fastened on a side of the main body portion (3271), the first stop face (3272a) is formed on an end face that is of the first stop portion (3272) and that faces away from the main body portion (3271), the second stop portion (3273) is fastened on the other side of the main body portion (3271), and the second stop face (3273a) is formed on an end face that is of the second stop portion (3273) and that faces away from the main body portion (3271); and
the main body portion (3271) is provided with a through hole (3271a) and a limiting slot (3271b), the limiting slot (3271b) is located on a side that is of the through hole (3271a) and that is close to the main shaft (31), and communicates with the through hole (3271a), the protruding block (3115) is built into the limiting slot (3271b), and the connecting end (3281b) of the limiting member (3281) is threadedly connected to the protruding block (3115) through the through hole (3271a) and the limiting slot (3271b).

11. The electronic device (100) according to any one of claims 8 to 10, wherein the included angle between the first stop face (3272a) and the median face (317) falls within a range of 0° to 45°.

12. The electronic device (100) according to any one of claims 8 to 11, wherein the first transmission members (322 and 323) are a first swing arm (322), a second end portion (3222) of the first swing arm (322) is slidably connected to the first fastening bracket (321), the second transmission members (325 and 326) are a second swing arm (325), and a second end portion (3252) of the second swing arm (325) is slidably connected to the second fastening bracket (324).

13. The electronic device (100) according to claim 12, wherein the foldable assembly (3) further comprises a clamping member (329), the clamping member (329) comprises a fastening portion (3291), a first clamping portion (3292), and a second clamping portion (3293), the first clamping portion (3292) and the second clamping portion (3293) are respectively fastened on two sides of the fastening portion (3291), the fastening portion (3291) is fastened to the main shaft (31), the first clamping portion (3292) clamps the first swing arm (322), and is configured to limit movement of the first swing arm (322) in the extension direction of the main shaft (31), and the second clamping portion (3293) clamps the second swing arm (325), and is configured to limit movement of the second swing arm (325) in the extension direction of the main shaft (31); and
the fastening portion (3291) is stacked between the stop block (327) and the main shaft (31).

14. The electronic device (100) according to any one of claims 6, 7, 12, and 13, wherein first avoidance space (3221b) is disposed at the first end portion (3221) of the first swing arm (322), the first stop end face (3221c) is formed on a wall face of the first avoidance space (3221b), the first stop face (3272a) is at least partially located in the first avoidance space (3221b), second avoidance space (3251b) is disposed at the first end portion (3251) of the second swing arm (325), the second stop end face (3251c) is formed on a wall face of the second avoidance space (3251b), and the second stop face (3273a) is at least partially located in the second avoidance space (3251b).

15. The electronic device (100) according to claim 14, wherein the first end portion (3221) of the first swing arm (322) further comprises a first compensation block (3221d), the main shaft (31) is provided with a first avoidance hole (3112), the first compensation block (3221d) is at least partially located in the first avoidance hole (3112) when the first housing (1) and the second housing (2) are in the opened state, and the first compensation block (3221d) is configured to assist in supporting the bendable portion (202).

16. The electronic device (100) according to claim 15, wherein the stop block (327) is further provided with a first avoidance slot (3272b), and the first avoidance slot (3272b) is located between the first stop face (3272a) and the second stop face (3273a); and
when the first housing (1) and the second housing (2) are in the closed state, the first compensation block (3221d) is at least partially located in the first avoidance slot (3272b).

17. The electronic device (100) according to any one of claims 6, 7, and 12 to 16, wherein the foldable assembly (3) further comprises a damping assembly (330), the damping assembly (330) is installed on the main shaft (31), the damping assembly (330) connects the first end portion (3221) of the first swing arm (322) and the first end portion (3251) of the second swing arm (325), and the damping assembly (330) is configured to provide resistance in a process in which the first swing arm (322) and the second swing arm (325) rotate relative to each other.

18. The electronic device (100) according to claim 17, wherein the damping assembly (330) comprises a first clamping block (3301), a second clamping block (3302), and an elastic component (3304);
the first clamping block (3301) is provided with a plurality of first protruding block groups (3301b), the second clamping block (3302) is provided with a plurality of second protruding block groups (3302b), and the plurality of first protruding block groups (3301b) and the plurality of second protruding block groups (3302b) are disposed opposite to each other in a one-to-one correspondence;
the first end portion (3221) of the first swing arm (322) comprises a plurality of first protrusions (3221e) and a plurality of second protrusions (3221f) that are disposed away from each other, and the first end portion (3251) of the second swing arm (325) comprises a plurality of first protrusions (3251e) and a plurality of second protrusions (3251f) that are disposed away from each other;
the first end portion (3221) of the first swing arm (322) and the first end portion (3251) of the second swing arm (325) are both located between the first clamping block (3301) and the second clamping block (3302); and
the elastic component (3304) is located on a side that is of the second clamping block (3302) and that faces away from the first clamping block (3301), the elastic component (3304) is configured to generate an elastic force, so that the first end portion (3221) of the first swing arm (322) and the first end portion (3251) of the second swing arm (325) both abut against the first clamping block (3301) and the second clamping block (3302), the plurality of first protrusions (3221e) of the first swing arm (322) cooperate with one of the first protruding block groups (3301b) to form a clamping structure, the plurality of second protrusions (3221f) of the first swing arm (322) cooperate with one of the second protruding block groups (3302b) to form a clamping structure, the plurality of first protrusions (3251e) of the second swing arm (325) cooperate with another one of the first protruding block groups (3301b) to form a clamping structure, and the plurality of second protrusions (3251f) of the second swing arm (325) cooperate with another one of the second protruding block groups (3302b) to form a clamping structure.

19. The electronic device (100) according to any one of claims 1 to 4 and 8 to 11, wherein the first transmission members (322 and 323) are a first rotating arm (323), a second end portion (3231) of the first rotating arm (323) is rotatably connected to the first fastening bracket (321), the second transmission members (325 and 326) are a second rotating arm (326), and a second end portion (3261) of the second rotating arm (326) is rotatably connected to the second fastening bracket (324).

20. A foldable assembly (3), applied to an electronic device (100), wherein the foldable assembly (3) is configured to support a bendable portion (202) of a screen of the electronic device (100), and the foldable assembly (3) has an opened state and a closed state;
the foldable assembly (3) comprises a main shaft (31), a first fastening bracket (321), first transmission members (322 and 323), a second fastening bracket (324), second transmission members (325 and 326), and a stop block (327);
first end portions (3221 and 3231) of the first transmission members (322 and 323) are rotatably connected to the main shaft (31), second end portions (3222 and 3232) of the first transmission members (322 and 323) are connected to the first fastening bracket (321), and the first end portions (3221 and 3231) of the first transmission members (322 and 323) have first stop end faces (3221c and 3231c);
first end portions (3251 and 3261) of the second transmission members (325 and 326) are rotatably connected to the main shaft (31), second end portions (3252 and 3262) of the second transmission members (325 and 326) are connected to the second fastening bracket (324), and the first end portions (3251 and 3261) of the second transmission members (325 and 326) have second stop end faces (3251c and 3261c);
the stop block (327) comprises a first stop face (3272a) and a second stop face (3273a) that are disposed away from each other, and the stop block (327) is fastened to the main shaft (31);
in a process in which the foldable assembly (3) changes from the closed state to the opened state, the first stop end faces (3221c and 3231c) are close to the first stop face (3272a), and the second stop end faces (3251c and 3261c) are close to the second stop face (3273a); and
when the foldable assembly (3) is in the opened state, the first stop end faces (3221c and 3231c) abut against the first stop face (3272a), and the second stop end faces (3251c and 3261c) abut against the second stop face (3273a).

21. The foldable assembly (3) according to claim 20, wherein the main shaft (31) has a main support face (3111) and a median face (317), the main support face (3111) is configured to support the bendable portion (202), and the median face (317) is perpendicular to the main support face (3111) and is parallel to an extension direction of the main shaft (31); and
the first stop face (3272a) and the second stop face (3273a) are symmetrical about the median face (317), and the first transmission members (322 and 323) and the second transmission members (325 and 326) are symmetrical about the median face (317).

22. The foldable assembly (3) according to claim 21, wherein the stop block (327) is fastened to the main shaft (31), and the first stop face (3272a) is parallel to the median face (317).

23. The foldable assembly (3) according to claim 22, wherein the main shaft (31) comprises a main inner shaft (311) and cover bodies (312, 313, and 314), the stop block (327) is located between the main inner shaft (311) and the cover bodies (312, 313, and 314), and the main inner shaft (311), the stop block (327), and the cover bodies (312, 313, and 314) are tightly locked by using a fastener (319).

24. The foldable assembly (3) according to claim 22 or 23, wherein the first transmission members (322 and 323) are a first swing arm (322), a second end portion (3222) of the first swing arm (322) is slidably connected to the first fastening bracket (321), the second transmission members (325 and 326) are a second swing arm (325), and a second end portion (3252) of the second swing arm (325) is slidably connected to the second fastening bracket (324).

25. The foldable assembly (3) according to claim 24, wherein the foldable assembly (3) further comprises a clamping member (329), the clamping member (329) comprises a fastening portion (3291), a first clamping portion (3292), and a second clamping portion (3293), the first clamping portion (3292) and the second clamping portion (3293) are respectively fastened on two sides of the fastening portion (3291), the fastening portion (3291) is fastened to the main shaft (31), the first clamping portion (3292) clamps the first swing arm (322), and is configured to limit movement of the first swing arm (322) in the extension direction of the main shaft (31), and the second clamping portion (3293) clamps the second swing arm (325), and is configured to limit movement of the second swing arm (325) in the extension direction of the main shaft (31); and
the stop block (327) comprises a first stop portion (3272) and a second stop portion (3273), the first stop portion (3272) is fastened to the first clamping portion (3292), the first stop face (3272a) is formed on an end face that is of the first stop portion (3272) and that faces away from the fastening portion (3291), the second stop portion (3273) is fastened to the second clamping portion (3293), and the second stop face (3273a) is formed on an end face that is of the second stop portion (3273) and that faces away from the fastening portion (3291).

26. The foldable assembly (3) according to claim 25, wherein the clamping member (329) and the stop block (327) jointly form an integral limiting connecting member (390).

27. The foldable assembly (3) according to claim 21, wherein an included angle between the first stop face (3272a) and the median face (317) is greater than 0°; and the foldable assembly (3) further comprises an adjustment assembly (328), and the adjustment assembly (328) is configured to adjust relative locations of the stop block (327) and the main shaft (31) in a thickness direction of the foldable assembly (3).

28. The foldable assembly (3) according to claim 27, wherein the adjustment assembly (328) further comprises a limiting member (3281) and an elastic member (3282), the limiting member (3281) comprises a limiting end (3281a) and a connecting end (3281b), the limiting end (3281a) of the limiting member (3281) is located on a side that is of the stop block (327) and that faces away from the main shaft (31), the connecting end (3281b) of the limiting member (3281) passes through the stop block (327) and is threadedly connected to the main shaft (31), the elastic member (3282) abuts between the stop block (327) and the main shaft (31), and the limiting member (3281) and the elastic member (3282) are jointly configured to adjust relative locations of the stop block (327) and the main shaft (31) in a thickness direction of the foldable assembly (3).

29. The foldable assembly (3) according to claim 28, wherein a protruding block (3115) is disposed on the main shaft (31), and the protruding block (3115) is disposed away from the main support face (3111);
the stop block (327) comprises a main body portion (3271), a first stop portion (3272), and a second stop portion (3273), the first stop portion (3272) is fastened on a side of the main body portion (3271), the first stop face (3272a) is formed on an end face that is of the first stop portion (3272) and that faces away from the main body portion (3271), the second stop portion (3273) is fastened on the other side of the main body portion (3271), and the second stop face (3273a) is formed on an end face that is of the second stop portion (3273) and that faces away from the main body portion (3271); and
the main body portion (3271) is provided with a through hole (3271a) and a limiting slot (3271b), the limiting slot (3271b) is located on a side that is of the through hole (3271a) and that is close to the main shaft (31), and communicates with the through hole (3271a), the protruding block (3115) is built into the limiting slot (3271b), and the connecting end (3281b) of the limiting member (3281) is threadedly connected to the protruding block (3115) through the through hole (3271a) and the limiting slot (3271b).

30. The foldable assembly (3) according to any one of claims 27 to 29, wherein the included angle between the first stop face (3272a) and the median face (317) falls within a range of 0° to 45°.

31. The foldable assembly (3) according to any one of claims 27 to 30, wherein the first transmission members (322 and 323) are a first swing arm (322), a second end portion (3222) of the first swing arm (322) is slidably connected to the first fastening bracket (321), the second transmission members (325 and 326) are a second swing arm (325), and a second end portion (3252) of the second swing arm (325) is slidably connected to the second fastening bracket (324).

32. The foldable assembly (3) according to claim 31, wherein the foldable assembly (3) further comprises a clamping member (329), the clamping member (329) comprises a fastening portion (3291), a first clamping portion (3292), and a second clamping portion (3293), the first clamping portion (3292) and the second clamping portion (3293) are respectively fastened on two sides of the fastening portion (3291), the fastening portion (3291) is fastened to the main shaft (31), the first clamping portion (3292) clamps the first swing arm (322), and is configured to limit movement of the first swing arm (322) in the extension direction of the main shaft (31), and the second clamping portion (3293) clamps the second swing arm (325), and is configured to limit movement of the second swing arm (325) in the extension direction of the main shaft (31); and
the fastening portion (3291) is stacked between the stop block (327) and the main shaft (31).

33. The foldable assembly (3) according to claims 25, 26, 31, and 32, wherein first avoidance space (3221b) is disposed at the first end portion (3221) of the first swing arm (322), the first stop end face (3221c) is formed on a wall face of the first avoidance space (3221b), the first stop face (3272a) is at least partially located in the first avoidance space (3221b), second avoidance space (3251b) is disposed at the first end portion (3251) of the second swing arm (325), the second stop end face (3251c) is formed on a wall face of the second avoidance space (3251b), and the second stop face (3273a) is at least partially located in the second avoidance space (3251b).

34. The foldable assembly (3) according to claim 33, wherein the first end portions (3221 and 3231) of the first swing arm (322) further comprise a first compensation block (3221d), the main shaft (31) is provided with a first avoidance hole (3112), the first compensation block (3221d) is at least partially located in the first avoidance hole (3112) when the foldable assembly (3) is in the opened state, and the first compensation block (3221d) is configured to assist in supporting the bendable portion (202); and
the stop block (327) is further provided with a first avoidance slot (3272b), the first avoidance slot (3272b) is located between the first stop face (3272a) and the second stop face (3273a), and when the foldable assembly (3) is in the closed state, the first compensation block (3221d) is at least partially located in the first avoidance slot (3272b).

35. The foldable assembly (3) according to any one of claims 25, 26, and 31 to 34, wherein the foldable assembly (3) further comprises a damping assembly (330), the damping assembly (330) is installed on the main shaft (31), the damping assembly (330) connects the first end portion (3221) of the first swing arm (322) and the first end portion (3251) of the second swing arm (325), and the damping assembly (330) is configured to provide resistance in a process in which the first swing arm (322) and the second swing arm (325) rotate relative to each other.

36. The foldable assembly (3) according to claim 35, wherein the damping assembly (330) comprises a first clamping block (3301), a second clamping block (3302), and an elastic component (3304);
the first clamping block (3301) is provided with a plurality of first protruding block groups (3301b), the second clamping block (3302) is provided with a plurality of second protruding block groups (3302b), and the plurality of first protruding block groups (3301b) and the plurality of second protruding block groups (3302b) are disposed opposite to each other in a one-to-one correspondence;
the first end portion (3221) of the first swing arm (322) comprises a plurality of first protrusions (3221e) and a plurality of second protrusions (3221f) that are disposed away from each other, and the first end portion (3251) of the second swing arm (325) comprises a plurality of first protrusions (3251e) and a plurality of second protrusions (3251f) that are disposed away from each other;
the first end portion (3221) of the first swing arm (322) and the first end portion (3251) of the second swing arm (325) are both located between the first clamping block (3301) and the second clamping block (3302); and
the elastic component (3304) is located on a side that is of the second clamping block (3302) and that faces away from the first clamping block (3301), the elastic component (3304) is configured to generate an elastic force, so that the first end portion (3221) of the first swing arm (322) and the first end portion (3251) of the second swing arm (325) both abut against the first clamping block (3301) and the second clamping block (3302), the plurality of first protrusions (3221e) of the first swing arm (322) cooperate with one of the first protruding block groups (3301b) to form a clamping structure, the plurality of second protrusions (3221f) of the first swing arm (322) cooperate with one of the second protruding block groups (3302b) to form a clamping structure, the plurality of first protrusions (3251e) of the second swing arm (325) cooperate with another one of the first protruding block groups (3301b) to form a clamping structure, and the plurality of second protrusions (3251f) of the second swing arm (325) cooperate with another one of the second protruding block groups (3302b) to form a clamping structure.

37. The foldable assembly (3) according to any one of claims 20 to 23 and 27 to 30, wherein the first transmission members (322 and 323) are a first rotating arm (323), a second end portion (3231) of the first rotating arm (323) is rotatably connected to the first fastening bracket (321), the second transmission members (325 and 326) are a second rotating arm (326), and a second end portion (3261) of the second rotating arm (326) is rotatably connected to the second fastening bracket (324).
